(19) Europäisches Patentamt
European Patent Office
Office européen des brevets

(11) EP 1 521 248 A2

(12) EUROPEAN PATENT APPLICATION

(43) Date of publication:
**06.04.2005 Bulletin 2005/14**

(51) Int Cl.[7]: **G11B 7/135**

(21) Application number: **04255808.0**

(22) Date of filing: **23.09.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **30.09.2003 JP 2003340305**

(71) Applicant: **Konica Minolta Opto, Inc.**
**Hachioji-shi, Tokyo 192-8505 (JP)**

(72) Inventors:
- **Kimura, Tohru, c/o Konica Minolta Opto Inc. Tokyo 192-8505 (JP)**
- **Mori, Nobuyoshi, c/o Konica Minolta Opto Inc. Tokyo 192-8505 (JP)**
- **Noguchi, Kazutaka, c/o Konica Minolta Opto Inc. Tokyo 192-8505 (JP)**

(74) Representative: **Nicholls, Michael John**
**J.A. KEMP & CO.**
**14, South Square**
**Gray's Inn**
**London WC1R 5JJ (GB)**

(54) **Optical pick-up system, optical pick-up device, and optical information recording and/or reproducing apparatus**

(57) An optical pick-up system comprising: a first light source for projecting a first light flux having a wavelength of not more than 450 nm; a second light source for projecting a second light flux having a wavelength within a range of 630 nm to 680 nm; an objective optical system for converging the first light flux on a first optical disk, and for converging a second light flux on a second optical disk, and having at least a plastic lens having a positive refractive power, and wherein a ratio $\Delta SA/\Delta T$ of a change of a spherical aberration to a temperature change satisfies the following expression (1); and an aberration correction optical system arranged in an optical path between the first light source and the objective optical system, and having a plastic lens having a positive refractive power and a glass lens.

$$\Delta SA/\Delta T > 0 \quad (1)$$

FIG. 1

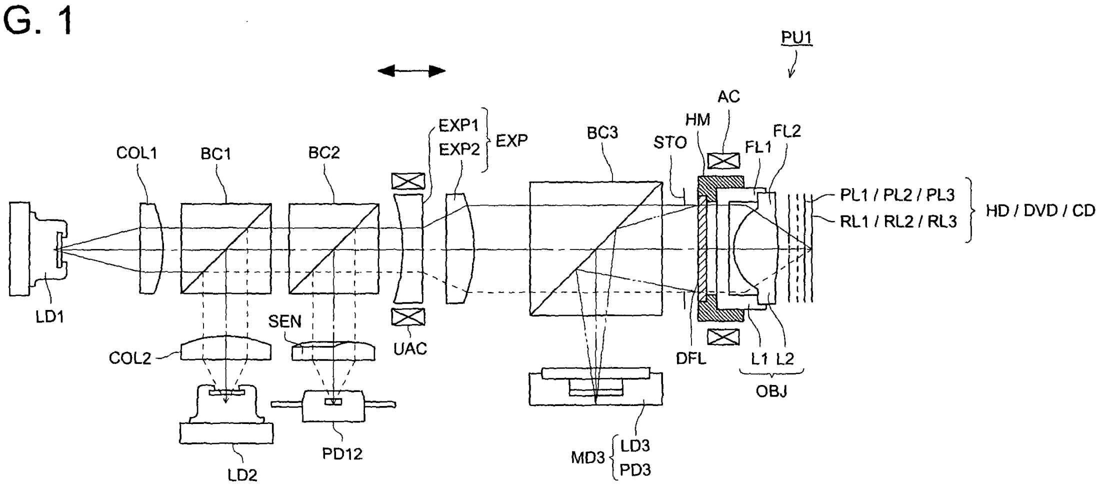


EP 1 521 248 A2

## Description

### RELATED APPLICATION

This application is based on patent application No. 2003-340305 filed in Japan, the entire content of which is hereby incorporated by reference.

### BACKGROUND OF THE INVENTION

1. Field of the Invention

The present invention relates to an optical pick-up system, optical pick-up device, and optical information recording and/or reproducing apparatus.

2. Description of the Related Art

Recently, DVD (Digital Versatile Disc) which is rapidly spreading as an optical recording medium such as an image information, is, when a red semiconductor laser of wavelength 650 nm and an objective optical system whose numerical aperture (NA) is 0.65 are used, the information of 4.7 GB per one surface can be recorded, however, for a purpose in which higher density information is recorded/reproduced at a high transfer rate, a request for further high densification and large increase of the capacity, is increasing. In order to attain the high densification and further increase of the density of the optical disk, it is sufficient when a diameter of a spot light-converged by the objective optical system is reduced, as well-known, and for the purpose of it, a reduction of wavelength of a laser light source or an increase of numerical aperture is necessary.

Relating to the reduction of wavelength of the laser light source, a blue violet semiconductor laser or a blue violet SHG laser is putting in practical use, and by a combination of these blue violet laser light sources and an objective optical system of NA 0.65, for the 12 cm diameter optical disk, the information of about 15 GB can be recorded per one surface. (Hereinafter, in the present specification, the optical disk using the blue violet laser light source is generally named as "high density optical disk".)

Further, relating to a high increase of NA of the objective optical system, a standard of the optical disk by which a light flux from the blue violet laser light source is light-converged by the objective optical system of NA 0.85 and a recording/reproducing (recording and/or reproducing) of the information is conducted, is proposed, and in the optical disk of this standard, the recording of about 23 GB per one surface can be conducted for the optical disk of a diameter of 12 cm.

Hereupon, in the high density optical disk using the objective optical system of NA 0.85, because the coma generated due to a skew of the optical disk is increased, it is designed so that a protective layer is thinner than in a case of DVD (0.1 mm to 0.6 mm in DVD), and the coma to the skew is decreased.

However, only by a saying that the recording/reproducing of the information can be adequately conducted for such a high density optical disk, it can not be said that a value as a product of the optical disk player is sufficient. In a present time, when it is based on the actuality that DVD or CD (Compact Disk) in which various information is recorded is sold, it is not sufficient by only a case where the recording/reproducing of the information can be conducted for the high density optical disk, but, for example, a fact that the recording/reproducing of the information can be adequately conducted in the same manner also for DVD or CD owned by the user, leads to an increase of a value of goods as an optical disk player for the high density optical disk. From such a background, it is required for an optical pick-up device mounted in the optical disk player for the high density optical disk, that, while it keeps a compatibility also for any one of DVD and CD, it has a performance by which the recording/reproducing can be adequately conducted.

As a method by which, while it has a compatibility also for any one of DVD and CD, the recording/reproducing can be adequately conducted, a method by which optical parts for the high density optical disk and optical parts for DVD or CD, are selectively switched corresponding the recording density of the optical disk for which the information is recorded/reproduced, can be considered, however, because a plurality of optical parts are necessary, it is disadvantageous for the size reduction, and further, cost is increased.

Accordingly, in order to intend that the structure of the optical pick-up device is simplified, and the cost is reduced, also in the optical pick-up device having the compatibility, it is preferable that the optical parts for the high density optical disk and the optical parts for DVD or CD are commonly used with each other, and the number of optical parts structuring the optical pick-up device is decreased to the utmost, and it can be said that it is most preferable that the objective optical system is used in common with each other.

Also in the objective optical system having the compatibility to a plurality of kinds of optical disks whose recording density is different, for the reason that it is advantageous for the mass production, it is preferable that a plastic lens is used. However, because the plastic lens has a characteristic that a temperature change of the refractive index is almost 2 places larger than that of a glass lens, in the objective optical system including the plastic lens, the spherical aberration is changed following the temperature change. Because this change amount of the spherical aberration is proportional to $\lambda/NA^4$, in the objective optical system including a plastic lens having the compatibility to a plurality of kinds of optical disks, a change of the spherical aberration following the temperature change when the recording/reproducing of the information is conducted on the high density DVD, becomes a problem.

The present inventor proposes the optical pick-up device for the high density optical disk provided with the objective optical system having the light source and at least one plastic lens, and the optical pick-up device provided with a 2 group-composition beam expander optical system as an aberration correction optical system between the light source and the objective optical system (Refer to Patent Document 1: Tokkai No. 2002-82280).

According to the optical pick-up device disclosed in Patent Document 1, a spherical aberration change generated in the objective optical system following the temperature change, can be corrected when the lens interval of the beam expander optical system is changeably adjusted.

However, in this optical pick-up device, because a spherical aberration detecting means for detecting the spherical aberration change of the objective optical system following the temperature change when the recording/reproducing is conducted on the high density optical disk, an actuator for changeably adjusting the lens interval of the beam expander optical system, and a control circuit for controlling this actuator corresponding to the detection result of the spherical aberration detecting means are necessary, there is a problem such as an increase of the production cost by the increase of the number of parts of the optical pick-up device, an increase of the size of optical pick-up device, and an increase of the complexity of the optical pick-up device.

## SUMMARY OF THE INVENTION

An object of the present invention is to provide an optical pick-up system in which the above-described problems are considered, and an optical pick-up system by which, while keeping the compatibility, the information can be adequately recorded/reproduced for optical disks such as the high density optical disk and DVD, in which a wavelength of the laser light source is different, or for a plurality of kinds of optical disks such as the high density optical disk, DVD, and CD, and which is appropriate for the size reduction, weight reduction, cost reduction, and the simplification of the structure, and a simple structure optical pick-up system provided with an aberration correction optical system by which the spherical aberration change generated in the objective optical system including a plastic lens, following the environmental temperature change when the information is recorded/reproduced for the high density optical disk, can be corrected without the lens intervals of a plurality of lenses structuring the optical system such as the beam expander optical system being changeably adjusted.

Further, a furthermore object of the present invention is to provide an optical pick-up device mounted with these optical pick-up systems, and an optical information recording and/or reproducing apparatus mounted with this optical pick-up device.

These and other objects are attained by an optical pick-up system comprising:

a first light source for projecting a first light flux having a wavelength of not more than 450 nm;

a second light source for projecting a second light flux having a wavelength within a range of 630 nm to 680 nm;

an objective optical system for converging the first light flux projected from the first light source on an information recording surface of a first optical disk which having a first recording density, and for converging a second light flux projected from the second light source on an information recording surface of a second optical disk having a second recording density which is different from the first recording density, wherein the objective optical system has at least a plastic lens having a positive paraxial refractive power, and wherein a ratio $\Delta SA/\Delta T$ of a change of a spherical aberration to a temperature change of the objective optical system when the first light flux passes through the objective optical system for recording or reproducing information onto or from the first optical disk, satisfies the following expression (1); and

an aberration correction optical system having at least two lens groups, and being arranged in an optical path between the first light source and the objective optical system, wherein the aberration correction optical system has a plastic lens having a positive paraxial refractive power and a glass lens.

$$\Delta SA/\Delta T > 0 \qquad (1)$$

Further, the above object of the present invention is attained by an optical pick-up device provided with the above optical pick-up system.

Further, the above-object of the present invention is attained by an optical information recording and/or reproducing apparatus in which the above optical pick-up device is mounted.

According to the present invention, for the optical disks such as the high density optical disk in which the wavelength of the laser light source is different, and DVD, or for a plurality of kinds of optical disks such as the high density optical disk, DVD, and CD, an optical pick-up system in which, while keeping the compatibility, the information can be adequately recorded/reproduced, and which is appropriate for the size reduction, weight reduction, cost reduction, and simplification of the structure, and a simple structure optical pick-up system provided with an aberration correction optical system by which, following the environmental temperature change when the recording/reproducing of the information is conducted on the high density optical disk, the spherical aberration generated in the objective optical system including a plastic lens can be corrected, can be obtained. Further, optical pick-up devices in which these optical pick-up systems are mounted, and an optical information recording and/or reproducing apparatus in which this optical pick-up device is mounted, are obtained.

The invention itself, together with further objects and attendant advantages, will best be understood by reference to the following detailed description taken in conjugation with the accompanying drawings.

## BRIEF DESCRIPTION OF THE DRAWINGS

Fig. 1 is a main part plan view showing a structure of an optical pick-up device.
Figs. 2(a) to 2(c) are views showing a structure of an objective optical system.
Figs. 3(a) to 3(c) are views showing a structure of an aberration correction element.
Fig. 4 is a main part plan view showing a structure of an optical pick-up device.
Fig. 5 is a main part plan view showing a structure of an optical pick-up device.
Fig. 6 is a main part plan view showing a structure of an optical pick-up device.
Fig. 7 is a main part plan view showing a structure of an optical pick-up device.
Fig. 8 is a main part plan view showing a structure of an optical pick-up device.
Fig. 9 is a main part plan view showing a structure of an optical pick-up device.
Fig. 10 is a main part plan view showing a structure of an optical pick-up device.
Fig. 11 is a main part plan view showing a structure of an optical pick-up device.
Fig. 12 is a main part plan view showing a structure of an optical pick-up device.
Fig. 13 is a graph showing a correction result of a spherical aberration by a thickness change of a protective layer of a high density optical disk.
Fig. 14 is a graph showing a correction result of a spherical aberration by a change of wavelength $\lambda 1$.
Fig. 15 is a main part plan view showing a structure of an optical pick-up device.
Fig. 16 is a view showing a structure of an objective optical system.

In the following description, like parts are designated by like reference numbers throughout the several drawings.

## DESCRIPTION OF THE PREFERRED EMBODIMENT

According to the first mode of the present invention, it is an optical pick-up system comprising a first light source for projecting a first light flux having a wavelength of not more than 450 nm, and a second light source for projecting a second light flux having a wavelength within a range of 630 nm to 680 nm.

The optical pick-up system further comprises an objective optical system for converging the first light flux projected from the first light source on an information recording surface of a first optical disk which having a first recording density, and for converging a second light flux projected from the second light source on an information recording surface of a second optical disk having a second recording density which is different from the first recording density.

The objective optical system has at least a plastic lens having a positive paraxial refractive power, wherein a ratio $\Delta SA/\Delta T$ of a change of a spherical aberration to a temperature change of the objective optical system when the first light flux passes through the objective optical system for recording or reproducing information onto or from the first optical disk, satisfies the following expression (1).

$$\Delta SA/\Delta T > 0 \qquad (1)$$

The optical pick-up system still further comprises an aberration correction optical system having at least two lens groups, and being arranged in an optical path between the first light source and the objective optical system, wherein the aberration correction optical system has a plastic lens having a positive paraxial refractive power and a glass lens.

In the case where a plastic lens whose paraxial refractive power (hereinafter, simply referred as refractive power) is positive, is arranged in the aberration correction optical system, when the temperature of the optical pick-up system is risen, because the refractive power of this plastic lens is lowered, the diverging degree of a marginal ray of the light flux incident on the objective optical system is reduced. This corresponds to a decrease of the magnification of the objective optical system, and by this magnification change, in the objective optical system, the spherical aberration changes to the under correction direction.

Further, in the objective optical system having a plastic lens whose refractive power is positive, generally, when the temperature of the optical pick-up system is risen, the spherical aberration changes to the over correction direction as in the expression (1) (hereinafter, it is referred to a change of the spherical aberration of the objective optical system following the temperature change as the temperature characteristic).

Herein, when the refractive power of the plastic lens in the aberration correction optical system is adequately set, it becomes possible that the spherical aberration changing to the over correction direction by the influence of lowering of refractive power of the plastic lens in the objective optical system, and the spherical aberration changing to the under correction direction by the magnification change of the objective optical system following the lowering of the refractive index of the plastic lens in the aberration correction optical system, are cancelled out each other.

Thereby, because it is not necessary that, following the temperature change when the recording/reproducing of the high density optical disk is conducted, at least one lens in a plurality of lenses constituting the aberration correction optical system, is moved by an actuator and the temperature characteristic of the objective optical system is corrected, the structure of the compatible type optical pick-up device can be simplified.

However, because the refractive power of the plastic lens in the aberration correction optical system is uniquely determined depending on the temperature characteristic of the objective optical system, when the aberration correction optical system is structured by only plastic lenses, the degree of freedom for determining the paraxial amount of the aberration correction optical system such as a focal distance, back focus, and magnification, is insufficient. In contrast to this, in the invention of item 1, because the refractive power of a glass lens, which is arranged in the aberration correction optical system, and which is not affected by the influence of the temperature change, can be freely selected, it can correspond to various specifications of the aberration correction optical system.

Hereupon, in the present specification, a sign of a change rate $\Delta SA/\Delta T$ of the spherical aberration of the objective optical system is defined as positive, when the spherical aberration changes to over correction direction, and defined as negative, when the spherical aberration changes to under correction direction. Further, it is defined that $\Delta SA$ is expressed by an RMS (Root Mean Square) value in which the wavelength $\lambda$ of the first light flux is made a unit, and a unit of $\Delta SA/\Delta T$ is made $\lambda$RMS/°C.

Further, in the present specification, an optical disk which uses the blue violet semiconductor laser or blue violet SHG laser, as the light source for the recording/reproducing of the information, is generally referred to as "high density optical disk", and the recording/reproducing of the information is conducted by the objective optical system of NA 0.85, and other than the optical disk of a standard in which the thickness of the protective layer is about 0.1 mm, by the objective optical system of NA 0.65, the recording/reproducing of the information is conducted, and it also includes the optical disk of a standard whose protective layer thickness is about 0.6 mm. Further, other than the optical disks having such a protective layer on its information recording surface, it includes the optical disks having the protective film whose thickness is about several to several tens nm on the information recording surface, or also the optical disks in which the thickness of these protective layers or the thickness of the protective film is 0. Further, in the present specification, it is defined that, in the high density optical disk, a magnetic optical disk using the blue violet semiconductor laser or blue violet SHG laser, as the light source for the recording/reproducing of the information, is also included.

Further, in the present specification, optical disks of DVD series such as DVD-ROM, DVD-Video, DVD-Audio, DVD-RAM, DVD-R, DVD-RW, DVD+R, and DVD+RW, are generally named "DVD", and optical disks of CD series such as CD-ROM, CD-Audio, CD-Video, CD-R, and CD-RW are generally named "CD".

Further, as the first light flux from the first light source for recording/reproducing the high density optical disk, it is preferable that it is a light flux projecting a wavelength ($\lambda 1$) less than 450 nm, preferably in a range of 380nm - 450 nm, more preferably, in a range of 390 nm -430 nm. Further, as the second light flux from the second light source for recording/reproducing DVD, it is preferable that it is a light flux projecting a wavelength ($\lambda 2$) in a range of 630 nm - 680 nm, and as the third light flux from the third light source for recording/reproducing CD, it is preferable that it is a light flux projecting a wavelength ($\lambda 3$) in a range of 750 nm - 800 nm.

According to the second mode of the present invention, in the optical pick-up system written in the first mode, it is preferable that the optical pick-up system further comprises a coupling optical system which is arranged in an optical path between the first light source and the aberration correction optical system, wherein when the first light flux having a divergent angle enters onto the coupling optical system, the coupling optical system emits a light flux having a divergent angle which is smaller than an incident light flux of the first light flux, wherein the glass lens of the aberration correction optical system has a negative paraxial refractive power, and wherein the aberration correction optical system is a beam expander optical system which changes a diameter of the first light flux.

According to this, because, even when the temperature change occurs between the coupling optical system and the beam expander optical system, the divergent degree of the light flux can be made constant, even when one pair of optical elements structuring a beam shaping prism are arranged, it can be made so that the astigmatism is not generated. When the diameter of incident beam is increased, a path between the light source and the beam expander optical system can be made compact. Hereupon, in the beam expander optical system, other than a part which increases the beam diameter, a part which reduces the beam diameter, is also included.

According to the third mode of the present invention, in the optical pick-up system written in the second mode, it is preferable that the beam expander optical system is arranged in a common optical path of the first light flux and the second light flux.

According to this, the temperature characteristic also for DVD using the second light flux can be corrected. Further, when at least one lens in a plurality of lenses structuring the beam expander optical system is made movable by the actuator, not only on the high density optical disk, but also when the recording/reproducing is conducted on DVD, the spherical aberration can be corrected. As causes of generation of the spherical aberration, for example, there are the wavelength fluctuation by the production error of the blue violet semiconductor laser or red semiconductor laser used for the light source, focus jump between layers at the time of recording/reproducing for the multi-layered disk such as 4-layer disk, and thickness fluctuation or thickness distribution by the production error of the protective layer of the optical disk.

According to the fourth mode of the present invention, in the optical pick-up system written in the second mode, it is preferable that the optical pick-up system further comprises a beam combiner for leading an optical path of the first light flux and an optical path of the second light flux into a common optical path, and wherein the coupling optical system, the glass lens in the beam expander optical system, the beam combiner, the plastic lens in the beam expander optical system, and the objective optical system are arranged in that order from the first light source side.

According to this, because a plastic lens in the beam expander optical system is in the common optical path of the first flux and the second flux, when the objective optical system has the temperature characteristic in which the spherical aberration changes to the over correction direction following the temperature rise at the time of the recording/reproducing on DVD, the temperature characteristic at the time of the recording/reproducing on DVD, can also be corrected. Further, when it is structured such that the plastic lens serves also as the coupling lens optical system (more preferably, the collimator optical system) of the second light flux, the number of parts can be reduced. Further, when it is structured such that the plastic lens can be moved by the actuator, not only for the high density optical disk, but also at the time of the recording/reproducing for DVD, the spherical aberration can be corrected.

According to the fifth mode of the present invention, in the optical pick-up system written in the second mode, it is preferable that the optical pick-up system further comprises a beam combiner for leading an optical path of the first light flux and an optical path of the second light flux into a common optical path, and wherein the coupling optical system, the plastic lens of the beam expander optical system, the beam combiner, the glass lens in the beam expander optical system, and the objective optical system are arranged in that order from the first light source side.

According to this, because the plastic lens in the beam expander optical system is in the exclusive use optical path of the first light flux, the existence of the beam expander optical system does not influence on the temperature characteristic at the time of recording/reproducing for DVD using the second light flux. Accordingly, by considering only a case where the temperature characteristic at the time of recording/reproducing for the high density optical disk using the first light flux, is corrected, the refractive power of the plastic lens can be determined.

According to the sixth mode of the present invention, in the optical pick-up system written in the second mode, it is preferable that the beam expander optical system is arranged in the exclusive use optical path of the first light flux.

According to this, because the plastic lens in the beam expander optical system is in the exclusive use optical path of the first light flux, the existence of the beam expander optical system does not influence on the temperature characteristic at the time of the recording/reproducing for DVD using the second light flux. Accordingly, by considering only a case where the temperature characteristic at the time of recording/reproducing for the high density optical disk using the first light flux, is corrected, the refractive power of the plastic lens in the beam expander optical system can be determined.

According to the 7th mode of the present invention, in the optical pick-up system written in any one of the second to sixth modes, it is preferable that the coupling optical system has at least one plastic lens whose paraxial refractive power is positive.

According to this, by using the positive plastic lens in the coupling optical system, the temperature characteristic can be corrected in the optical system including this coupling optical system. By this, because the positive refractive power necessary for correction can be distributed to the beam expander optical system and the coupling optical system, the degree of freedom of lens design of the beam expander optical system can be increased.

According to the 8th mode of the present invention, in the optical pick-up system written in the third mode, when, in at least 2 kinds of optical disks whose recording densities are different from each other, the optical disk on which the recording and/or reproducing of the information is conducted by the first light flux, is defined as the first optical disk, and the optical disk on which the recording and/or reproducing of the information is conducted by the second light flux, is defined as the second optical disk, it is preferable that, a magnification $m_1$ of the objective optical system for the first light flux when the first light flux passes through the objective optical system for recording or reproducing information onto or from the first optical disk, and a magnification $m_2$ of the objective optical system for the second light flux when the second light flux passes through the objective optical system for recording or reproducing information onto or from the second optical disk, are approximately same, and Abbe's number $\nu_{dN}$ of the glass lens whose paraxial refractive power is negative, in the beam expander optical system, and Abbe's number $\nu_{dP}$ of the plastic lens whose paraxial refractive power is positive, in the beam expander optical system, satisfy the following expression (2).

$$\nu_{dP} > \nu_{dN} \quad (2)$$

When the beam expander optical system is designed for the first light flux, by the influence of chromatic aberration generated due to that the refractive index is different in the first light flux and the second light flux, in the second light flux, a parallel light flux is not projected, and when the disk is changed from the high density optical disk to DVD, it is necessary that at least one lens in a plurality of lenses structuring the beam expander optical system is moved by the actuator so that the second light flux is projected as the parallel light flux.
Accordingly, as in the eighth mode, when the negative glass lens and positive plastic lens are selected so that Abbe's number satisfies the expression (2), and when the chromatic aberration between the first light flux and the second light flux is achromatized, without a lens in the beam expander optical system being moved by the actuator, the second light flux can be projected as the parallel light, and a control factor when the recording or reproducing is conducted on DVD, can be reduced by one.

According to the ninth mode of the present invention, in the optical pick-up system written in the first mode, it is preferable that the aberration correction optical system is a coupling optical system, and wherein when the first light flux having a divergent angle enters onto the coupling optical system, the coupling optical system emits a light flux having a divergent angle which is smaller than the incident light flux of the first light flux.

According to this, because, to the coupling optical system by which the divergent angle of the divergent light flux projected from the blue violet semiconductor laser as the first light source is converted small and guided to the objective optical system, a function of the aberration correction optical system for correcting the temperature characteristic of the objective optical system can be given, it is advantageous for the reduction of the number of parts, cost reduction and size reduction, of the optical pick-up device.

According to the tenth mode of the present invention, in the optical pick-up system written in the ninth mode, it is preferable that the coupling optical system is arranged in a common optical path of the first light flux and the second light flux.

According to this, because the plastic lens in the coupling optical system is in the common optical path of the first light flux and the second light flux, when the objective optical system has the temperature characteristic in which the spherical aberration changes to the over correction direction following the temperature rise at the time of the recording/reproducing of DVD, the temperature characteristic at the time of the recording/reproducing for DVD can also be corrected. Further, when it is structured such that the lens constituting the coupling optical system can be moved by the actuator, the spherical aberration can be corrected at the time of the recording/reproducing not only for the high density optical disk, but also for DVD.

According to the 11th mode of the present invention, in the optical pick-up system written in the ninth mode, it is preferable that the optical pick-up system further comprises a beam combiner for leading an optical path of the first light flux and an optical path of the second light flux into a common optical path, wherein the glass lens in the coupling optical system, the beam combiner, the plastic lens in the coupling optical system, and the objective optical system are arranged in that order from the first light source side.

According to this, because the plastic lens in the coupling optical system is in the common optical path of the first light flux and the second light flux, when the objective optical system has the temperature characteristic in which the spherical aberration changes to the over correction direction following the temperature rise at the time of the recording/reproducing of DVD, the temperature characteristic at the time of the recording/reproducing for DVD, can also be corrected. Further, when it is structured such that the plastic lens serves also for the coupling optical system (more preferably, collimator lens) of the second light flux, the number of parts can be reduced. Further, when the plastic lens is structured so that it can be moved by the actuator, the spherical aberration can be corrected at the time of the recording/reproducing not only for the high density optical disk, but also for DVD.

According to the 12th mode of the present invention, in the optical pick-up system written in the ninth mode, it is preferable that the optical pick-up system further comprises a beam combiner for leading an optical path of the first light flux and an the second light flux into a common path, wherein the glass lens in the coupling optical system has a positive paraxial refractive power, and wherein the plastic lens in the coupling optical system, the beam combiner, the glass lens in the coupling optical system, and the objective optical system are arranged in that order from the first light source side.

According to this, because the plastic lens in the coupling optical system is in the exclusive use optical path, the existence of the coupling optical system does not influence on the temperature characteristic at the time of the recording/reproducing for DVD using the second light flux. Accordingly, by considering only a case where the temperature characteristic at the time of the recording/reproducing for the high density optical disk using the first light flux is corrected, the refractive power of the plastic lens can be determined. Further, when it is structured such that the glass lens serves also for the coupling lens optical system (more preferably, collimator optical system) of the second light flux, the number of parts can be reduced. Further, when the glass lens is structured such that it can be moved by the actuator, the spherical aberration can be corrected at the time of the recording/reproducing not only for the high density optical disk, but also for DVD.

According to the 13th mode of the present invention, in the optical pick-up system written in the ninth mode, it is preferable that the coupling optical system is arranged in an exclusive use optical path of the first light flux.

According to this, because the plastic lens in the coupling optical system, is in the exclusive use optical path of the first light flux, the existence of the coupling optical system does not influence on the temperature characteristic at the time of the recording/reproducing for DVD using the second light flux. Accordingly, by considering only a case where the temperature characteristic at the time of the recording/reproducing for the high density optical disk using the first light flux is corrected, the refractive power of the plastic lens in the coupling optical system can be determined.

According to the 14th mode of the present invention, in the optical pick-up system written in the tenth mode, when the optical disk for which the recording and/or reproducing of the information is conducted by the first light flux is defined as the first optical disk, in at least 2 kinds of optical disks whose recording densities are different from each other, and the optical disk for which the recording and/or reproducing of the information is conducted by the second light flux is defined as the second optical disk, it is preferable that, a magnification $m_1$ of the objective optical system for the first light flux when the first light flux passes through the objective optical system for recording or reproducing information onto or from the first optical disk, and a magnification $m_2$ of the objective optical system for the second light flux when the second light flux passes through the objective optical system for recording or reproducing information onto or from the second optical disk, are approximately same, wherein the glass lens in the coupling optical system has a negative paraxial refractive power, and wherein Abbe's number $\nu_{dN}$ of the glass lens whose paraxial refractive power is negative in the coupling optical system, and Abbess number $\nu_{dP}$ of the plastic lens whose paraxial refractive power is positive in the coupling optical system, satisfy the following expression (2).

$$\nu_{dP} > \nu_{dN} \qquad (2)$$

When the coupling optical system is designed for the first light flux, by the influence of the chromatic aberration generated due to a case where the refractive index is different in the first light flux and the second light flux, the parallel light is not projected, and when the disk is changed from the high density optical disk to DVD, it is necessary that the lens constituting the coupling optical system is moved by the actuator, and the second light flux is projected as the parallel light flux. Accordingly, as in the 14th mode, when the coupling optical system is structured by a glass lens whose refractive power is negative and a plastic lens whose refractive power is positive, it is selected so that respective Abbe's numbers satisfy the expression (2), and the chromatic aberration between the first light flux and the second light flux is achromatized, without a case where the lens in the coupling optical system is moved by the actuator, the second light flux can be projected as the parallel light flux, and control factors at the time of the recording or reproducing of the information by DVD, can be reduced by one.

According to the 15th mode of the present invention, in the optical pick-up system written in any one of the 9th to the 14th mode, it is preferable that coupling optical system is a collimator optical system, and wherein when the first light flux having a divergent angle enters onto the collimator optical system, the collimator optical system emits a light flux parallel to an optical axis.

According to this, when the coupling optical system is designed as a collimator optical system by which the first light flux is projected as the parallel light flux, even when the objective optical system conducts tracking at the time of the recording or reproducing of the information, the object position is not moved, and a fine tracking characteristic is obtained.

According to the 16th mode of the present invention, in the optical pick-up system written in any one of the first to the 15th mode, it is preferable that the objective optical system has a first plastic lens and a second plastic lens which are arranged in that order from the first light source side, wherein a diffractive structure is formed on at least one of optical surfaces of the first plastic lens, wherein the diffractive structure diffracts at least one of the first light flux and the second light flux, and wherein a ratio of a paraxial refractive power $P_1$ ($mm^{-1}$) of the first plastic lens for the wavelength of the first light flux and a paraxial refractive power $P_2$ ($mm^{-1}$) of the second plastic lens for the wavelength of the first light flux satisfy the following expression (3).

$$|P_1/P_2| \leq 0.2 \quad (3)$$

In order to obtain the objective optical system which has the compatibility to a plurality of kinds of optical disks whose recording densities are different from each other, it is necessary that the spherical aberration due to the difference of the thickness of the protective layer of the optical disk is corrected. In order to correct such a spherical aberration, it is preferable that the diffractive structure is formed on the optical surface of the objective optical system. Because the diffractive structure has a large wavelength dependency on its optical characteristic, when the difference of the wavelength used for the recording/reproducing of the information is used, the spherical aberration due to the difference of the thickness of the protective layer of the optical disk can be corrected.

However, when such a diffractive structure is formed on the optical surface having a large refractive power in the objective optical system, there is a problem that the transmission of the incident light flux is lowered due to the influence of the eclipse of the ray by the step difference portion of the diffractive structure. This lowering of the transmission due to this eclipse of the ray is larger as the image side numerical aperture is larger.

According to the 16th mode, when the objective optical system is structured by 2 plastic lenses, and the refractive power to the wavelength of the first light flux of the first plastic lens arranged on the light source side is set so as to satisfy the expression (3) to the second plastic lens, and the diffractive structure is formed on the optical surface of the first plastic lens, the influence of the eclipse of the ray by the step difference portion of the diffractive structure can be decreased. Further, because the refractive power to the first light flux of the objective optical system is exclusively given to the second plastic lens, the working distance when the recording or reproducing of the information is conducted on the optical disk whose protective layer is thick, such as CD, can be secured large.

According to the 17th mode of the present invention, in the optical pick-up system, it is preferable that when the optical pick-up system records or reproduces information onto or from the first optical disk, an image side numerical aperture $NA_1$ of the objective optical system, a thickness $d_{L2}$ of the second plastic lens in an optical axis, and a paraxial refractive power $P_{L2}$ ($mm^{-1}$) of the second plastic lens for the wavelength of the first light flux satisfy the following expressions (4) and (5).

$$NA_1 > 0.8 \quad (4)$$

$$0.9 < d_{L2} \cdot P_{L2} < 1.3 \quad (5)$$

In the case where the image side numerical aperture NA1 of the objective optical system when the recording/reproducing is conducted on the high density optical disk, is larger than 0.8, because the refractive power of the optical surface on the light source side of the second plastic lens is very increased, it is necessary that, for the purpose in which the edge thickness is secured and the molding is easily conducted, the lens thickness $d_{L2}$ on the optical axis of the second plastic lens is set large. At this time, it is preferable that $d_{L2}$ is set, to the refractive power $P_{L2}$ to the wavelength of the first light flux, so as to satisfy the expression (5), and when it is set larger than the lower limit of the expression (5), because the edge thickness can be sufficiently secured, the molding is easily conducted, and when it is set smaller than the upper limit of the expression (5), the working distance when the recording/reproducing is conducted on the optical disk, can be sufficiently secured.

Further, in the plastic lens, generally, because the refractive power of the optical surface on the side of the long conjugate distance is larger than the refractive power of the optical surface of the side of the short conjugate distance, the spherical aberration generated at the time of temperature change is largely generated on the optical surface on the side of the longer conjugate distance. However, as in a case at the time of the recording/reproducing on DVD, in the case where the numerical aperture of the shorter side (optical disk side) of the conjugate distance is not so large, when the lens thickness is set large to the refractive power of the plastic lens, the spherical aberration generated on the optical surface of the longer side (light source side) of the conjugate distance at the time of temperature change, can be decreased.

As in the 17th mode, when the lens thickness $d_{L2}$ on the optical axis of the second plastic lens is set larger than the lower limit of the expression (5), the temperature characteristic at the time of the recording/reproducing on DVD, can be suppressed very smaller than the temperature characteristic at the time of the recording/reproducing on the high density optical disk.

For that, even when the plastic lens whose refractive power is positive, in the aberration correction optical system is arranged in the common optical path between the first light flux and the second light flux, the influence on the temperature characteristic at the time of the recording/reproducing on DVD can be made so that it is not so much increased.

According to the 18th mode of the present invention, in the optical pick-up system written in the 17th mode, it is preferable that when the optical pick-up system records or reproduces information onto or from the first optical disk, the total sum $\sum(Pi \cdot h_i^2)$ of the product of an image side numerical aperture $NA_1$ of the objective optical system, a paraxial refractive power $P_{L2}$ ($mm^{-1}$) of the second plastic lens for the wavelength of the first light flux, a magnification $m_{L2}$ of the second plastic lens for the wavelength of the first light flux, the wavelength $\lambda_1$ (mm) of the first light flux, a ratio $\Delta SA/\Delta T$ of a change of a spherical aberration to a temperature change of the objective optical system, and a total sum $\sum(Pi \cdot h_i)^2$ of a product of a paraxial refractive power $P_i$ of the plastic lens of the aberration correction optical system for the wavelength of the first light flux and a square of a height $h_i$ where a marginal ray passes, satisfy the following expression (6).

$$0.5 \times 10^{-6} < k/\sum( P_i \cdot h_i^2) < 5.5 \times 10^{-6} \qquad (6)$$

where,

$$k = (\Delta SA/\Delta T) \cdot \lambda_1 \cdot P_{L2}/ (NA_1 \cdot (1- m_{L2}))^4.$$

Furthermore, it is further preferable that the following expression (6') is satisfied.

$$1.1 \times 10^{-6} < k/\sum(P_i \cdot h_i^2) < 3.3 \times 10^{-6} \qquad (6')$$

According to this, when the refractive power to the wavelength of the first light flux of the first plastic lens arranged on the light source side is set, to the second plastic lens, so as to satisfy the expression (3), the temperature characteristic of the objective optical system is almost equal to the temperature characteristic of the second plastic lens.

Accordingly, the change rate $\Delta SA/\Delta T$ of the spherical aberration following the temperature change of the objective optical system at the time of the recording/reproducing on the high density optical disk can be expressed by the following expression (7), when k is made as a constant of standardization, by using the image side numerical aperture $NA_1$ of the objective optical system, the refractive power $P_{L2}$ ($mm^{-1}$) to the wavelength of the first light flux of the second plastic lens, the magnification $m_{L2}$ to the wavelength of the first light flux of the second plastic lens, and the wavelength $\lambda 1$ of the first light flux.

$$\Delta SA/\Delta T = k \cdot (NA_1 \cdot (1- M_{L2}))^4/ (\lambda_1 \cdot P_{L2}) \qquad (7)$$

where,

$$k = (\Delta SA/\Delta T) \cdot \lambda_1 \cdot P_{L2}/(NA_1 \cdot (1 - m_{L2}))^4$$

As described above, the temperature characteristic k which is a value in which $\Delta SA/\Delta T$ is standardized by the refractive power $P_{L2}$ to the wavelength of the first light flux of the second plastic lens, image side numerical aperture NA, magnification $m_{L2}$ to the wavelength of the first light flux of the second plastic lens, and the wavelength $\lambda 1$ of the first light flux, has an almost constant value.

For the purpose that the temperature characteristic k of the objective optical system is corrected by an action of the plastic lens in the aberration correction optical system, it is necessary that, following the temperature change, the divergent degree of the light flux projected from the aberration correction optical system is changed by a desired amount. A change of this divergent degree, that is, a change of defocus component of the wave-front projected from the aberration correction optical system is proportional to the refractive power $P_i$ to the wavelength of the first light flux of the plastic lens in the aberration correction optical elements, and the total sum $\sum(P_i \cdot h_i^2)$ of the product of a square of a passing height $h_i$ of the marginal ray, and a change $\sum(P_i \cdot h_i^2)$ of the divergent degree necessary for correcting the temperature characteristic k is determined corresponding to the magnitude of the temperature characteristic k.

Accordingly, a ratio of the temperature characteristic k and $\sum(P_i \cdot h_i^2)$, has an almost constant value, and when it is set so as to satisfy the expression (6), the temperature characteristic k of the objective optical system at the time of the recording/reproducing on the high density optical disk can be finely corrected. When a ratio of the temperature characteristic k and $\Sigma(P_i \cdot h_i^2)$ is set larger than the lower limit of the expression (6), the correction of the temperature characteristic k is not too insufficient, and When a ratio of the temperature characteristic k and $\sum(P_i \cdot h_i^2)$ is set smaller than the upper limit of the expression (6), the correction of the temperature characteristic k is not too sufficient.

Hereupon, the magnification $m_{L2}$ of the second plastic lens to the wavelength of the first light flux is, from the paraxial refractive power $P_1$ ($mm^{-1}$) to the wavelength of the first light flux of the objective optical system, and the paraxial refractive power $P_{L1}$ ($mm^{-1}$) to the wavelength of the first light flux of the first plastic lens, calculated by using the following expression.

$$M_{L2} = P_{L1}/P_1$$

According to the 19th mode, in the optical pick-up system written in the 17th mode or the 18th mode, it is preferable that, other than the first light source and the second light source, it is provided with the third light source which projects the third light flux within the range of 750 nm to 800 nm.

In this case, it is preferable that the aberration correction optical system is arranged in a common optical path of the first light flux, second light flux and third light flux. According to this, because the plastic lens in the aberration correction optical system is in the common optical path of the first light flux, second light flux and third light flux, when the objective optical system has the temperature characteristic in which the spherical aberration changes to over correction direction following the temperature rise at the time of the recording/reproducing of DVD, also the temperature characteristic at the time of the recording/reproducing on DVD can be corrected, and when the objective optical system has the temperature characteristic in which the spherical aberration changes to over correction direction following the temperature rise at the time of the recording/reproducing of CD, also the temperature characteristic at the time of the recording/reproducing on CD can be corrected. Further, when the lens constituting the aberration correction optical system is structured so that it can be moved by the actuator, the spherical aberration can be corrected at the time of the recording/reproducing not only for the high density optical disk, but also for DVD and CD.

Further, it is preferable that the first light source, second light source and third light source are a packaged light source unit. According to this, it is advantageous for the reduction of the number of parts, cost reduction, and size reduction.

On the one hand, in the case where the optical pick-up system is provided with the first - third light sources, it is preferable that the optical pick-up system further has a beam combiner which is arranged in the optical path between the aberration correction optical system and the objective optical system, for leading an optical path of the first light flux, an optical path of the second light flux and an optical path of the third light flux into a common optical path.

According to this, in the objective optical system as in the 17th mode or the 18th mode, for the purpose that the compatibility is given also to CD, it is preferable that the third light flux used for the recording/reproducing is made incident on the objective optical system as the divergent light flux. Thereby, the working distance to CD whose protective layer is thick, can be secured enough. In this case, as the structure of the optical pick-up system, it is preferable that the beam combiner for leading an optical path of the first light flux, an optical path of the second light flux and an optical path of the third light flux into a common optical path, is arranged in the optical path between the aberration correction optical system and the objective optical system.

According to the 20th mode of the present invention, in the optical pick-up system written in the third or tenth mode, it is preferable that the first light source and the second light source are a packaged light source unit.

According to this, when the aberration correction optical element is arranged in the common optical path of the first light flux and the second light flux, the package laser of the first light source and the second light source can be used, and this is advantageous for the reduction of the number of parts, cost reduction, and the size reduction.

According to the 21st mode of the present invention, in the optical pick-up device which is structured by: at least 2 kinds of light sources of the first light source projecting the first light flux less than 450 nm, the second light source projecting the second light flux within the range of 630 nm to 680 nm, whose wavelengths are different from each other; and the optical pick-up system for light-converging the light flux projected from at least 2 kinds of light sources whose wavelengths are different from each other, onto the information recording surface of at least 2 kinds of optical disks whose recording densities are different from each other, it is preferable that the optical pick-up system is structured by the objective optical system arranged opposing to the optical disk, and the aberration correction optical system which is arranged in the optical path between the first light source and the objective optical system and structured by at least 2 lens groups, and as the optical pick-up system, it is provided with the optical pick-up system written in any one of the first to the 20th mode.

According to this, the same effect as any one of the first to 20th modes, can be obtained.

According to the 22nd mode of the present invention, in the optical pick-up device written in the 21st mode, in at least 2 kinds of optical disks whose recording densities are different from each other, when the optical disk on which the recording and/or reproducing is conducted by the first light flux, is defined as the first optical disk, it is preferable that the optical pick-up device further comprises a light detector for detecting the reflection light flux of the first light flux from the information recording surface of the first optical disk. Further, it is preferable that the first light flux reflected by the information recording surface of the first optical disk is incident on the light detector, after transmitting all plastic lenses in the objective optical system and aberration correction optical system.

According to this, it is preferable that this light detector is arranged in the optical pick-up device so that, after the reflected light flux from the information recording surface of the high density optical disk transmits all plastic lenses in the objective optical system and the aberration correction optical system, it is incident on the optical detector for the high density optical disk. Thereby, even when the environmental temperature changes, because the conjugate relationship of the light source and the light detector can be constant, the signal detection by the light detector for the high density optical disk can be finely conducted.

According to the 23rd mode of the present invention, in the optical pick-up device written in the 21st or 22nd mode, it is preferable that the optical pick-up device further comprises an actuator for driving at least one lens in the aberration correction optical system in the optical axis direction, and wherein a position of the object point of the objective optical system for the first light flux is changeably adjusted in the optical axis direction by driving the at least one lens in the aberration correction optical system in the optical axis direction with the actuator.

According to this, when it is structured such that the lens in the aberration correction optical system can be driven in the optical axis direction, because the spherical aberration generated due to the focus jump between layers of multi-layer-disk such as 2-layer disk, 4-layer disk, wavelength fluctuation by the production error of the blue violet semiconductor laser light source, can be corrected, a good recording/reproducing characteristic to the high density optical disk can be obtained.

Further, although the spherical aberration generated due to the focus jump between recording layers of the multi-layer-disk is generated when the distance between recording layers, image side numerical aperture of the objective optical system, and wavelength at the time of the recording/reproducing, are made as parameters, these parameters are determined by the standard of the optical disk. Accordingly, in the spherical aberration generated at the time of the focus jump, because its amount is determined by the kind of optical disk, the moving amount of the movable lens in the aberration correction optical system necessary at the time of the focus jump is uniquely determined by the kind of optical disk and the specification of the aberration correction optical system. That is, at the time of focus jump between recording layers of the multi-layer-disk, the spherical aberration detection means for detecting the spherical aberration is not necessary, and it is allowable when the kind of optical disk and the direction of the focus jump (for example, the 1st layer to the 2nd layer, or the 2nd layer to the 1st layer) are detected, and in the direction determined by the result, the movable lens is moved by a determined amount.

Further, because it is allowable when, for the spherical aberration generated due to the wavelength fluctuation by the production error of the blue violet semiconductor laser light source, in the production process of the optical pick-up device, the position of the movable lens is adjusted, it is not necessary that it is corrected at the time of the recording/reproducing on the high density optical disk.

From the above description, in the optical pick-up device in which the optical pick-up system according to the present invention is mounted, because the spherical aberration change following the temperature change generated at the time of the recording/reproducing on the high density optical disk, is automatically corrected by the action of plastic lens in the aberration correction optical system, the spherical aberration detection means, and a complex control circuit for controlling the actuator of the movable lens corresponding to the detection result of the spherical aberration detection means, are not necessary, and the structure of the optical pick-up device becomes simple, and the cost reduction can be realized.

According to the 24th mode of the present invention, it is preferable that it is an optical information recording and/or reproducing apparatus in which the optical pick-up device written in any one of the 21st to the 23rd mode, is mounted. Further, it is preferable that the apparatus has a disk holder.

According to this, the same effect as any one of the 21st to the 23rd mode is obtained.

Referring to the drawings, the best mode for carrying out the present invention will be detailed below.

(The first embodiment)

Fig. 1 is a view generally showing a structure of the first optical pick-up device PU1 by which the recording/reproducing of the information can be adequately conducted on any one of the high density optical disk HD (the first optical disk), DVD (the second optical disk) and CD (the third optical disk). The optical specification of the high density optical disk HD is the wavelength $\lambda 1$ = 408 nm, thickness t1 of the protective layer PL1 = 0.0875 mm, numerical aperture NA1 = 0.85, and the optical specification of DVD is the wavelength $\lambda 2$ = 658 nm, thickness t2 of the protective layer PL2 = 0.6 mm, numerical aperture NA2 = 0.67, and the optical specification of CD is the wavelength $\lambda 3$ = 785 nm, thickness t3 of the protective layer PL3 = 1.2 mm, numerical aperture NA3 = 0.51. However, a combination of the wavelength, thickness of the protective layer, and numerical aperture, is not limited to this.

The optical pick-up device PU1 is structured by: the blue violet semiconductor laser LD1 (the first light source) projecting the laser light flux (the first light flux) of 408 nm which is light-emitted when the recording/reproducing of the information is conducted on the high density optical disk HD; red semiconductor laser LD2 (the second light source) projecting the laser light flux (the second light flux) of 658 nm which is light-emitted when the recording/reproducing of the information is conducted on DVD; light detector PD12 common to the first light flux and the second light flux; CD use module MD3 in which the infrared semiconductor laser LD3 (the third light source) projecting the laser light flux (the third light flux) of 785 nm which is light-emitted when the recording/reproducing of the information is conducted on CD, and the light detector PD3 are integrated; beam expander optical system EXP as the aberration correction optical system; one-axis actuator UAC; objective optical system OBJ having a function by which each of laser light fluxes is light-converged on the information recording surfaces RL1, RL2, RL3; two-axis actuator AC; the first beam combiner BC1; second beam combiner BC2; third beam combiner BC3; first collimator optical system COL1; second collimator optical system COL2; stop STO; and sensor lens SEN.

The beam expander optical system is structured by a glass lens (the first lens EXP1) whose paraxial refractive power is negative, and a plastic lens (the second lens EXP2) whose paraxial refractive power is positive, and arranged in the common optical path of the first light flux and the second light flux.

In the optical pick-up device PU1, when the recording/reproducing of the information is conducted on the high density optical disk HD, as the path of ray is shown by a solid line in Fig. 1, initially, the blue violet semiconductor laser LD1 is light-emitted. After the divergent light flux projected from the blue violet semiconductor laser LD1 is converted into the parallel light flux by transmitting the first collimator optical system COL1, it transmits the first and the second beam combiners BC1 and BC2, first lens EXP1, second lens EXP2, third beam combiner BC3, in order, and becomes a spot formed on the information recording surface RL1 through the protective layer PL1 of the high density optical disk HD by the objective optical system OBJ.

Hereupon, the details of the objective optical system OBJ will be described later.

Then, the objective optical system OBJ conducts focusing or tracking by the 2-axis actuator AC arranged in its periphery. The reflected light flux modulated by the information pit on the information recording surface RL1 transmits again the objective optical system OBJ, the third beam combiner BC3, the second lens EXP2 and the first lens EXP1 of the beam expander optical system EXP, and is branched by the second beam combiner BC2, passes the sensor lens SEN, and is converged on the light receiving surface of the light detector PD12. Then, by using the output signal of the light detector PD12, the information recorded in the high density optical disk HD can be read.

Further, when the recording/reproducing of the information is conducted on DVD, as the path of ray is shown by a dotted line in Fig. 1, initially, the red semiconductor laser LD2 is light-emitted. The divergent light flux projected from the red semiconductor laser LD2 is reflected by the first beam combiner BC1, transmits the second beam combiner BC2, first lens EXP1, second lens EXP2, third beam combiner BC3, in order, and becomes a spot formed on the information recording surface RL2 by the objective optical system OBJ through the protective layer of DVD.

Then, the objective optical system OBJ conducts the focusing or tracking by 2-axis actuator AC arranged in the periphery of it. The reflected light flux modulated by the information pit on the information recording surface RL2 transmits again the objective optical system OBJ, the third beam combiner BC3, second lens EXP2, first lens EXP1, and is branched by the second beam combiner BC2, passes the sensor lens SEN, and is converged on the light receiving surface of the light detector PD12. Then, by using the output signal of the light detector PD12, the information recorded in DVD can be read.

Further, when the recording/reproducing of the information is conducted on CD, as the path of ray is shown by 2-dot chain line in Fig. 1, the CD use module MD3 is actuated and the infrared semiconductor laser LD3 is light-emitted. The divergent light flux projected from the infrared semiconductor laser LD3 becomes a spot formed on the information recording surface RL3 by the objective optical system OBJ through the protective layer of CD, after it is reflected by the third beam combiner BC3. The objective optical system OBJ conducts the focusing or tracking by the 2-axis actuator AC arranged in the periphery of it. The reflected light flux modulated by the information pit on the information recording surface RL3 is, after it transmits again the objective optical system OBJ, reflected by the third beam combiner BC3, and is converged on the light receiving surface of the light detector PD3 of the CD use module MD3. Then, by using the output signal of the light detector PD3, the information recorded in CD can be read.

Further, in the present embodiment, a package light source unit in which the blue violet semiconductor laser LD1 and the red semiconductor laser LD2 are integrated, and housed in a casing, can also be used. In this case, the first beam combiner BC1 can be deleted, and for example, the second collimator optical system COL2 can be deleted.

Next, the structure of the objective optical system OBJ will be described. Hereupon, the objective optical system OBJ is the same structure also in the second - the fourth, and the sixth - the ninth embodiments, which will be described later.

The objective optical system OBJ is structured, as shown in Fig. 2 and Fig. 3, by the aberration correction element L1 and the light collecting element L2 both surfaces of which are aspheric surfaces, having a function for collecting the laser light flux which transmits this aberration correction element L1, on the information recording surface of the optical disk. Both of the aberration correction element L1 and the light collecting element L2 are plastic lenses, and in the periphery of respective optical function sections, flange sections FL1, FL2 which are integrally molded with the optical function section, are formed, and when mutual one-portions of such flange sections FL1, FL2 are engaged, they are integrated.

Hereupon, in the present embodiment, when mutual respective flange sections are engaged, the aberration correction element L1 and the light collecting element L2 are integrally structured, however, the integration of the aberration correction element L1 and the light collecting element L2 may be allowable when they are held so that the relative position relationships of them are constant, and for example, the structure in which the aberration correction element L1 and the light collecting element L2 are integrated through a mirror flame, may also be allowable.

The optical function surface S1 on the light source side of the aberration correction element L1 is, as shown in Fig. 3(a), is divided into the first area AREA1 corresponding to an area to the numerical aperture 0.67 of DVD, and the second area AREA2 corresponding to an area from the numerical aperture 0.67 of DVD to the numerical aperture 0.85 of the high density optical disk HD, and as shown in Fig. 2(a), the step type diffractive structure HOE which is the structure in which a plurality of ring-shaped zones inside of which the step structure is formed, are arranged around the optical axis, is formed in the first area AREA1.

In the step type diffractive structure HOE formed in the first area AREA1, the depth d0 per one step of the step structure formed in each ring-shaped zone is set to a value calculated by $d0 = 2 \times \lambda 1/(n1 - 1)$ (μm), and the number of divisions N of each ring-shaped zone is set to 5. However, λ1 is a value in which the wavelength of the laser light flux projected from the blue violet semiconductor laser is expressed in micron unit, (herein, λ1 = 0.408 μm), n1 is the refractive index to the wavelength λ1 of the aberration correction element L1 (herein, n1 = 1.5242).

When, on this step type diffractive structure HOE, the laser light flux of wavelength λ1 is incident, the optical path difference of $2 \times \lambda 1$ (μm) is generated between adjoining steps, and because, to the laser light flux of wavelength λ1, practically the phase difference is not given, the laser light flux transmits without being diffracted, as it is. Hereupon, in the following description, the light flux which transmits as it is, without the phase difference being given practically, by the step type diffractive structure, is referred to as 0-order diffraction light.

On the one hand, when, on this step type diffractive structure HOE, the laser light flux of wavelength λ2 (herein, λ2 = 0.658 μm) projected from the red semiconductor laser is incident, the optical path difference of $d0 \times (n2 - 1) - \lambda 2 = 0.13$ μm is generated between adjoining steps, and because, in one segment of ring-shaped zone divided into 5, the optical path difference for one wavelength segment of λ2 such as $0.13 \times 5 = 0.65$ μm, is generated, the wave-front transmitted the adjoining ring-shaped zones is superimposed respectively being shifted by one wavelength. That is, by this step type diffractive structure HOE, the light flux of wavelength λ2 becomes a diffraction light diffracted in one-order direction. Hereupon, n2 is a refractive index to the wavelength λ2 of the aberration correction element L2 (herein, n2 = 1.5064). The diffraction efficiency of the one order diffraction light of the laser light flux of wavelength λ2 is 87.5 %, and is a sufficient light amount for the recording/reproducing of the information on DVD. In the objective optical system OBJ, by an action of the step type diffractive structure HOE, the spherical aberration due to the difference of thickness of the protective layers of the high density optical disk and DVD, is corrected.

Further, when, on this step type diffractive structure, the laser light flux of wavelength λ3 (herein, λ3 = 0.785 μm) is incident, because $\lambda 3 \approx 2 \times \lambda 1$, the optical path difference of $1 \times \lambda 3$ (μm) is generated between adjoining steps, and also to the laser light flux of wavelength λ3, in the same manner as in the laser light flux of wavelength λ1, because the phase difference is not practically given, it transmits as it is, without being diffracted, (0-order diffraction light). In the objective optical system OBJ, when the magnifications to wavelength λ1 and wavelength λ3 are made different, the spherical aberration due to the difference of thickness of protective layers of the high density optical disk HD and CD, is corrected.

Further, in the objective optical system OBJ of the 1st - 4th and 6th - 8th embodiments, the optical function surface S2 on the optical disk side of the aberration correction element L1 is, as shown in Fig. 3(c), divided into the third area AREA3 including the optical axis corresponding to an area within the numerical aperture 0.67 of DVD, and the fourth area AREA4 corresponding to an area from the numerical aperture 0.67 of DVD to the numerical aperture 0.85 of the high density optical disk HD, and a blaze type diffractive structure DOE1 is formed in the third area AREA3, and a blaze type diffractive structure DOE2 is formed in the fourth area AREA4. The blaze type diffractive structures DOE1 and DOE2 are structures for correcting the chromatic aberration of the objective optical system OBJ in the blue violet area.

Hereupon, in the objective optical system OBJ of the ninth embodiment, the optical function surface S2 on the optical disk side of the aberration correction element L1 is an aspheric surface having the convex shape on the optical disk side in a paraxial portion.

Further, the optical pick-up device in each embodiment is designed, when the recording and/or reproducing of the information is conducted on the first optical disk, so that the change rate $\Delta SA/\Delta T$ of the spherical aberration following the temperature change of the objective optical system satisfies the above expression (1).

Thereby, when, to the change rate $\Delta SA/\Delta T$ of the spherical aberration following the temperature change of the objective optical system OBJ, the refractive index of the plastic lens in the aberration correction optical system is adequately set, the spherical aberration changing in the over correction direction by the influence of the lowering of refractive index of the plastic lens in the objective optical system, and the spherical aberration changing in the under correction direction by the magnification change of the objective optical system, can be cancelled out.

Accordingly, because it is not necessary that the lens in the aberration correction optical system is moved following the temperature change in the recording/reproducing of the high density optical disk, by the actuator, and the temperature characteristic of the objective optical system is corrected, the structure of the compatible type optical device can be made simple.

Further, because the refractive power of the plastic lens in the aberration correction optical system is uniquely determined depending on the temperature characteristic of the objective optical system, when the aberration correction optical system is structured only by the plastic lenses, the degree of freedom for determining the paraxial amount such as the magnification of the aberration correction optical system is insufficient, however, in the optical pick-up device of the present embodiment, because the refractive power of the glass lens which is not affected by influence of the temperature change, arranged in the aberration correction optical system, can be freely selected, it can cope with various specifications of the aberration correction optical system.

Further, in the 1st - fifth embodiments, when a pair of optical elements of a beam shaping prism are arranged in the optical path between the collimator optical system (COL, COL1, COL2, COL3) and the beam expander optical system EXP, it is preferable that the first collimator optical system COL1 is structured by a glass lens. Thereby, because the degree of the parallel of the light flux projected from the first collimator optical system COL1, is constant for the temperature change, even when the temperature change is generated, the astigmatism is not generated.

Further, in the optical pick-up device PU1 in the present embodiment, because the beam expander optical system EXP is arranged in the common optical path of the first light flux and the second light flux, the temperature characteristic can be corrected also at the time of the recording/reproducing on DVD using the second light flux. Further, when the first lens EXP1 of the beam expander optical system EXP is moved by the one axis actuator UAC, not only at the time of the recording/reproducing on the high density optical disk, but also at the time of the recording/reproducing on DVD, the spherical aberration can be corrected.

(The second embodiment)

Next, the second embodiment of the present invention will be described, however, the same structure as in the first embodiment is denoted by the same sign, and the description is neglected.

As shown in Fig. 4, the optical pick-up device PU2 is structured by: the blue violet semiconductor laser LD1 projecting the first light flux; light detector PD1, DVD use module MD2 into which the red semiconductor laser LD2 projecting the second light flux and the light detector PD2 are integrated; CD use module MD3 into which the red semiconductor laser LD3 and the light detector PD3 are integrated; beam expander optical system EXP as the aberration correction optical system; one axis actuator UAC; objective optical system OBJ; 2-axis actuator AC; first beam combiner BC1; second beam combiner BC2; third beam combiner BC3; and collimator optical system COL.

Then, in the optical pick-up device PUE in the present embodiment, the collimator optical system COL; a glass lens whose paraxial refractive power is negative, (the first lens EXP1) in the beam expander optical system EXP; second beam combiner BC2; a plastic lens (the second lens EXP2) whose paraxial refractive power is positive, in the beam expander optical system EXP; and objective optical system OBJ, are arranged in order, from the blue violet semiconductor laser LD1 side.

In the optical pick-up device PU2, when the recording/reproducing of the information is conducted on the high density optical disk HD, as the path of ray is shown by a solid line in Fig. 4, initially, the blue violet semiconductor laser LD1 is light-emitted. When the divergent light flux projected from the blue violet semiconductor laser LD1 passes the first beam combiner BC1, and transmits the collimator optical system COL, after it is converted into a parallel light flux, it passes the first lens EXP1, second beam combiner BC2, second lens EXP2, third beam combiner BC3, in order, and becomes a spot formed on the information recording surface RL1 through the protective layer PL1 of the high density optical disk HD by the objective optical system OBJ.

Then, the objective optical system OBJ conducts the focusing or tracking by the 2-axis actuator arranged in the periphery of it. The reflected light flux modulated by an information pit on the information recording surface RL1,

transmits again the objective optical system OBJ, third beam combiner BC3, second lens EXP2, second beam combiner BC2, first lens EXP1, and collimator optical system COL, and is branched by the first beam combiner BC1, passes the sensor lens SEN, and converged on the light receiving surface of the light detector PD1. Then, by using the output signal of the light detector PD1, the information recorded in the high density optical disk HD can be read.

Further, when the recording/reproducing of the information is conducted on DVD, as the path of ray is shown by a dotted line in Fig. 4, initially, the red semiconductor laser is light-emitted. The divergent light flux projected from the red semiconductor laser LD2 is reflected by the second beam combiner BC2, and after converted into a parallel light flux in the second lens EXP2, passes the third beam combiner BC3 in order, and becomes a spot formed on the information recording surface RL2 through the protective layer PL2 of DVD by the objective optical system OBJ.

Then, the objective optical system OBJ conducts the focusing or tracking by the 2-axis actuator AC arranged in the periphery of it. The reflected light flux modulated by an information pit on the information recording surface RL2, passes again the objective optical system OBJ, third beam combiner BC3, second lens EXP2, and is branched by the second beam combiner BC2, and converged on the light receiving surface of the light detector PD2. Then, by using the output signal of the light detector PD2, the information recorded in DVD can be read.

Further, when the recording/reproducing of the information is conducted on CD, as the path of ray is shown by a two-dotted chain line in Fig. 4, the CD use module MD3 is actuated and the red semiconductor laser LD3 is light-emitted. The divergent light flux projected from the red semiconductor laser LD3, after it is reflected by the third beam combiner BC3, becomes a spot formed on the information recording surface RL3 through the protective layer PL3 of CD by the objective optical system OBJ. The objective optical system OBJ conducts the focusing or tracking by the 2-axis actuator AC arranged in the periphery of it. The reflected light flux modulated by an information pit on the information recording surface RL3, after it passes again the objective optical system OBJ, is reflected by the third beam combiner BC3, and converged on the light receiving surface of the light detector PD3 of the CD use module MD3. Then, by using the output signal of the light detector PD3, the information recorded in CD can be read.

In the optical pick-up device PU2 in the present embodiment, because the plastic lens (the second lens EXP2) in the beam expander optical system EXP is in the common optical path of the first light flux and the second light flux, when the objective optical system OBJ has the temperature characteristic in which the spherical aberration changes in the over correction direction following the temperature rise at the time of the recording/reproducing of DVD, by the action of the second lens EXP2, also the temperature characteristic at the time of the recording/reproducing on DVD can be corrected. Further, because the second lens EXP2 serves both as the collimator optical system of the second light flux, the number of parts can be reduced. Further, when the plastic lens (the second lens EXP2) is made so that it can be moved by the actuator, not only at the time of the recording/reproducing on the high density optical disk, but also at the time of the recording/reproducing on DVD, the spherical aberration can be corrected.

(The third embodiment)

Next, the third embodiment of the present invention will be described, however, the same structure as the first embodiment is denoted by the same sign and the description is neglected.

As shown in Fig. 5, the optical pick-up device PU3 is structured by: the blue violet semiconductor laser LD1 projecting the first light flux; light detector PD1, DVD use module MD2 into which the red semiconductor laser LD2 projecting the second light flux, and light detector PD2 are integrated; CD use module MD3 into which the infrared semiconductor laser LD3 and light detector PD3 are integrated; beam expander optical system EXP as the aberration correction optical system; one axis actuator UAC; objective optical system OBJ; 2-axis actuator AC; the first beam combiner BC1; second beam combiner BC2; third beam combiner BC3; collimator optical system COL; and coupling optical system CUL3.

Then, in the optical pick-up device PU3 in the present embodiment, the collimator optical system COL, plastic lens (the second lens EXP2) whose paraxial refractive power is positive, in the beam expander optical system EXP, second beam combiner BC2, glass lens (the first lens EXP1) whose paraxial refractive power is negative, in the beam expander optical system EXP, and the objective optical system OBJ, are arranged in order from the blue violet semiconductor laser LD1 side.

In the optical pick-up device PU3, when the recording/reproducing of the information is conducted on the high density optical disk HD, as its path of ray is shown by a solid line in Fig. 5, initially, the blue violet semiconductor laser LD1 is light-emitted. The divergent light flux projected from the blue violet semiconductor laser LD1 passes the first beam combiner BC1, and after converted into the parallel light flux by passing the collimator optical system COL, passes the second lens EXP2, second beam combiner BC2, first lens EXP1, and third beam combiner BC3, in order, and becomes a spot formed on the information recording surface RL1 through the protective layer PL1 of the high density optical disk HD by the objective optical system OBJ.

Then, the objective optical system OBJ conducts the focusing or tracking, by the 2-axis actuator AC arranged in its periphery. The reflected light flux modulated by an information pit on the information recording surface RL1,

transmits again the objective optical system OBJ, the third beam combiner BC3, first lens EXP1, second beam combiner BC2, second lens EXP2, and collimator optical system COL, and is branched by the first beam combiner BC1, passes the sensor lens SEN, and is converged on the light receiving surface of the light detector PD1. Then, by using the output signal of the light detector PD1, the information recorded in the high density optical disk HD can be read.

Further, when the recording/reproducing of the information is conducted on DVD, as the path of ray is shown by a dotted line in Fig. 5, initially, the red semiconductor laser is light-emitted. The divergent light flux projected from the red semiconductor laser LD2 passes the coupling optical system CUL3, is reflected by the second beam combiner BC2, and after converted into a parallel light flux in the first lens EXP1, passes the third beam combiner BC3, and becomes a spot formed on the information recording surface RL2 through the protective layer PL2 of DVD by the objective optical system OBJ.

Then, the objective optical system OBJ conducts the focusing or tracking by the 2-axis actuator AC arranged in the periphery of it. The reflected light flux modulated by an information pit on the information recording surface RL2, passes again the objective optical system OBJ, third beam combiner BC3, first lens EXP1, and is branched by the second beam combiner BC2, passes the coupling optical system CUL3 and converged on the light receiving surface of the light detector PD2. Then, by using the output signal of the light detector PD2, the information recorded in DVD can be read.

Further, when the recording/reproducing of the information is conducted on CD, as the path of ray is shown by a two-dotted chain line in Fig. 5, the CD use module is actuated and the red semiconductor laser LD3 is light-emitted. The divergent light flux projected from the red semiconductor laser LD3, after it is reflected by the third beam combiner BC3, becomes a spot formed on the information recording surface RL3 through the protective layer PL3 of CD by the objective optical system OBJ. The objective optical system OBJ conducts the focusing or tracking by the 2-axis actuator AC arranged in the periphery of it. The reflected light flux modulated by an information pit on the information recording surface RL3, after it passes again the objective optical system OBJ, is reflected by the third beam combiner BC3, and converged on the light receiving surface of the light detector PD3 of the CD use module MD3. Then, by using the output signal of the light detector PD3, the information recorded in CD can be read.

In the optical pick-up device PU3 in the present embodiment, because the plastic lens (the second lens EXP2) in the beam expander optical system EXP is in the exclusive use optical path of the first light flux, the existence of the beam expander optical system EXP does not affect the temperature characteristic at the time of the recording/reproducing on DVD using the second light flux. Accordingly, by considering only that the temperature characteristic at the time of the recording/reproducing on the high density optical disk using the first light flux is corrected, the refractive power of the plastic lens (the second lens EXP2) can be determined. Further, when the glass lens (the first lens EXP1) is moved by the one axis actuator UAC, not only at the time of the recording/reproducing on the high density optical disk, but also at the time of the recording/reproducing on DVD, the spherical aberration can be corrected.

(The fourth embodiment)

Next, the fourth embodiment of the present invention will be described, however, the same structure as the first embodiment is denoted by the same sign and the description is neglected.

As shown in Fig. 6, the optical pick-up device PU4 is structured by: the high density optical disk use module MD1 into which the blue violet semiconductor laser LD1 projecting the first light flux and light detector PD1 are integrated; DVD use module MD2 into which the red semiconductor laser LD2 projecting the second light flux, and light detector PD2 are integrated; CD use module MD3 into which the infrared semiconductor laser LD3 projecting the third light flux and light detector PD3 are integrated; beam expander optical system EXP as the aberration correction optical system; one axis actuator UAC; objective optical system OBJ; 2-axis actuator AC; the first beam combiner BC1; second beam combiner BC2; first collimator optical system COL1; and second collimator optical system COL2.

In the optical pick-up system in the present embodiment, the beam expander optical system EXP is arranged in the exclusive use optical path of the first light flux.

In the optical pick-up device PU4, when the recording/reproducing of the information is conducted on the high density optical disk HD, as its path of ray is shown by a solid line in Fig. 6, initially, the blue violet semiconductor laser LD1 is light-emitted. The divergent light flux projected from the blue violet semiconductor laser LD1, after converted into the parallel light flux by passing the first collimator optical system, passes the first lens EXP1 (glass lens whose paraxial refractive power is negative), second lens EXP2 (plastic lens whose paraxial refractive power is positive), the first beam combiner BC1, second beam combiner BC2, in order, and becomes a spot formed on the information recording surface RL1 through the protective layer PL1 of the high density optical disk HD by the objective optical system OBJ.

Then, the objective optical system OBJ conducts the focusing or tracking, by the 2-axis actuator AC arranged in its periphery. The reflected light flux modulated by an information pit on the information recording surface RL1, transmits again the objective optical system OBJ, the second beam combiner BC2, first beam combiner BC1, second lens EXP2, first lens EXP1, and first collimator optical system COL, and is converged on the light receiving surface of the light detector PD1. Then, by using the output signal of the light detector PD1, the information recorded in the high density optical disk HD can be read.

Further, when the recording/reproducing of the information is conducted on DVD, as the path of ray is shown by a dotted line in Fig. 6, initially, the red semiconductor laser LD2 is light-emitted. The divergent light flux projected from the red semiconductor laser LD2, after it is converted into a parallel light flux when it transmits the second collimator optical system COL2, is reflected by the first beam combiner BC1, passes the second beam combiner BC2, and becomes a spot formed on the information recording surface RL2 through the protective layer PL2 of DVD by the objective optical system OBJ.

Then, the objective optical system OBJ conducts the focusing or tracking by the 2-axis actuator AC arranged in the periphery of it. The reflected light flux modulated by an information pit on the information recording surface RL2, passes again the objective optical system OBJ, second beam combiner BC2, and is branched by the first beam combiner BC1, when it passes the collimator optical system COL2, after it is converted into converging light flux, it is converged on the light receiving surface of the light detector PD2. Then, by using the output signal of the light detector PD2, the information recorded in DVD can be read.

Further, when the recording/reproducing of the information is conducted on CD, as the path of ray is shown by a two-dotted chain line in Fig. 6, the CD use module MD3 is actuated and the infrared semiconductor laser LD3 is light-emitted. The divergent light flux projected from the infrared semiconductor laser LD3, after it is reflected by the second beam combiner BC2, becomes a spot formed on the information recording surface RL3 through the protective layer PL3 of CD by the objective optical system OBJ. The objective optical system OBJ conducts the focusing or tracking by the 2-axis actuator AC arranged in the periphery of it. The reflected light flux modulated by an information pit on the information recording surface RL3, after it transmits again the objective optical system OBJ, is reflected by the second beam combiner BC2, and converged on the light receiving surface of the light detector PD3 of the CD use module MD3. Then, by using the output signal of the light detector PD3, the information recorded in CD can be read.

In the optical pick-up device PU4 in the present embodiment, because the plastic lens (the second lens EXP2) in the beam expander optical system EXP is in the exclusive use optical path of the first light flux, the existence of the beam expander optical system EXP does not affect the temperature characteristic at the time of the recording/reproducing on DVD using the second light flux. Accordingly, by considering only a case where the temperature characteristic at the time of the recording/reproducing on the high density optical disk using the first light flux is corrected, the refractive power of the plastic lens (the second lens EXP2) can be determined.

(The fifth embodiment)

In the optical pick-up device PU5 in the present embodiment, the optical specification of the high density optical disk HD is the wavelength $\lambda 1$ = 407 nm, thickness t1 of the protective layer PL1 = 0.6 mm, numerical aperture NA1 = 0.67, and the optical specification of DVD is the wavelength $\lambda 2$ = 655 nm, thickness t2 of the protective layer PL2 = 0.6 mm, numerical aperture NA2 = 0.66, and the optical specification of CD is, the wavelength $\lambda 3$ = 785 nm, thickness t3 of the protective layer PL3 = 1.2 mm, and numerical aperture NA3 = 0.51. However, the combination of the wavelength, thickness of the protective layer, and numerical aperture, is not limited to this.

As shown in Fig. 7, the optical pick-up device PU5 is structured by: the blue violet semiconductor laser LD1 projecting the first light flux; red semiconductor laser LD2 projecting the second light flux; infrared semiconductor laser LD3 projecting the third light flux; light detector PD123 common to the first - third light fluxes; beam expander optical system EXP as the aberration correction optical system; one axis actuator UAC; objective optical system OBJ'; first beam combiner BC1; second beam combiner BC2; third beam combiner BC3; first collimator optical system COL1; second collimator optical system COL2; and third collimator optical system COL3.

In the optical pick-up system in the present embodiment, the beam expander optical system EXP is arranged in the common optical path of the first light flux, second light flux and third light flux.

In the optical pick-up device PUS, when the recording/reproducing of the information is conducted on the high density optical disk HD, as the path of ray is shown by a solid line in Fig. 7, initially, the blue violet semiconductor laser LD1 is light-emitted. When the divergent light flux projected from the blue violet semiconductor laser LD1, after it is converted into a parallel light flux when it transmits the first collimator optical system COL1, passes the first beam combiner BC1, second beam combiner BC2, third beam combiner BC3, first lens EXP1 (glass lens whose paraxial refractive power is negative), second lens EXP2 (plastic lens whose paraxial refractive power is positive), in order, and becomes a spot formed on the information recording surface RL1 through the protective layer PL1 of the high density optical disk HD by the objective optical system OBJ'.

Then, the objective optical system OBJ' conducts the focusing or tracking by the 2-axis actuator arranged in the periphery of it. The reflected light flux modulated by an information pit on the information recording surface RL1, passes again the objective optical system OBJ', second lens EXP2, first lens EXP1, and is branched by the third beam combiner BC3, passes the sensor lens SEN, and converged on the light receiving surface of the light detector PD123. Then, by using the output signal of the light detector PD123, the information recorded in the high density optical disk HD can be read.

Further, when the recording/reproducing of the information is conducted on DVD, as the path of ray is shown by a dotted line in Fig. 7, initially, the red semiconductor laser LD2 is light-emitted. The divergent light flux projected from the red semiconductor laser LD2, after it is converted into a parallel light flux by transmitting the second collimator optical system COL2, is reflected by the first beam combiner BC1, passes the second beam combiner BC2, third beam combiner BC3, first lens EXP1, second lens EXP2, in order, and becomes a spot formed on the information recording surface RL2 through the protective layer PL2 of DVD by the objective optical system OBJ'.

Then, the objective optical system OBJ' conducts the focusing or tracking by the 2-axis actuator AC arranged in the periphery of it. The reflected light flux modulated by an information pit on the information recording surface RL2, passes again the objective optical system OBJ', second lens EXP2, first lens EXP1, and is branched by the third beam combiner BC3, passes the sensor lens SEN, and it is converged on the light receiving surface of the light detector PD123. Then, by using the output signal of the light detector PD123, the information recorded in DVD can be read.

Further, when the recording/reproducing of the information is conducted on CD, as the path of ray is shown by a two-dotted chain line in Fig. 7, initially, the infrared semiconductor LD3 is light-emitted. The divergent light flux projected from the infrared semiconductor laser LD3, after it is converted into a parallel light flux by passing the third collimator optical system COL3, is reflected by the third beam combiner BC3, passes the first lens EXP1, second lens EXP2, in order, and becomes a spot formed on the information recording surface RL3 through the protective layer PL3 of CD by the objective optical system OBJ'.

The objective optical system OBJ' conducts the focusing or tracking by the 2-axis actuator AC arranged in the periphery of it. The reflected light flux modulated by an information pit on the information recording surface RL3, after it passes again the objective optical system OBJ', the second lens EXP2, first lens EXP1, and is branched by the third beam combiner BC3, passes the sensor lens SEN, and converged on the light receiving surface of the light detector PD123. Then, by using the output signal of the light detector PD123, the information recorded in CD can be read.

Further, in the present embodiment, a packaged light source unit into which the red semiconductor laser LD2 and infrared semiconductor laser LD3 are integrated and housed in a casing, can also be used. In this case, the second beam combiner BC2 can be deleted, and the collimator optical system can be made two, and for example, the third collimator optical system COL3 can be deleted.

Further, in the present embodiment, a packaged light source unit into which the blue violet semiconductor laser LD1 and red semiconductor laser LD2 are integrated and housed in a casing, can also be used. In this case, the first beam combiner BC1 can be deleted, and the collimator optical systems can be made two, and for example, the second collimator optical system COL2 can be deleted.

Furthermore, in the present embodiment, a packaged light source unit into which the blue violet semiconductor laser LD1, red semiconductor laser LD2, and infrared semiconductor laser LD3 are integrated and housed in a casing, can also be used. In this case, the first and second beam combiners BC1, BC2 can be deleted, and the collimator optical system can be made one, and for example, the second and third collimator optical systems COL2, COL3 can be deleted.

Next, the structure of the objective optical system OBJ' will be described. Hereupon, the objective optical system OBJ' is the same structure also as in the 10th embodiment which will be detailed later.

The objective optical system OBJ' is structured by a plastic lens whose both surfaces are aspheric, and in the optical function surface S1 on the light source side, a blazed type diffractive structure DOE3 is formed. The blazed type diffractive structure DOE3 is a structure by which the spherical aberration of the wavelength $\lambda 1$ and wavelength $\lambda 2$ due to the chromatic aberration of the plastic lens is corrected, and by this action, the first light flux and second light flux respectively form good spots on respective information recording surfaces of the high density optical disk HD and DVD. Further, in the objective optical system OBJ', when the magnifications to the wavelength $\lambda 1$ and wavelength $\lambda 3$ are made different, the spherical aberration due to the difference of thickness of the protective layer between the high density optical disk and CD, is corrected. Hereupon, in the fifth and the tenth embodiment, when the glass lens (in the fifth embodiment, the first lens EXP1, in the tenth embodiment, the first lens CUL1) in the aberration correction optical system is moved by the one axis actuator UAC, the magnification of the objective optical system OBJ' is changed.

In the optical pick-up device PU5 in the present embodiment, because the plastic lens (the second lens EXP2) in the beam expander optical system EXP is in the common optical path of the first light flux, second light flux and third light flux, when the objective optical system OBJ' has the temperature characteristic in which the spherical aberration changes in the over correction direction following the temperature rise at the time of the recording/reproducing of DVD or CD, by the action of the second lens EXP2, the temperature characteristic at the time of the recording/reproducing on DVD or CD can also be corrected. Further, because the second lens EXP2 can be moved by the one axis actuator UAC, the spherical aberration can be corrected not only at the time of the recording/reproducing on the high density optical disk, but also at the time of the recording/reproducing on DVD and CD.

(The sixth embodiment)

Next, the sixth embodiment of the present invention will be described, however, the same structure as in the first embodiment is denoted by the same sign, and the description is neglected.

As shown in Fig. 8, the optical pick-up device PU6 is structured by: a light source unit LU1 into which the blue violet semiconductor laser LD1 projecting the first light flux and the red semiconductor laser LD2 projecting the second light flux are integrated; light detector PD12 common to the first light flux and the second light flux; CD use module MD3 into which the infrared semiconductor laser LD3 projecting the third light flux and light detector PD3 are integrated; coupling optical system CUL as the aberration correction optical system; one axis actuator UAC; objective optical system OBJ; two-axis actuator AC; first beam combiner BC1; and second beam combiner BC2.

Hereupon, in the sixth - tenth embodiment, the coupling optical system CUL as the aberration correction optical element, is the collimator optical system by which the divergent light flux of the wavelength $\lambda 1$ projected from the blue violet semiconductor laser LD1 is converted into the parallel light flux.

The coupling optical system CUL is structured by a glass lens (the first lens CUL1) and a plastic lens (the second lens CUL2) whose paraxial refractive power is positive, and is arranged in the common optical path of the first light flux and the second light flux.

In the optical pick-up device PU6, when the recording/reproducing of the information is conducted on the high density optical disk HD, as the path of ray is shown by a solid line in Fig. 8, initially, the blue violet semiconductor laser LD1 is light-emitted. The divergent light flux projected from the blue violet semiconductor laser LD1, passes the first beam combiner BC1, first lens CUL1 (glass lens whose paraxial refractive power is negative), second lens CUL2 (plastic lens whose paraxial refractive power is positive), second beam combiner BC2,in order, and becomes a spot formed on the information recording surface RL1 through the protective layer PL1 of the high density optical disk HD by the objective optical system OBJ.

Then, the objective optical system OBJ conducts the focusing or tracking by the 2-axis actuator arranged in the periphery of it. The reflected light flux modulated by an information pit on the information recording surface RL1, passes again the objective optical system OBJ, second beam combiner BC2, second lens CUL2, first lens CUL1, and is branched by the first beam combiner BC1, passes the sensor lens SEN, and converged on the light receiving surface of the light detector PD12. Then, by using the output signal of the light detector PD12, the information recorded in the high density optical disk HD can be read.

Because the case where the recording/reproducing of the information is conducted on DVD, is the same as the case where the recording/reproducing of the information is conducted on the high density optical disk HD, the description is neglected.

Further, when the recording/reproducing of the information is conducted on CD, as the path of ray is shown by a two-dotted chain line in Fig. 8, the CD use module MD3 is actuated and the infrared semiconductor laser LD3 is light-emitted. The divergent light flux projected from the infrared semiconductor laser LD3, after it is reflected by the second beam combiner BC2, becomes a spot formed on the information recording surface RL3 through the protective layer PL3 of CD by the objective optical system OBJ. The objective optical system OBJ conducts the focusing or tracking by the 2-axis actuator AC arranged in the periphery of it. The reflected light flux modulated by an information pit on the information recording surface RL3, after it transmits again the objective optical system OBJ, is reflected by the second beam combiner BC2, and converged on the light receiving surface of the light detector PD3 of the CD use module MD3. Then, by using the output signal of the light detector PD3, the information recorded in CD can be read.

In the sixth - tenth embodiments, because the coupling optical system CUL has a glass lens and a plastic lens whose refractive power is positive, the function of the aberration correction optical system for correcting the temperature characteristic of the objective optical system OBJ, OBJ', can be given to the coupling optical system CUL, and it is advantageous for the reduction of the number of parts of the optical pick-up device, cost reduction, and size reduction.

Hereupon, in the sixth - tenth embodiments, when the beam shaping element for shaping the sectional shape of the laser light flux projected from the blue violet semiconductor laser LD1, from the ellipse shape to circular, is used, it is preferable that the beam shaping element at least one optical surface of which is a cylindrical surface, is arranged in the optical path between the blue violet semiconductor laser LD1 and the coupling optical system.

Further, in the optical pick-up device PU6 in the present embodiment, because the coupling optical system CUL is arranged in the common optical path of the first light flux and the second light flux, when the objective optical system OBJ has the temperature characteristic in which the spherical aberration changes in the over correction direction following the temperature rise at the time of the recording/reproducing of DVD, by the action of the second lens CUL2, the temperature characteristic at the time of the recording/reproducing on DVD can also be corrected. Further, when the first lens CUL1 is moved by the one axis actuator, not only at the time of the recording/reproducing on the high density optical disk, but also at the time of the recording/reproducing on DVD, the spherical aberration can be corrected.

(The seventh embodiment)

Next, the seventh embodiment of the present invention will be described, however, the same structure as in the first embodiment is denoted by the same sign, and the description is neglected.

As shown in Fig. 9, the optical pick-up device PU7 is structured by: the blue violet semiconductor laser LD1 projecting the first light flux; red semiconductor laser LD2 projecting the second light flux; light detector PD12 common to the first light flux and second light flux; CD use module MD3 into which the infrared semiconductor laser LD3 projecting the third light flux and the light detector PD3 are integrated; coupling optical system CUL as the aberration correction optical system; one axis actuator UAC; objective optical system OBJ; two-axis actuator AC; first beam combiner BC1; second beam combiner BC2; and third beam combiner BC3.

Then, in the optical pick-up device PU7 in the present embodiment, a glass lens (the first lens CUL1) whose paraxial refractive power is negative, in the coupling optical system CUL, second beam combiner BC2, plastic lens (the second lens CUL2) whose paraxial refractive power is positive, in the coupling optical system CUL, objective optical system OBJ, are arranged in order from the blue violet semiconductor laser LD1 side.

In the optical pick-up device PU7, when the recording/reproducing of the information is conducted on the high density optical disk HD, as the path of ray is shown by a solid line in Fig. 9, initially, the blue violet semiconductor laser LD1 is light-emitted. The divergent light flux projected from the blue violet semiconductor laser LD1, passes the first lens CUL1, first beam combiner BC1, second beam combiner BC2, after it is converted into the parallel light flux in the second lens CUL2, passes the third beam combiner BC3, and becomes a spot formed on the information recording surface RL1 through the protective layer PL1 of the high density optical disk HD by the objective optical system OBJ.

Then, the objective optical system OBJ conducts the focusing or tracking by the 2-axis actuator arranged in the periphery of it. The reflected light flux modulated by an information pit on the information recording surface RL1, passes again the objective optical system OBJ, third beam combiner BC3, second lens CUL2, and is branched by the second beam combiner BC2, passes the sensor lens SEN, and converged on the light receiving surface of the light detector PD12. Then, by using the output signal of the light detector PD12, the information recorded in the high density optical disk HD can be read.

When the recording/reproducing of the information is conducted on DVD, as the path of ray is shown by a dotted line in Fig. 9, initially, the red semiconductor laser LD2 is light-emitted. The divergent light flux projected from the red semiconductor laser LD2, is reflected by the first beam combiner BC1, passes the second beam combiner BC2, after it is converted into a parallel light flux in the second lens CUL2, passes the third beam combiner BC3, and becomes a spot formed on the information recording surface RL2 through the protective layer PL2 of DVD by the objective optical system OBJ.

Then, the objective optical system OBJ conducts the focusing or tracking by the 2-axis actuator AC arranged in the periphery of it. The reflected light flux modulated by an information pit on the information recording surface RL2, passes again the objective optical system OBJ, third beam combiner BC3, second lens CUL2, and is branched by the second beam combiner BC2, passes the sensor lens SEN, and is converged on the light receiving surface of the light detector PD12. Then, by using the output signal of the light detector PD12, the information recorded in DVD can be read.

Further, when the recording/reproducing of the information is conducted on CD, as the path of ray is shown by a two-dotted chain line in Fig. 9, initially, the CD use module MD3 is actuated and the infrared semiconductor LD3 is light-emitted. The divergent light flux projected from the infrared semiconductor laser LD3 is reflected by the third beam combiner BC3, and becomes a spot formed on the information recording surface RL3 through the protective layer PL3 of CD by the objective optical system OBJ.

Then, the objective optical system OBJ conducts the focusing or tracking by the 2-axis actuator AC arranged in the periphery of it. The reflected light flux modulated by an information pit on the information recording surface RL3, passes again the objective optical system OBJ, and is branched by the third beam combiner BC3, and converged on the light receiving surface of the light detector PD3. Then, by using the output signal of the light detector PD3, the information recorded in CD can be read.

In the optical pick-up device PU7 in the present embodiment, because the plastic lens (the second lens CUL2) in the coupling optical system CUL is arranged in the common optical path of the first light flux and the second light flux, when the objective optical system OBJ has the temperature characteristic in which the spherical aberration changes in the over correction direction following the temperature rise at the time of the recording/reproducing of DVD, by the action of the second lens CUL2, the temperature characteristic at the time of the recording/reproducing on DVD can also be corrected. Further, because the second lens CUL2 is served both as the collimator optical system of the second light flux, the number of parts can be reduced. Further, when the second lens is moved by the one axis actuator UAC, not only at the time of the recording/reproducing on the high density optical disk, but also at the time of the recording/reproducing on DVD, the spherical aberration can be corrected.

(The eighth embodiment)

Next, the eighth embodiment of the present invention will be described, however, the same structure as in the first embodiment is denoted by the same sign, and the description is neglected.

As shown in Fig. 10, the optical pick-up device PU8 is structured by: the blue violet semiconductor laser LD1 projecting the first light flux; light detector PD1; DVD use module MD2 into which the red semiconductor laser LD2 projecting the second light flux and the light detector PD2 are integrated; CD use module MD3 into which the infrared semiconductor laser LD3 projecting the third light flux and the light detector PD3 are integrated; coupling optical system CUL as the aberration correction optical system; one axis actuator UAC; objective optical system OBJ; two-axis actuator AC; first beam combiner BC1; second beam combiner BC2; and third beam combiner BC3.

Further, the coupling optical system CUL is structured by the second lens CUL2 in which a glass lens whose paraxial refractive power is negative, and a plastic lens whose paraxial refractive power is positive, are cemented, and a glass lens whose paraxial refractive power is positive, and in the optical pick-up device PU8 in the present embodiment, the second lens CUL2 in the coupling optical system CUL, second beam combiner BC2, a glass lens (the first lens CUL1) in the coupling optical system CUL, and objective optical system OBJ, are arranged in order from the blue violet semiconductor laser LD1 side.

In the optical pick-up device PU8, when the recording/reproducing of the information is conducted on the high density optical disk HD, as the path of ray is shown by a solid line in Fig. 10, initially, the blue violet semiconductor laser LD1 is light-emitted. The divergent light flux projected from the blue violet semiconductor laser LD1, passes the first beam combiner BC1, second lens CUL2, second beam combiner BC2, and after it is converted into the parallel light flux in the first lens CUL1, passes the third beam combiner BC3, and becomes a spot formed on the information recording surface RL1 through the protective layer PL1 of the high density optical disk HD by the objective optical system OBJ.

Then, the objective optical system OBJ conducts the focusing or tracking by the 2-axis actuator AC arranged in the periphery of it. The reflected light flux modulated by an information pit on the information recording surface RL1, passes again the objective optical system OBJ, third beam combiner BC3, first lens CUL1, second beam combiner BC2, second lens CUL2, in order, and is branched by the first beam combiner BC1, passes the sensor lens SEN, and converged on the light receiving surface of the light detector PD1. Then, by using the output signal of the light detector PD1, the information recorded in the high density optical disk HD can be read.

When the recording/reproducing of the information is conducted on DVD, as the path of ray is shown by a dotted line in Fig. 10, initially, the red semiconductor laser LD2 is light-emitted. The divergent light flux projected from the red semiconductor laser LD2, is reflected by the second beam combiner BC2, after it is converted into a parallel light flux in the first lens CUL1, it passes the third beam combiner BC3, and becomes a spot formed on the information recording surface RL2 through the protective layer PL2 of DVD by the objective optical system OBJ.

Then, the objective optical system OBJ conducts the focusing or tracking by the 2-axis actuator AC arranged in the periphery of it. The reflected light flux modulated by an information pit on the information recording surface RL2, passes again the objective optical system OBJ, third beam combiner BC3, first lens CUL1, and is branched by the second beam combiner BC2, and is converged on the light receiving surface of the light detector PD2. Then, by using the output signal of the light detector PD2, the information recorded in DVD can be read.

Further, when the recording/reproducing of the information is conducted on CD, as the path of ray is shown by a two-dotted chain line in Fig. 10, initially, the CD use module MD3 is actuated and the infrared semiconductor LD3 is light-emitted. The divergent light flux projected from the infrared semiconductor laser LD3 is reflected by the third beam combiner BC3, and becomes a spot formed on the information recording surface RL3 through the protective layer PL3 of CD by the objective optical system OBJ.

Then, the objective optical system OBJ conducts the focusing or tracking by the 2-axis actuator AC arranged in the periphery of it. The reflected light flux modulated by an information pit on the information recording surface RL2, passes again the objective optical system OBJ, and is branched by the third beam combiner BC3, and converged on the light receiving surface of the light detector PD3. Then, by using the output signal of the light detector PD3, the information recorded in CD can be read.

In the optical pick-up device PU8 in the present embodiment, because the second lens CUL2 including the plastic lens in the coupling optical system CUL is arranged in the exclusive use optical path of the first light flux, the existence of the coupling optical system CUL does not affect the temperature characteristic at the time of the recording/reproducing on DVD using the second light flux. Accordingly, by considering only case where the temperature characteristic at the time of the recording/reproducing on the high density optical disk using the first light flux is corrected, the refractive power of the plastic lens in the second lens CUL2 can be determined. Further, because the first lens CUL1 serves both as the collimator optical system of the second light flux, the number of parts can be reduced. Further, when the second lens CUL2 is moved by the one axis actuator UAC, not only at the time of the recording/reproducing on the high density optical disk, but also at the time of the recording/reproducing on DVD, the spherical aberration can be corrected.

(The ninth embodiment)

Next, the ninth embodiment of the present invention will be described, however, the same structure as in the first embodiment is denoted by the same sign, and the description is neglected.

As shown in Fig. 11, the optical pick-up device PU9 is structured by: the high density optical disk use module MD1 into which the blue violet semiconductor laser LD1 projecting the first light flux and the light detector PD1 are integrated; DVD use module MD2 into which the red semiconductor laser LD2 projecting the second light flux and the light detector PD2 are integrated; CD use module MD3 into which the infrared semiconductor laser LD3 projecting the third light flux and the light detector PD3 are integrated; coupling optical system CUL as the aberration correction optical system; one axis actuator UAC; objective optical system OBJ; two-axis actuator AC; first beam combiner BC1; second beam combiner BC2; and collimator optical system COL.

The coupling optical system CUL is arranged in the exclusive use optical path of the first light flux.

In the optical pick-up device PU9, when the recording/reproducing of the information is conducted on the high density optical disk HD, as the path of ray is shown by a solid line in Fig. 11, initially, the blue violet semiconductor laser LD1 is light-emitted. The divergent light flux projected from the blue violet semiconductor laser LD1, passes the first lens CUL1 (glass lens whose paraxial refractive power is negative), second lens CUL2 (plastic lens whose paraxial refractive power is positive), first beam combiner BC1, second beam combiner BC2, and becomes a spot formed on the information recording surface RL1 through the protective layer PL1 of the high density optical disk HD by the objective optical system OBJ.

Then, the objective optical system OBJ conducts the focusing or tracking by the 2-axis actuator AC arranged in the periphery of it. The reflected light flux modulated by an information pit on the information recording surface RL1, passes again the objective optical system OBJ, second beam combiner BC2, first beam combiner BC1, second lens CUL2, first lens CUL1, in order, and converged on the light receiving surface of the light detector PD1. Then, by using the output signal of the light detector PD1, the information recorded in the high density optical disk HD can be read.

When the recording/reproducing of the information is conducted on DVD, as the path of ray is shown by a dotted line in Fig. 11, initially, the red semiconductor laser LD2 is light-emitted. The divergent light flux projected from the red semiconductor laser LD2 is, after it is converted into a parallel light flux by passing the collimator optical system COL, reflected by the first beam combiner BC1, passes the second beam combiner BC2, and becomes a spot formed on the information recording surface RL2 through the protective layer PL2 of DVD by the objective optical system OBJ.

Then, the objective optical system OBJ conducts the focusing or tracking by the 2-axis actuator AC arranged in the periphery of it. The reflected light flux modulated by an information pit on the information recording surface RL2, passes again the objective optical system OBJ, second beam combiner BC2, and is branched by the first beam combiner BC1, passes the collimator optical system COL, and is converged on the light receiving surface of the light detector PD2. Then, by using the output signal of the light detector PD2, the information recorded in DVD can be read.

Further, when the recording/reproducing of the information is conducted on CD, as the path of ray is shown by a two-dotted chain line in Fig. 11, initially, the CD use module MD3 is actuated and the infrared semiconductor LD3 is light-emitted. The divergent light flux projected from the infrared semiconductor laser LD3 is reflected by the second beam combiner BC2, and becomes a spot formed on the information recording surface RL3 through the protective layer PL3 of CD by the objective optical system OBJ.

Then, the objective optical system OBJ conducts the focusing or tracking by the 2-axis actuator AC arranged in the periphery of it. The reflected light flux modulated by an information pit on the information recording surface RL3, passes again the objective optical system OBJ, and is branched by the third beam combiner BC3, and converged on the light receiving surface of the light detector PD3. Then, by using the output signal of the light detector PD3, the information recorded in CD can be read.

In the optical pick-up device PU9 in the present embodiment, because the plastic lens (the second lens CUL2) in the coupling optical system CUL is arranged in the exclusive use optical path of the first light flux, the existence of the coupling optical system CUL does not affect the temperature characteristic at the time of the recording/reproducing on DVD using the second light flux. Accordingly, by considering only case where the temperature characteristic at the time of the recording/reproducing on the high density optical disk using the first light flux is corrected, the refractive power of the plastic lens (the second lens CUL2) can be determined.

(The tenth embodiment)

Next, the tenth embodiment of the present invention will be described, however, the same structure as in the first embodiment is denoted by the same sign, and the description is neglected.

As shown in Fig. 12, the optical pick-up device PU10 is structured by: the blue violet semiconductor laser LD1 projecting the first light flux; red semiconductor laser LD2 projecting the second light flux; infrared semiconductor laser LD3 projecting the third light flux; light detector PD123 common to the first - third light fluxes; coupling optical system CUL as the aberration correction optical system; one axis actuator UAC; objective optical system OBJ'; two-axis actuator AC; first beam combiner BC1; second beam combiner BC2; and third beam combiner BC3.

In the optical pick-up system in the present embodiment, the coupling optical system CUL is arranged in the common optical path of the first light flux, second light flux, and third light flux.

In the optical pick-up device PU10, when the recording/reproducing of the information is conducted on the high density optical disk HD, as the path of ray is shown by a solid line in Fig. 12, initially, the blue violet semiconductor laser LD1 is light-emitted. The divergent light flux projected from the blue violet semiconductor laser LD1, passes the first beam combiner BC1, second beam combiner BC2, third beam combiner BC3, first lens CUL1 (glass lens whose paraxial refractive power is negative), second lens CUL2 (plastic lens whose paraxial refractive power is positive), in order, and becomes a spot formed on the information recording surface RL1 through the protective layer PL1 of the high density optical disk HD by the objective optical system OBJ'.

Then, the objective optical system OBJ' conducts the focusing or tracking by the 2-axis actuator AC arranged in the periphery of it. The reflected light flux modulated by an information pit on the information recording surface RL1, passes again the objective optical system OBJ', second lens CUL2, first lens CUL1, and is branched by the third beam combiner BC3, passes the sensor lens SEN, and converged on the light receiving surface of the light detector PD123. Then, by using the output signal of the light detector PD123, the information recorded in the high density optical disk HD can be read.

Further, when the recording/reproducing of the information is conducted on DVD, as the path of ray is shown by a dotted line in Fig. 12, initially, the red semiconductor laser LD2 is light-emitted. The divergent light flux projected from the red semiconductor laser LD2 is reflected by the first beam combiner BC1, passes the second beam combiner BC2, third beam combiner BC3, first lens CUL1, second lens CUL2, in order, and becomes a spot formed on the information recording surface RL2 through the protective layer PL2 of DVD by the objective optical system OBJ'.

Then, the objective optical system OBJ' conducts the focusing or tracking by the 2-axis actuator AC arranged in the periphery of it. The reflected light flux modulated by an information pit on the information recording surface RL2, passes again the objective optical system OBJ', second lens CUL2, first lens CUL1, and is branched by the third beam combiner BC3, passes the sensor lens SEN, and is converged on the light receiving surface of the light detector PD123. Then, by using the output signal of the light detector PD123, the information recorded in DVD can be read.

Further, when the recording/reproducing of the information is conducted on CD, as the path of ray is shown by a two-dotted chain line in Fig. 12, initially, the infrared semiconductor LD3 is light-emitted. The divergent light flux projected from the infrared semiconductor laser LD3 is reflected by the second beam combiner BC2, passes the first lens CUL1, second lens CUL2, in order, and becomes a spot formed on the information recording surface RL3 through the protective layer PL3 of CD by the objective optical system OBJ'.

Then, the objective optical system OBJ' conducts the focusing or tracking by the 2-axis actuator AC arranged in the periphery of it. The reflected light flux modulated by an information pit on the information recording surface RL3, passes again the objective optical system OBJ', second lens CUL2, first lens CUL1, and is branched by the third beam combiner BC3, passes the sensor lens SEN, and converged on the light receiving surface of the light detector PD123. Then, by using the output signal of the light detector PD123, the information recorded in CD can be read.

In the optical pick-up device PU10 in the present embodiment, because the plastic lens (the second lens CUL2) in the coupling optical system CUL is arranged in the common optical path of the first light flux, second light flux and third light flux, when the objective optical system OBJ' has the temperature characteristic in which the spherical aberration changes in the over correction direction following the temperature rise at the time of the recording/reproducing of DVD or CD, by the action of the second lens CUL2, the temperature characteristic at the time of the recording/reproducing on DVD or CD, can also be corrected. Further, when the glass lens (the first lens CUL1) in the coupling optical system is moved by the one axis actuator UAC, not only at the time of the recording/reproducing on the high density optical disk, but also at the time of the recording/reproducing on DVD and CD, the spherical aberration can be corrected.

(The 11th embodiment)

In the optical pick-up device PU11 in the present embodiment, the optical specification of the high density optical disk HD is the wavelength $\lambda1$ = 405 nm, thickness t1 of the protective layer PL1 = 0.1 mm, numerical aperture NA1 = 0.85, and the optical specification of DVD is the wavelength $\lambda2$ = 655 nm, thickness t2 of the protective layer PL2 = 0.6 mm, numerical aperture NA2 = 0.65, and the optical specification of CD is, the wavelength $\lambda3$ = 785 nm, thickness t3 of the protective layer PL3 = 1.2 mm, and numerical aperture NA3 = 0.45. However, the combination of the wavelength, thickness of the protective layer, and numerical aperture, is not limited to this.

As shown in Fig. 15, the optical pick-up device PU11 is structured by: a laser light source unit LD123 into which the blue violet semiconductor laser LD1 projecting the first light flux, red semiconductor laser LD2 projecting the second light flux, and infrared semiconductor laser LD3 projecting the third light flux, are integrated; light detector PD123 common to the first - third light flux; beam expander optical system EXP as the aberration correction optical system; one axis actuator UAC; objective optical system OBJ"; two-axis actuator AC; beam combiner BC; and collimator optical system COL.

In the optical pick-up system in the present embodiment, the beam expander optical system EXP is arranged in the common optical path of the first light flux, second light flux and third light flux.

In the optical pick-up device PU11, when the recording/reproducing of the information is conducted on the high density optical disk HD, after the position in the optical axis of the beam expander optical system EXP1 is adjusted so that the first light flux is projected from the beam expander optical system EXP under the condition of the parallel light flux, by the one axis actuator UAC, the blue violet semiconductor laser LD1 is light-emitted. The divergent light flux projected from the blue violet semiconductor laser LD1, as its path of ray is shown by a solid line in Fig. 15, is reflected by the beam combiner BC, and when transmits the collimator optical system COL, after it is converted into the parallel light flux, passes first lens EXP1, second lens EXP2, in order, and the light flux diameter is regulated by the stop STO, and becomes a spot formed on the information recording surface RL1 through the protective layer PL1 of the high density optical disk HD by the objective optical system OBJ".

Then, the objective optical system OBJ" conducts the focusing or tracking by the 2-axis actuator AC arranged in the periphery of it. The reflected light flux modulated by an information pit on the information recording surface RL1, passes again the objective optical system OBJ", second lens EXP2, first lens EXP1, and when passes the collimator optical system COL, after it is converted into the converging light flux, passes the beam combiner BC, sensor lens SEN, and is converged on the light receiving surface of the light detector PD123. Then, by using the output signal of the light detector PD123, the information recorded in the high density optical disk HD can be read.

Further, when the recording/reproducing of the information is conducted on DVD, after the position in the optical axis direction of the first lens EXP1 is adjusted so that the second light flux is projected from the beam expander optical system EXP under the condition of the parallel light flux, by the one axis actuator UAC, the red semiconductor laser LD2 is light-emitted. The divergent light flux projected from the red semiconductor laser LD2, as its path of ray is shown by a dotted line in Fig. 15, is reflected by the beam combiner BC, and when transmits the collimator optical system COL, after it is converted into almost parallel light flux, by transmitting the first lens EXP1, second lens EXP2, it is converted into the parallel light flux. After that, it becomes a spot formed on the information recording surface RL2 through the protective layer PL2 of DVD by the objective optical system OBJ".

Then, the objective optical system OBJ" conducts the focusing or tracking by the 2-axis actuator AC arranged in the periphery of it. The reflected light flux modulated by an information pit on the information recording surface RL1, passes again the objective optical system OBJ", second lens EXP2, first lens EXP1, and after it is converted into the converging light flux, by transmitting the collimator optical system COL, passes the beam combiner BC, sensor lens SEN, and is converged on the light receiving surface of the light detector PD123. Then, by using the output signal of the light detector PD123, the information recorded in DVD can be read.

Further, when the recording/reproducing of the information is conducted on CD, after the position in the optical axis direction of the first lens EXP1 is adjusted so that the third light flux is projected from the beam expander optical system EXP under the condition of the parallel light flux, by the one axis actuator UAC, the infrared semiconductor LD3 is light-emitted. The divergent light flux projected from the infrared semiconductor laser LD3, as its path of ray is shown by a two-dot chain line in Fig. 15, is reflected by the beam combiner BC, and after it is converted into almost parallel light flux by transmitting the collimator optical system COL, by transmitting the first lens EXP1, second lens EXP2, it is converted into the parallel light flux. After that, it becomes a spot formed on the information recording surface RL3 through the protective layer PL3 of CD by the objective optical system OBJ".

Then, the objective optical system OBJ" conducts the focusing or tracking by the 2-axis actuator AC arranged in the periphery of it. The reflected light flux modulated by an information pit on the information recording surface RL3, passes again the objective optical system OBJ", second lens EXP2, first lens EXP1, and when it transmits the collimator optical system COL, after it is converted into the converging light flux, passes the beam combiner BC, sensor lens SEN, and is converged on the light receiving surface of the light detector PD123. Then, by using the output signal of the light detector PD123, the information recorded in CD can be read.

Next, the structure of the objective optical system OBJ" will be described.

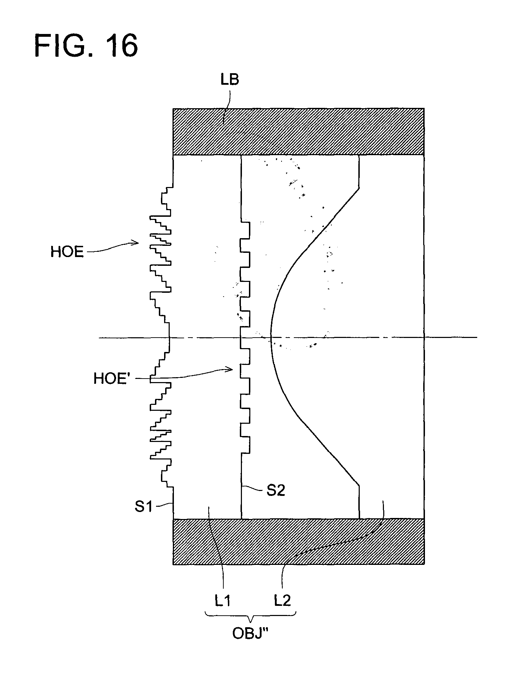

The objective optical system OBJ" is, as its general structural view is shown in Fig. 16, structured by the aberration correction element L1 and the light converging element L2 which has the function by which the laser light flux transmitted this aberration correction element L1 is light-converged on the information recording surface of the optical disk, and whose both surfaces are aspheric surfaces. Both of the aberration correction element L1 and the light converging element L2 are plastic lenses, and integrated through a mirror frame LB. Hereupon, as described above, in the peripheral portion of respective optical function sections of the aberration correction element L1 and the light converging element L2, flange portions FL1, FL2 integrally molded with the optical function section, are formed, and when mutual portions of one portion of flange sections FL1, FL2 are engaged with each other, they may also be integrated.

The optical function surface S1 on the light source side of the aberration correction element L1, is divided into the first area AREA1 corresponding to an area up to the numerical aperture 0.65 of DVD, and the second area AREA2 corresponding to an area from the numerical aperture 0.65 of DVD to the numerical aperture 0.85 of the high density optical disk HD, (not shown), and a step type diffractive structure HOE in which a plurality of ring-shaped zones inside of which the step structure is formed, are arranged around the optical axis, is formed in the first area AREA1.

The step type diffractive structure HOE is a structure for correcting the spherical aberration due to the difference of thickness of protective layers between the high density optical disk HD and DVD, and because its function or structure is the same as the step type diffractive structure HOE of above-described objective optical system OBJ, herein, the detailed description is omitted.

Further, in the objective optical system OBJ", the optical function surface S2 on the optical disk side of the aberration correction element L1, is divided into the third area AREA3 including the optical axis corresponding to an area within the numerical aperture 0.45 of CD, and the fourth area AREA4 corresponding to an area from the numerical aperture 0.45 of CD to the numerical aperture 0.85 of the high density optical disk HD, (not shown), and the step type diffractive structure HOE' which is a structure in which a plurality of ring-shaped zones inside of which the step structure is formed, are arranged around the optical axis, is formed in the third area AREA3.

In the step type diffractive structure HOE' formed in the third area AREA3, the depth d0 per one step formed in each ring-shaped zone, is set to a value calculated by $d0 = 5 \times \lambda 1/(n1 - 1)$ (μm), and the number of divisions N of each ring-shaped zone is set to 2. However, λ1 is a wavelength of the laser light flux projected from the blue violet semiconductor laser is expressed in micron unit, (herein, λ1 = 0.405 μm), and n1 is a refractive index to the wavelength λ1 of the aberration correction element L1, (herein, n1 = 1.5601).

When the laser light flux of wavelength λ1 is incident on this step type diffractive structure HOE', the optical path difference of $5 \times \lambda 1$ (μm) is generated between adjoining steps, and because the phase difference is not practically given to the laser light flux of wavelength λ1, it transmits as it is without being diffracted (0-order diffraction light).

Further, when the laser light flux of wavelength λ2 (herein, λ2 = 0.655 μm) projected from the red semiconductor laser is incident on this step type diffractive structure HOE', because $d0 \times (n2 -1)/\lambda 2 = 2.98 \approx 3$, the optical path difference of $3 \times \lambda 2$ (μm) is generated between adjoining steps, and because the phase difference is not practically given to the laser light flux of wavelength λ2 as the laser light flux of wavelength λ1, it transmits as it is without being diffracted (0-order diffraction light). Hereupon, n2 is a refractive index to the wavelength λ2 of the aberration correction element L2 (herein, n2 = 1.5407).

On the one hand, when the laser light flux of wavelength λ3 (herein, λ3 = 0.785 μm) projected from the infrared semiconductor laser is incident on this step type diffractive structure HOE', because $d0 \times (n3 -1)/\lambda 3 = 2.47 \approx 2.5$, the transmission wave-front between adjoining steps, is shifted by half wavelength, and almost of light amount of the third light flux incident on the step type diffractive structure HOE' is distributed to ± 1-order diffraction light. Hereupon, n3 is a refractive index to the wavelength λ3 of the aberration correction element L1 (herein, n3 = 1.5372). A pitch of ring-shaped zone of the step type diffractive structure HOE' is determined so that, in ± 1-order diffraction light, +1-order diffraction light is light-converged on the information recording surface RL3 of CD, and by the action of the step type diffractive structure HOE', the spherical aberration due to the difference of the thickness of the protective layer between the high density optical disk HD and CD, is corrected.

Further, because the step type diffractive structure HOE is formed in only an area within the numerical aperture NA2 of DVD, it is structured in such a manner that the light flux passes an area outside of NA2 becomes a flare component on the information recording surface RL2 of DVD, and the aperture limit to DVD is automatically conducted.

Further, because the step type diffractive structure HOE' is formed in only an area within the numerical aperture NA3 of CD, it is structured in such a manner that the light flux passes an area outside of NA3 becomes a flare component on the information recording surface RL3 of CD, and the aperture limit to CD is automatically conducted.

In the beam expander optical system EXP, the first lens EXP1 whose paraxial refractive power is negative, is a glass lens, and the second lens EXP2 whose paraxial refractive power is positive, is a plastic lens. The spherical aberration of the objective optical system OBJ" has the temperature dependency which, at the time of the recording/reproducing on the high density optical disk HD, changes in the over correction direction when the temperature rises by 30 °C, however, to the change amount of the spherical aberration following the temperature change, the refractive power of the second lens EXP2 is optimized, and in the same manner as in the first embodiment, the spherical aberration following the temperature change as the entire system of the optical system structured by the beam expander optical system EXP and the objective optical system OBJ" is corrected.

Further, in the optical pick-up device PU11 in the present embodiment, because the plastic lens (the second lens EXP2) in the beam expander optical system EXP is in the common optical path of the first light flux, second light flux and third light flux, when the objective optical system OBJ" has the temperature characteristic in which the spherical aberration changes in the over correction direction following the temperature rise at the time of the recording/reproducing of DVD or CD, by the action of the second lens EXP2, the temperature characteristic at the time of the recording/reproducing on DVD or CD, can also be corrected. Further, because the first lens EXP1 can be moved by the one axis actuator UAC, the spherical aberration can be corrected at the time of the recording/reproducing not only on the high density optical disk, but also on DVD and CD.

Further, because the second lens EXP2 of the beam expander optical system EXP can be shifted in the optical axis direction by the one axis actuator UAC, as described above, the focal distance of the beam expander optical system EXP can be adjusted so that light fluxes of respective wavelengths are projected from the beam expander optical system EXP under the condition of the parallel light flux.

In the present embodiment, it is structured in such a manner that the laser light source unit LD123 and the light detector PD123 are separately arranged, however, it is not limited to this, a laser light source module into which the laser light source unit LD123 and the light detector PD123 are integrated, may be used.

It is preferable because the reliability of the recording/reproducing of the optical pick-up device PU11 can be increased, that it is structured in such a manner that the diffractive structure is formed on the optical surface of the collimator optical system COL or beam expander optical system EXP, and the chromatic aberration in the blue violet wavelength area of the objective optical system OBJ" is corrected. When it is structured so that the chromatic aberration is corrected by the diffractive structure in this manner, the optical pick-up system in which the chromatic aberration is corrected by a simple structure, can be obtained.

Alternatively, instead of the above-described diffractive structure, a doublet lens in which a positive lens which has the positive refractive power and Abbe's number in d-ray is vd1, and a negative lens which has the negative refractive power and Abbe's number in d-ray is vd2 (vd2 < vd1), are cemented, may also be arranged as an element structuring at least one part of the collimator optical system COL or beam expander optical system EXP. When the shape of the diffractive structure is deviated from the design value by the production error, because the diffraction efficiency is lowered, the transmission of the optical pick-up system is lowered. However, when it is structured so that the chromatic aberration is corrected by such a refraction type doublet lens, although it is an optical system in which the chromatic aberration is corrected, the optical pick-up system in which the transmission is high, can be obtained.

Further, in the present embodiment, it is structured such that the collimator optical system COL and the beam expander optical system EXP are separately arranged, however, it is not limited to this, and it may also be structured in such a manner that the collimator optical system COL is omitted, and the divergent light flux projected from the laser light source unit LD123 is directly incident on the beam expander optical system EXP. Thereby, the reduction of the number of parts of the optical pick-up device PU11 becomes further possible.

Hereupon, the sensor lens SEN provided in the above optical pick-up devices PU1 - 3, 5 - 8, 10, 11, is a lens by which the astigmatism is given to the light flux reflected from the optical disk, which is toward the light detector.

Further, each of the above optical pick-up devices PU1 - 10 is provided with dichroic filter DFL by which the aperture limit when the recording/reproducing is conducted on CD, is conducted, and this dichroic filter DFL is driven by the two-axis actuator AC in the direction perpendicular to the optical axis, being integrated with the objective optical system through the holding member HM.

Hereupon, although the illustration is neglected, when the optical pick-up device shown in the above 1st - 11th embodiment, rotation drive device which rotatably holds the optical disk, and the control device for controlling the drive of each of these kinds of devices, are mounted, an optical information recording and/or reproducing apparatus by which at least one of the recording of the information on the optical disk and the reproducing of the information recorded in the optical disk can be conducted, can be obtained.

Next, an optical system preferable as the optical pick-up system mounted on the above-described optical pick-up devices PU1 - 11, will be described by listing specific numeral values.

The aspheric surface of the optical surface such as the optical surface on which the superposition type diffractive structure (step type diffractive structure) in each example and the diffractive structure are formed, or the optical surface on which the diffractive structure are formed, is, when the deformation amount from the plane tangent to the apex of its surface is X (mm), height of the direction perpendicular to the optical axis is h(mm), and radius of curvature is r(mm), expressed by the mathematical expression in which the coefficients in Table 2 - Table 9, which will be shown later, are substituted into the following expression (8). Where, $\kappa$ is a conical coefficient, and $A_{2i}$ is an aspheric surface coefficient.

$$X = \frac{h^2/r}{1+\sqrt{1-(1+\kappa)(h/r)^2}} + \sum_{i=2} A_{2i}h^{2i} \qquad (8)$$

In Table 2 -Table 12, NA is numerical aperture, $\lambda$(nm) is a design wavelength, f(mm) is a focal distance, m is a magnification of the objective lens entire system, t(mm)is a protective substrate thickness, r(mm) is a radius of curvature, Nλ is a refractive index at 25 °C to the design wavelength, and vd is Abbe's number in d-ray.

Further, the superposition type diffractive structure (step type diffractive structure) in each example, or the diffractive structure is expressed by an optical path difference added to the transmission wave front by these structures. Such an optical path difference is expressed by the optical path difference function ϕb (mm) defined by the following expression (9) when λ is a wavelength of an incident light flux, $\lambda_B$ is a designed wavelength, the height in the direction perpendicular to the optical axis is h (mm), $B_{2j}$ is an optical path difference function coefficient, and n is a diffraction order number.

$$\phi b = \lambda / \lambda_B \times n \times \sum_{j=0} B_{2j} h^{2j} \qquad (9)$$

Further, values of the above expressions (1), (3), (5), (6) in each of examples are shown in Table 1.

Table 1

| | Example 1 | Example 2 | Example 3 | Example 4 |
|---|---|---|---|---|
| (1) | 0.002 | 0.002 | 0.002 | 0.002 |
| (3) | 0.06 | 0.06 | 0.06 | 0.06 |
| (5) | 1.09 | 1.09 | 1.09 | 1.09 |
| (6) | $2.39\times10^{-6}$ | $2.39\times10^{-6}$ | $2.00\times10^{-6}$ | $2.55\times10^{-6}$ |

| | Example 5 | Example 6 | Example 7 | Example 8 |
|---|---|---|---|---|
| (1) | 0.002 | 0.002 | 0.002 | 0.003 |
| (3) | 0.06 | 0.06 | 0.06 | 0.06 |
| (5) | 1.09 | 1.09 | 1.09 | 1.09 |
| (6) | $2.39\times10^{-6}$ | $2.39\times10^{-6}$ | $2.31\times10^{-6}$ | $2.23\times10^{-6}$ |

| | Example 9 | Example 10 | Example 11 |
|---|---|---|---|
| (1) | 0.001 | 0.001 | 0.023 |
| (3) | - | - | 0.07 |
| (5) | - | - | 1.06 |
| (6) | - | - | $4.05\times10^{-6}$ |

(Example 1)

Example 1 is an optimum optical system as the optical pick-up system mounted on the first optical pick-up device PU1, and its specific numerical data is shown in Table 2.

Table 2-1

(Optical specification of the objective optical system)
HD: NA1 = 0.85, f1 = 2.200 mm, λ1 = 408 nm, m1 = 0, t1 = 0.0875 mm
DVD: NA2 = 0.67, f2 = 2.309 mm, λ2 = 658 nm, m2 = 0, t2 = 0.6 mm
CD: NA3 = 0.51, f3 = 2.281 mm, λ3 = 785 nm, m3 = -1/8.000, t3 = 1.2 mm

(Paraxial data)

| Surface No. | r (mm) | d1 (mm) | d2 (mm) | d3 (mm) | Nλ1 | Nλ2 | Nλ3 | νd | note |
|---|---|---|---|---|---|---|---|---|---|
| OBJ | - | ∞ | ∞ | 14.078 | | | | | light source |
| 1 | -4.706 | 0.800 | 0.800 | - | 1.63632 | 1.680886 | - | 44.4 | beam expander optical system |
| 2 | ∞ | 1.667 | 1.667 | - | | | | | |
| 3 | ∞ | 1.000 | 1.000 | - | 1.52424 | 1.50643 | - | 56.5 | |
| 4 | -5.351 | 2.000 | 2.000 | - | | | | | |
| 5 | ∞ | 5.000 | 5.000 | 5.000 | 1.52982 | 1.51427 | 1.51108 | 64.2 | beam combiner |
| 6 | ∞ | 2.000 | 2.000 | 2.000 | | | | | |
| STO | | 0.050 | 0.050 | 0.050 | | | | | stop |
| 8 | (lower table) | 0.900 | 0.900 | 0.900 | 1.52424 | 1.50643 | 1.50497 | 56.5 | objective optical system |
| 9 | (lower table) | 0.050 | 0.050 | 0.050 | | | | | |
| 10 | 1.445 | 2.510 | 2.510 | 2.510 | 1.55965 | 1.54062 | 1.53724 | 56.3 | |
| 11 | -4.540 | 0.679 | 0.477 | 0.330 | | | | | |
| 12 | ∞ | 0.0875 | 0.600 | 1.200 | 1.62110 | 1.57975 | 1.57326 | 30.0 | protective layer |
| 13 | ∞ | | | | | | | | |

(Aspheric surface coefficient of the 4th surface)

| | 4th surface |
|---|---|
| κ | -2.5251E-01 |
| A4 | 8.4097E-06 |

Table 2-2

(Paraxial radius of curvature, aspheric surface coefficient, diffraction order, production wavelength, optical path difference function coefficient of the 8th surface and the 9th surface)

| | The 8th surface | | The 9th surface | |
|---|---|---|---|---|
| | AREA1 (0≤h≤1.535) | AREA2 (1.535≤h) | AREA3 (0≤h≤1.53) | AREA4 (1.53≤h) |
| R | ∞ | 231.761 | -117.433 | -167.005 |
| κ | 0.0000E+00 | 0.0000E+00 | 0.0000E+00 | 9.6672E+01 |
| A4 | 0.0000E+00 | -1.2634E-04 | -2.3039E-03 | 1.0847E-03 |
| A6 | 0.0000E+00 | -1.4443E-03 | 3.1515E-03 | -2.2698E-04 |
| A8 | 0.0000E+00 | 6.3328E-04 | -2.1791E-04 | 4.0064E-04 |
| A10 | 0.0000E+00 | -68934E-05 | -5.9061E-05 | -1.3815E-05 |
| n1/n2/n3 | 0/+1/0 | - | +2/+1/+1 | +2/+1/+1 |
| λB | 658 nm | - | 390 nm | 408 nm |
| B2 | 4.7000E-03 | 0.0000E+00 | -5.3000E-03 | -5.2595E-03 |
| B4 | -5.5308E-04 | 0.0000E+00 | 5.6232E-04 | -3.8500E-04 |
| B6 | -2.5919E-04 | 0.0000E+00 | -7.7644E-04 | -2.8980E-04 |
| B8 | -2.0155E-05 | 0.0000E+00 | 5.1093E-05 | 5.6214E-05 |
| B10 | 2.0712E-07 | 0.0000E+00 | 1.4877E-05 | -1.4307E-05 |

(Aspheric surface coefficient of the 10th surface and the 11th surface)

| | The 10th surface | The 11th surface |
|---|---|---|
| κ | -6.6105E-01 | -1.5745E+02 |
| A4 | 1.1439E-02 | 1.0519E-01 |
| A6 | 2.5153E-03 | -1.1661E-01 |
| A8 | 8..3248E-06 | 1.0617E-01 |
| A10 | 2.9389E-04 | -7.0962E-02 |
| A12 | 6.6343E-05 | 2.7343E-02 |
| A14 | -4.2105E-05 | -4.3966E-03 |
| A16 | -3.6643E-06 | 0.0000E+00 |
| A18 | 7.9754E-06 | 0.0000E+00 |
| A20 | -1.2239E-06 | 0.0000E+00 |

In the present example, the beam expander optical system EXP which is composed of two lenses of a glass lens whose paraxial refractive power is negative, and a plastic lens whose paraxial refractive power is positive, is arranged in the common optical path of the wavelength λ1 and the wavelength λ2, further, the beam combiner for leading an optical path of the light flux having the wavelength λ3 into a common optical path of the light flux having the wavelength λ1 and the light flux having the wavelength λ2, is arranged in the optical path between the beam expander optical system EXP and the objective optical system OBJ.

The spherical aberration of the objective optical system OBJ in the present example has the temperature dependency in which, when the temperature rises by 30 °C, it changes in the over correction direction, and the change amount of the wave front aberration due to this, is 0.057 λRMS. When the objective optical system OBJ having such a temperature characteristic is combined with the beam expander optical system EXP, the change amount of the wave front aberration when the temperature rises by 30 °C, can be suppressed to 0.010 λRMS.

Hereupon, when the change amount of the wave-front aberration when the temperature changes is calculated, only the refractive index change following the temperature change of the plastic lens included in the optical system is considered, and the refractive index change rate of the plastic lens of the beam expander optical system EXP and the first plastic lens (aberration correction element L1) of the objective optical system OBJ is made $-1.1 \times 10^{-4}/°C$, and the refractive index change rate of the second plastic lens (light converging element L2) of the objective optical system OBJ is made $-0.9 \times 10^{-4}/°C$.
Further, when Abbe's number of the glass lens and the plastic lens in the beam expander optical system is set so as to satisfy the expression (2), because the achromatic operation is conducted on the wavelength $\lambda1$ and wavelength $\lambda2$, both of light fluxes of the wavelength $\lambda1$ and wavelength $\lambda2$ are projected from the beam expander optical system as the parallel light flux.
Hereupon, in the present example, when it is structured so that the parallel light flux of wavelength $\lambda2$ is incident on the objective optical system OBJ without through the beam expander optical system EXP, the optimum optical system as the optical pick-up system mounted on the fourth optical pick-up device PU4 can be obtained.

(Example 2)

Example 2 is the optimum optical system as the optical pick-up system mounted on the second optical pick-up device PU2, and its specific numeric value data is shown in Table 3.

Table 3-1

(Optical specification of the objective optical system)
HD: NA1 = 0.85, f1 = 2.200 mm, λ1 = 408 nm, m1 = 0, t1 = 0.0875 mm
DVD: NA2 = 0.67, f2 = 2.309 mm, λ2 = 658 nm, m2 = 0, t2 = 0.6 mm
CD: NA3 = 0.51, f3 = 2.281 mm, λ3 = 785 nm, m3 = -1/8.000, t3 = 1.2 mm
(Paraxial data)

| Surface No. | r (mm) | d1 (mm) | d2 (mm) | d3 (mm) | Nλ1 | Nλ2 | Nλ3 | νd | note |
|---|---|---|---|---|---|---|---|---|---|
| OBJ | - | ∞ | 5.143 | 14.078 | | | | | light source |
| 1 | -3.455 | 0.800 | - | - | 1.91174 | - | - | 23.8 | beam expander optical system |
| 2 | ∞ | 0.620 | - | - | | | | | |
| 3 | ∞ | 6.000 | 6.000 | - | 1.52982 | 1.51427 | - | 64.2 | beam combiner |
| 4 | ∞ | 0.800 | 0.800 | - | | | | | |
| 5 | ∞ | 1.000 | 1.000 | - | 1.52424 | 1.50643 | - | 56.5 | beam expander optical system |
| 6 | -5.351 | 2.000 | 2.000 | - | | | | | |
| 7 | ∞ | 5.000 | 5.000 | 5.000 | 1.52982 | 1.52427 | 1.51108 | 64.2 | beam combiner |
| 8 | ∞ | 2.000 | 2.000 | 2.000 | | | | | |
| STO | | 0.050 | 0.050 | 0.050 | | | | | stop |
| 10 | (lower table) | 0.900 | 0.900 | 0.900 | 1.52424 | 1.50643 | 1.50497 | 56.5 | objective optical system |
| 11 | (lower table) | 0.050 | 0.050 | 0.050 | | | | | |
| 12 | 1.445 | 2.510 | 2.510 | 2.510 | 1.55965 | 1.54062 | 1.53724 | 56.3 | |
| 13 | -4.540 | 0.679 | 0.477 | 0.330 | | | | | |
| 14 | ∞ | 0.0875 | 0.600 | 1.200 | 1.62110 | 1.57975 | 1.57326 | 30.0 | protective layer |
| 15 | ∞ | | | | | | | | |

(Aspheric surface coefficient of the 1st surface and 6th surface)

| | 1st surface | 6th surface |
|---|---|---|
| κ | -9.5297E+00 | -5.3270E-01 |
| A4 | 0.0000E+00 | -1.1750E-04 |

Table 3-2

(Paraxial radius of curvature, aspheric surface coefficient, diffraction order, production wavelength, optical path difference function coefficient of the 10th surface and the 11th surface)

| | The 10th surface | | The 11th surface | |
|---|---|---|---|---|
| | AREA1 (0≤h≤1.535) | AREA2 (1.535≤h) | AREA3 (0≤h≤1.53) | AREA4 (1.53≤h) |
| r | ∞ | 231.761 | -117.433 | -167.005 |
| κ | 0.0000E+00 | 0.0000E+00 | 0.0000E+00 | 9.6672E+01 |
| A4 | 0.0000E+00 | -1.2634E-04 | -2.3039E-03 | 1.0847E-03 |
| A6 | 0.0000E+00 | -1.4443E-03 | 3.1515E-03 | -2.2698E-04 |
| A8 | 0.0000E+00 | 6.3328E-04 | -2.1791E-04 | 4.0064E-04 |
| A10 | 0.0000E+00 | -68934E-05 | -5.9061E-05 | -1.3815E-05 |
| n1/n2/n3 | 0/+1/0 | - | +2/+1/+1 | +2/+1/+1 |
| λB | 658 nm | - | 390 nm | 408 nm |
| B2 | 4.7000E-03 | 0.0000E+00 | -5.3000E-03 | -5.2595E-03 |
| B4 | -5.5308E-04 | 0.0000E+00 | 5.6232E-04 | -3.8500E-04 |
| B6 | -2.5919E-04 | 0.0000E+00 | -7.7644E-04 | -2.8980E-04 |
| B8 | -2.0155E-05 | 0.0000E+00 | 5.1093E-05 | 5.6214E-05 |
| B10 | 2.0712E-07 | 0.0000E+00 | 1.4877E-05 | -1.4307E-05 |

(Aspheric surface coefficient of the 12th surface and the 13th surface)

| | The 12th surface | The 13th surface |
|---|---|---|
| κ | -6.6105E-01 | -1.5745E+02 |
| A4 | 1.1439E-02 | 1.0519E-01 |
| A6 | 2.5153E-03 | -1.1661E-01 |
| A8 | 8.3248E-06 | 1.0617E-01 |
| A10 | 2.9389E-04 | -7.0962E-02 |
| A12 | 6.6343E-05 | 2.7343E-02 |
| A14 | -4.2105E-05 | -4.3966E-03 |
| A16 | -3.6643E-06 | 0.0000E+00 |
| A18 | 7.9754E-06 | 0.0000E+00 |
| A20 | -1.2239E-06 | 0.0000E+00 |

In the present example, the beam expander optical system EXP is composed of two lenses of a glass lens whose paraxial refractive power is negative, and a plastic lens whose paraxial refractive power is positive, and in the optical path between the glass lens and the plastic lens, the beam combiner for leading an optical path of the light flux having the wavelength λ2 into the optical path of the light flux having the wavelength λ1, is arranged. In this optical system, the plastic lens in the beam expander optical system EXP has a function of the collimator optical system by which the divergent light flux of wavelength λ2 projected from the second light source LD2 is converted into the parallel light flux and introduced into the objective optical system OBJ. Further, in the optical path between the beam expander optical system EXP and the objective optical system OBJ, the beam combiner for leading an optical path of the light flux having the wavelength λ3 into a common optical path of the light flux having the wavelength λ1 and the light flux having the wavelength λ2 is arranged.

The objective optical system OBJ in the present example is the same as the objective optical system OBJ in the above-described example 1, and when the temperature rises by 30 °C, it has the temperature dependency in which the spherical aberration changes in the over correction direction, and due to this, the wave front aberration changes in 0.057 λRMS. When this objective optical system OBJ is combined with the beam expander optical system EXP, the change amount of the wave front aberration when the temperature rises by 30 °C, can be suppressed to 0.011 λRMS.

Hereupon, when the change amount of the wave-front aberration when the temperature changes is calculated, only the refractive index change following the temperature change of the plastic lens included in the optical system is considered, and the refractive index change rate of the plastic lens of the beam expander optical system EXP and the first plastic lens L1 of the objective optical system OBJ is made $-1.1 \times 10^{-4}$/°C , and the refractive index change rate of the second plastic lens L2 of the objective optical system OBJ is made $-0.9 \times 10^{-4}$/°C.

(Example 3)

Example 3 is the optimum optical system as the optical pick-up system mounted on the third optical pick-up device PU3, and its specific numeric value data is shown in Table 4.

Table 4-1

(Optical specification of the objective optical system)
HD: NA1 = 0.85, f1 = 2.200 mm, λ1 = 408 nm, m1 = 0, t1 = 0.0875 mm
DVD: NA2 = 0.67, f2 = 2.309 mm, λ2 = 658 nm, m2 = 0, t2 = 0.6 mm
CD: NA3 = 0.51, f3 = 2.281 mm, λ3 = 785 nm, m3 = -1/8.000, t3 = 1.2 mm
(Paraxial data)

| Surface No. | r (mm) | d1 (mm) | d2 (mm) | d3 (mm) | Nλ1 | Nλ2 | Nλ3 | νd | note |
|---|---|---|---|---|---|---|---|---|---|
| OBJ | - | ∞ | 10.000 | 14.078 | | | | | light source |
| 1 | -6.566 | - | 1.500 | - | - | 1.51427 | - | 64.2 | coupling optical system |
| 2 | -8.122 | - | 2.000 | - | - | | - | | |
| 3 | 11.915 | 1.000 | - | - | 1.52424 | - | - | 56.5 | beam expander optical system |
| 4 | ∞ | 1.750 | - | - | | | | | |
| 5 | ∞ | 6.000 | 6.000 | - | 1.52982 | 1.51427 | - | 64.2 | beam combiner |
| 6 | ∞ | 1.650 | 1.650 | - | | | | | |
| 7 | ∞ | 0.900 | 0.900 | - | 1.91174 | 1.83628 | - | 23.8 | beam expander optical system |
| 8 | 13.017 | 2.000 | 2.000 | - | | | | | |
| 9 | ∞ | 5.000 | 5.000 | 5.000 | 1.52982 | 1.51427 | 1.5111 | 64.2 | beam combiner |
| 10 | ∞ | 2.000 | 2.000 | 2.000 | | | | | |
| STO | | 0.050 | 0.050 | 0.050 | | | | | stop |
| 12 | (lower table) | 0.900 | 0.900 | 0.900 | 1.52424 | 1.50643 | 1.5050 | 56.5 | objective optical system |
| 13 | (lower table) | 0.050 | 0.050 | 0.050 | | | | | |
| 14 | 1.445 | 2.510 | 2.510 | 2.510 | 1.55965 | 1.54062 | 1.53724 | 56.3 | |
| 15 | -4.540 | 0.679 | 0.478 | 0.330 | | | | | |
| 16 | ∞ | 0.0875 | 0.600 | 1.200 | 1.62110 | 1.57975 | 1.57326 | 30.0 | protective layer |
| 17 | ∞ | | | | | | | | |

(Aspheric surface coefficient of the 1st surface and 2nd surface)

| | 1st surface | 2nd surface |
|---|---|---|
| κ | -2.7700E+00 | -1.5927E+00 |

(Aspheric surface coefficient of the 3rd surface and 8th surface)

| | 3rd surface | 8th surface |
|---|---|---|
| κ | -2.5571E+00 | 5.5695E+00 |
| A4 | 2.6719E-04 | 7.8569E-05 |

Table 4-2

(Paraxial radius of curvature, aspheric surface coefficient, diffraction order, production wavelength, optical path difference function coefficient of the 12th surface and the 13th surface)

| | The 12th surface | | The 13th surface | |
|---|---|---|---|---|
| | AREA1 (0≤h≤1.535) | AREA2 (1.535≤h) | AREA3 (0≤h≤1.53) | AREA4 (1.53≤h) |
| r | ∞ | 231.761 | -117.433 | -167.005 |
| κ | 0.0000E+00 | 0.0000E+00 | 0.0000E+00 | 9.6672E+01 |
| A4 | 0.0000E+00 | -1.2634E-04 | -2.3039E-03 | 1.0847E-03 |
| A6 | 0.0000E+00 | -1.4443E-03 | 3.1515E-03 | -2.2698E-04 |
| A8 | 0.0000E+00 | 6.3328E-04 | -2.1791E-04 | 4.0064E-04 |
| A10 | 0.0000E+00 | -68934E-05 | -5.9061E-05 | -1.3815E-05 |
| n1/n2/n3 | 0/+1/0 | - | +2/+1/+1 | +2/+1/+1 |
| λB | 658 nm | - | 390 nm | 408 nm |
| B2 | 4.7000E-03 | 0.0000E+00 | -5.3000E-03 | -5.2595E-03 |
| B4 | -5.5308E-04 | 0.0000E+00 | 5.6232E-04 | -3.8500E-04 |
| B6 | -2.5919E-04 | 0.0000E+00 | -7.7644E-04 | -2.8980E-04 |
| B8 | -2.0155E-05 | 0.0000E+00 | 5.1093E-05 | 5.6214E-05 |
| B10 | 2.0712E-07 | 0.0000E+00 | 1.4877E-05 | -1.4307E-05 |

(Aspheric surface coefficient of the 14th surface and the 15th surface)

| | The 14th surface | The 15th surface |
|---|---|---|
| κ | -6.6105E-01 | -1.5745E+02 |
| A4 | 1.1439E-02 | 1.0519E-01 |
| A6 | 2.5153E-03 | -1.1661E-01 |
| A8 | 8.3248E-06 | 1.0617E-01 |
| A10 | 2.9389E-04 | -7.0962E-02 |
| A12 | 6.6343E-05 | 2.7343E-02 |
| A14 | -4.2105E-05 | -4.3966E-03 |
| A16 | -3.6643E-06 | 0.0000E+00 |
| A18 | 7.9754E-06 | 0.0000E+00 |
| A20 | -1.2239E-06 | 0.0000E+00 |

In the present example, the beam expander optical system EXP is composed of two lenses of a plastic lens whose paraxial refractive power is positive, and a glass lens whose paraxial refractive power is negative, and in the optical path between the glass lens and the plastic lens, the beam combiner for leading an optical path of the light flux having the wavelength λ2 into the optical path of the light flux having the wavelength λ1, is arranged. In this optical system, the divergent light flux of wavelength λ2 projected from the second light source LD2 is converted into the converging light flux by the coupling optical system, furthermore, by passing the glass lens in the beam expander optical system EXP, it becomes the parallel light. Further, in the optical path between the beam expander optical system EXP and the objective optical system OBJ, the beam combiner for leading an optical path of the light flux having the wavelength λ3 into a common optical path of the light flux having the wavelength λ1 and the light flux having the wavelength λ2, is arranged.

The objective optical system OBJ in the present example is the same as the objective optical system OBJ in the above-described example 1, and when the temperature rises by 30 °C, it has the temperature dependency in which the spherical aberration changes in the over correction direction, and due to this, the wave front aberration changes in 0.057 λRMS. When this objective optical system OBJ is combined with the beam expander optical system EXP, the change amount of the wave front aberration when the temperature rises by 30 °C, can be suppressed to 0.011 λRMS.

Hereupon, in the case where the change amount of the wave-front aberration when the temperature changes, is calculated, only the refractive index change following the temperature change of the plastic lens included in the optical system is considered, and the refractive index change rate of the plastic lens in the beam expander optical system EXP and the first plastic lens L1 of the objective optical system OBJ is made $-1.1 \times 10^{-4}$/°C, and the refractive index change rate of the second plastic lens L2 of the objective optical system OBJ is made $-0.9 \times 10^{-4}$/°C.

(Example 4)

Example 4 is the optimum optical system as the optical pick-up system mounted on the fourth optical pick-up device PU4, and its specific numeric value data is shown in Table 5.

Table 5-1

(Optical specification of the objective optical system)
HD: NA1 = 0.85, f1 = 2.200 mm, λ1 = 408 nm, m1 = 0, t1 = 0.0875 mm
DVD: NA2 = 0.67, f2 = 2.309 mm, λ2 = 658 nm, m2 = 0, t2 = 0.6 mm
CD: NA3 = 0.51, f3 = 2.281 mm, λ3 = 785 nm, m3 = -1/8.000, t3 = 1.2 mm
(Paraxial data)

| Surface No. | r (mm) | d1 (mm) | d2 (mm) | d3 (mm) | Nλ1 | Nλ2 | Nλ3 | νd | note |
|---|---|---|---|---|---|---|---|---|---|
| OBJ | - | 19.344 | ∞ | 14.078 | | | | | light source |
| 1 | ∞ | 1.000 | - | - | 1.52424 | - | - | 56.5 | collimator optical system |
| 2 | -10.485 | 3.000 | - | - | | | - | | |
| 3 | -7.157 | 0.800 | - | - | 1.63632 | - | - | 44.4 | beam expander optical system |
| 4 | ∞ | 2.993 | - | - | | | | | |
| 5 | ∞ | 1.000 | - | - | 1.52424 | - | - | 56.5 | |
| 6 | -8.065 | 5.000 | - | - | | | | | |
| 7 | ∞ | 5.000 | 5.000 | - | 1.52982 | 1.51427 | - | 64.2 | beam combiner |
| 8 | ∞ | 2.000 | 2.000 | - | | | | | |
| 9 | ∞ | 5.000 | 5.000 | 5.000 | 1.52982 | 1.51427 | 1.51108 | 64.2 | beam combiner |
| 10 | ∞ | 2.000 | 2.000 | 2.000 | | | | | |
| STO | | 0.050 | 0.050 | 0.050 | | | | | stop |
| 12 | (lower table) | 0.900 | 0.900 | 0.900 | 1.52424 | 1.50643 | 1.50497 | 56.5 | objective optical system |
| 13 | (lower table) | 0.050 | 0.050 | 0.050 | | | | | |
| 14 | 1.445 | 2.510 | 2.510 | 2.510 | 1.55965 | 1.54062 | 1.53724 | 56.3 | |
| 15 | -4.540 | 0.679 | 0.477 | 0.330 | | | | | |
| 16 | ∞ | 0.0875 | 0.600 | 1.200 | 1.62110 | 1.57975 | 1.57326 | 30.0 | protective layer |
| 17 | ∞ | | | | | | | | |

(Aspheric surface coefficient of the 2nd surface and 6th surface)

| | 2nd surface | 6th surface |
|---|---|---|
| κ | -5.8308E-01 | -1.4843E-01 |
| A4 | 0.0000E+00 | 2.8854E-05 |

Table 5-2

(Paraxial radius of curvature, aspheric surface coefficient, diffraction order, production wavelength, optical path difference function coefficient of the 12th surface and the 13th surface)

| | The 12th surface | | The 13th surface | |
|---|---|---|---|---|
| | AREA1 (0≤h≤1.535) | AREA2 (1.535≤h) | AREA3 (0≤h≤1.53) | AREA4 (1.53≤h) |
| r | ∞ | 231.761 | -117.433 | -167.005 |
| κ | 0.0000E+00 | 0.0000E+00 | 0.0000E+00 | 9.6672E+01 |
| A4 | 0.0000E+00 | -1.2634E-04 | -2.3039E-03 | 1.0847E-03 |
| A6 | 0.0000E+00 | -1.4443E-03 | 3.1515E-03 | -2.2698E-04 |
| A8 | 0.0000E+00 | 6.3328E-04 | -2.1791E-04 | 4.0064E-04 |
| A10 | 0.0000E+00 | -68934E-05 | -5.9061E-05 | -1.3815E-05 |
| n1/n2/n3 | 0/+1/0 | - | +2/+1/+1 | +2/+1/+1 |
| λB | 658 nm | - | 390 nm | 408 nm |
| B2 | 4.7000E-03 | 0.0000E+00 | -5.3000E-03 | -5.2595E-03 |
| B4 | -5.5308E-04 | 0.0000E+00 | 5.6232E-04 | -3.8500E-04 |
| B6 | -2.5919E-04 | 0.0000E+00 | -7.7644E-04 | -2.8980E-04 |
| B8 | -2.0155E-05 | 0.0000E+00 | 5.1093E-05 | 5.6214E-05 |
| B10 | 2.0712E-07 | 0.0000E+00 | 1.4877E-05 | -1.4307E-05 |

(Aspheric surface coefficient of the 14th surface and the 15th surface)

| | The 14th surface | The 15th surface |
|---|---|---|
| κ | -6.6105E-01 | -1.5745E+02 |
| A4 | 1.1439E-02 | 1.0519E-01 |
| A6 | 2.5153E-03 | -1.1661E-01 |
| A8 | 8.3248E-06 | 1.0617E-01 |
| A10 | 2.9389E-04 | -7.0962E-02 |
| A12 | 6.6343E-05 | 2.7343E-02 |
| A14 | -4.2105E-05 | -4.3966E-03 |
| A16 | -3.6643E-06 | 0.0000E+00 |
| A18 | 7.9754E-06 | 0.0000E+00 |
| A20 | -1.2239E-06 | 0.0000E+00 |

In the present example, the collimator optical system COL is composed of a plastic lens whose paraxial refractive power is positive, and arranged in the exclusive use optical path of wavelength λ1. Further, the beam expander optical system EXP is composed of the glass lens whose paraxial refractive power is negative, and the plastic lens whose paraxial refractive power is positive, and arranged in the exclusive use optical path of wavelength λ1. Further, in the optical path of the beam expander optical system EXP and the objective optical system OBJ, the beam combiner for leading an optical path of the light flux having the wavelength λ2 into the optical path of the light flux having the wavelength λ1, and the beam combiner for leading an optical path of the light flux having the wavelength λ3 into a common optical path of the light flux having the wavelength λ1 and the light flux having the wavelength λ2, are arranged.

The objective optical system OBJ in the present example, has the temperature dependency in which, when the temperature rises by 30 °C, the spherical aberration changes in the over correction direction, and due to this, the wave front aberration changes in 0.057 λRMS. When this objective optical system OBJ is combined with the beam expander optical system EXP, the change amount of the wave front aberration when the temperature rises by 30 °C, can be suppressed to 0.011 λRMS. In this manner, when the collimator optical system COL composed of the plastic lens is combined with the beam expander optical system EXP, because the refractive power of the plastic lens necessary for correcting the temperature characteristic of the objective optical system OBJ can be distributed to the collimator optical system COL, the degree of freedom of the lens design (selection of the angle magnification) of the expander optical system EXP is increased.

Hereupon, in the case where the change amount of the wave-front aberration when the temperature changes is calculated, only the refractive index change following the temperature change of the plastic lens included in the optical system is considered, and the refractive index change rate of the plastic lens of the collimator optical system COL, plastic lens of the beam expander optical system EXP and the first plastic lens L1 of the objective optical system OBJ is made $-1.1 \times 10^{-4}$/°C, and the refractive index change rate of the second plastic lens L2 of the objective optical system OBJ is made $-0.9 \times 10^{-4}$/°C.

(Example 5)

Example 5 is the optimum optical system as the optical pick-up system mounted on the sixth optical pick-up device PU6, and its specific numeric value data is shown in Table 6.

Table 6-1

(Optical specification of the objective optical system)
HD: NA1 = 0.85, f1 = 2.200 mm, λ1 = 408 nm, m1 = 0, t1 = 0.0875 mm
DVD: NA2 = 0.67, f2 = 2.309 mm, λ2 = 658 nm, m2 = 0, t2 = 0.6 mm
CD:NA3 = 0.51, f3 = 2.281 mm, λ3 = 785 nm, m3 = -1/8.000, t3 = 1.2 mm
(Paraxial data)

| Surface No. | r (mm) | d1 (mm) | d2 (mm) | d3 (mm) | Nλ1 | Nλ2 | Nλ3 | νd | note |
|---|---|---|---|---|---|---|---|---|---|
| OBJ | - | 5.910 | 5.910 | 14.078 | | | | | light source |
| 1 | ∞ | 6.000 | 6.000 | - | 1.52982 | 1.51427 | - | 64.2 | beam combiner |
| 2 | ∞ | 1.865 | 1.865 | - | | | - | | |
| 3 | -12.257 | 0.900 | 0.900 | - | 2.00589 | 1.91012 | - | 20.9 | coupling optical system |
| 4 | ∞ | 3.135 | 3.135 | - | | | | | |
| 5 | ∞ | 1.000 | 1.000 | - | 1.52424 | 1.50643 | - | 56.5 | |
| 6 | -5.351 | 1.000 | 1.000 | - | | | | | |
| 7 | ∞ | 5.000 | 5.000 | 5.000 | 1.52982 | 1.51427 | 1.51108 | 64.2 | beam combiner |
| 8 | ∞ | 2.000 | 2.000 | 2.000 | | | | | |
| STO | | 0.050 | 0.050 | 0.050 | | | | | stop |
| 10 | (lower table) | 0.900 | 0.900 | 0.900 | 1.52424 | 1.50643 | 1.50497 | 56.5 | objective optical system |
| 11 | (lower table) | 0.050 | 0.050 | 0.050 | | | | | |
| 12 | 1.445 | 2.510 | 2.510 | 2.510 | 1.55965 | 1.54062 | 1.53724 | 56.3 | |
| 13 | -4.540 | 0.679 | 0.477 | 0.330 | | | | | |
| 14 | ∞ | 0.0875 | 0.600 | 1.200 | 1.62110 | 1.57975 | 1.57326 | 30.0 | protective layer |
| 15 | ∞ | | | | | | | | |

(Aspheric surface coefficient of the 3rd surface and 6th surface)

| | 3rd surface | 6th surface |
|---|---|---|
| κ | -7.7020E+00 | -2.5251E-01 |
| A4 | -1.2052E-03 | 8.4097E-06 |

Table 6-2

(Paraxial radius of curvature, aspheric surface coefficient, diffraction order, production wavelength, optical path difference function coefficient of the 10th surface and the 11th surface)

| | The 10th surface | | The 11th surface | |
|---|---|---|---|---|
| | AREA1 (0≤h≤1.535) | AREA2 (1.535≤h) | AREA3 (0≤h≤1.53) | AREA4 (1.53≤h) |
| r | ∞ | 231.761 | -117.433 | -167.005 |
| κ | 0.0000E+00 | 0.0000E+00 | 0.0000E+00 | 9.6672E+01 |
| A4 | 0.0000E+00 | -1.2634E-04 | -2.3039E-03 | 1.0847E-03 |
| A6 | 0.0000E+00 | -1.4443E-03 | 3.1515E-03 | -2.2698E-04 |
| A8 | 0.0000E+00 | 6.3328E-04 | -2.1791E-04 | 4.0064E-04 |
| A10 | 0.0000E+00 | -68934E-05 | -5.9061E-05 | -1.3815E-05 |
| n1/n2/n3 | 0/+1/0 | - | +2/+1/+1 | +2/+1/+1 |
| λB | 658 nm | - | 390 nm | 408 nm |
| B2 | 4.7000E-03 | 0.0000E+00 | -5.3000E-03 | -5.2595E-03 |
| B4 | -5.5308E-04 | 0.0000E+00 | 5.6232E-04 | -3.8500E-04 |
| B6 | -2.5919E-04 | 0.0000E+00 | -7.7644E-04 | -2.8980E-04 |
| B8 | -2.0155E-05 | 0.0000E+00 | 5.1093E-05 | 5.6214E-05 |
| B10 | 2.0712E-07 | 0.0000E+00 | 1.4877E-05 | -1.4307E-05 |

(Aspheric surface coefficient of the 12th surface and the 13th surface)

| | The 12th surface | The 13th surface |
|---|---|---|
| κ | -6.6105E-01 | -1.5745E+02 |
| A4 | 1.1439E-02 | 1.0519E-01 |
| A6 | 2.5153E-03 | -1.1661E-01 |
| A8 | 8.3248E-06 | 1.0617E-01 |
| A10 | 2.9389E-04 | -7.0962E-02 |
| A12 | 6.6343E-05 | 2.7343E-02 |
| A14 | -4.2105E-05 | -4.3966E-03 |
| A16 | -3.6643E-06 | 0.0000E+00 |
| A18 | 7.9754E-06 | 0.0000E+00 |
| A20 | -1.2239E-06 | 0.0000E+00 |

In the present example, the coupling optical system CUL which is composed of 2 lenses of a glass lens whose paraxial refractive power is negative, and a plastic lens whose paraxial refractive power is positive, is arranged in the common optical path of wavelength λ1 and wavelength λ2. Further, a beam combiner for leading an optical path of the light flux having the wavelength λ3 into a common optical path of the light flux having the wavelength λ1 and the light flux having the wavelength λ2, is arranged in the optical path between the coupling optical system CUL and the objective optical system OBJ. Further, a beam combiner for leading the light flux of wavelength λ1 reflected by an information recording surface of an optical disk and the light flux of wavelength λ2 reflected by an information recording surface of an optical disk, into the light detector, is arranged in the optical path between a package light source unit in which the light emitting point for projecting the light flux of wavelength λ1 and the light emitting point for projecting the light flux of wavelength λ2 are housed in a casing, and the coupling optical system CUL.

Further, when Abbe's number of the glass lens and the plastic lens is set so as to satisfy the expression (2), because the achromatic operation is conducted on the wavelength λ1 and the wavelength λ2, both of the fluxes of the wavelength λ1 and the wavelength λ2, are projected from the coupling optical system CUL as the parallel light flux.

Hereupon, in the case where the spherical aberration of the objective optical system OBJ in the present example, has the temperature dependency in which, when the temperature rises by 30 °C, it changes in the over correction direction, and the change amount of the wave-front aberration due to this is 0.057 λRMS. When the objective optical system OBJ having such a temperature characteristic is combined with the coupling optical system CUL, the change amount of the wave-front aberration when the temperature rises by 30 °C, can be suppressed to 0.010 λRMS.

Hereupon, in the case where the change amount of the wave-front aberration when the temperature changes is calculated, only the refractive index change following the temperature change of the plastic lens included in the optical system is considered, and the refractive index change rate of the plastic lens of the coupling optical system CUL, and the first plastic lens L1 of the objective optical system OBJ is made $-1.1 \times 10^{-4}$/°C , and the refractive index change rate of the second plastic lens L2 of the objective optical system OBJ is made $-0.9 \times 10^{-9}$/°C.

(Example 6)

Example 6 is the optimum optical system as the optical pick-up system mounted on the 7th optical pick-up device PU7, and its specific numeric value data is shown in Table 7.

Table 7-1

(Optical specification of the objective optical system)
HD: NA1 = 0.85, f1 = 2.200 mm, $\lambda 1$ = 408 nm, m1 = 0, t1 = 0.0875 mm
DVD: NA2 = 0.67, f2 = 2.309 mm, $\lambda 2$ = 658 nm, m2 = 0, t2 = 0.6 mm
CD:NA3 = 0.51, f3 = 2.281 mm, $\lambda 3$ = 785 nm, m3 = -1/8.000, t3 = 1.2 mm
(Paraxial data)

| Surface No. | r (mm) | d1 (mm) | d2 (mm) | d3 (mm) | $N\lambda 1$ | $N\lambda 2$ | $N\lambda 3$ | $\nu d$ | note |
|---|---|---|---|---|---|---|---|---|---|
| OBJ | - | 0.916 | 2.297 | 14.078 | | | | | light source |
| 1 | 2.124 | 0.500 | - | - | 1.52982 | - | - | 64.2 | coupling optical system |
| 2 | ∞ | 0.500 | - | - | | | - | | |
| 3 | ∞ | 5.000 | 5.000 | - | 1.52982 | 1.51427 | - | 64.2 | beam combiner |
| 4 | ∞ | 0.500 | 0.500 | - | | | | | |
| 5 | ∞ | 1.000 | 1.000 | - | 1.52424 | 1.50643 | - | 56.5 | coupling optical system |
| 6 | -5.351 | 2.000 | 2.000 | - | | | | | |
| 7 | ∞ | 5.000 | 5.000 | 5.000 | 1.52982 | 1.51427 | 1.51108 | 64.2 | beam combiner |
| 8 | ∞ | 2.000 | 2.000 | 2.000 | | | | | |
| STO | | 0.050 | 0.050 | 0.050 | | | | | stop |
| 10 | (lower table) | 0.900 | 0.900 | 0.900 | 1.52424 | 1.50643 | 1.50497 | 56.5 | objective optical system |
| 11 | (lower table) | 0.050 | 0.050 | 0.050 | | | | | |
| 12 | 1.445 | 2.510 | 2.510 | 2.510 | 1.55965 | 1.54062 | 1.53724 | 56.3 | |
| 13 | -4.540 | 0.679 | 0.477 | 0.330 | | | | | |
| 14 | ∞ | 0.088 | 0.600 | 1.200 | 1.62110 | 1.57975 | 1.57326 | 30.0 | protective layer |
| 15 | ∞ | | | | | | | | |

(Aspheric surface coefficient of the 1st surface and 6th surface)

| | 1st surface | 6th surface |
|---|---|---|
| κ | 0.0000E+00 | -1.6367E+00 |
| A4 | -2.8085E-01 | -9.3718E-04 |

Table 7-2

(Paraxial radius of curvature, aspheric surface coefficient, diffraction order, production wavelength, optical path difference function coefficient of the 10th surface and the 11th surface)

| | The 10th surface | | The 11th surface | |
|---|---|---|---|---|
| | AREA1 (0≤h≤1.535) | AREA2 (1.535≤h) | AREA3 (0≤h≤1.53) | AREA4 (1.53≤h) |
| r | ∞ | 231.761 | -117.433 | -167.005 |
| κ | 0.0000E+00 | 0.0000E+00 | 0.0000E+00 | 9.6672E+01 |
| A4 | 0.0000E+00 | -1.2634E-04 | -2.3039E-03 | 1.0847E-03 |
| A6 | 0.0000E+00 | -1.4443E-03 | 3.1515E-03 | -2.2698E-04 |
| A8 | 0.0000E+00 | 6.3328E-04 | -2.1791E-04 | 4.0064E-04 |
| A10 | 0.0000E+00 | -68934E-05 | -5.9061E-05 | -1.3815E-05 |
| n1/n2/n3 | 0/+1/0 | - | +2/+1/+1 | +2/+1/+1 |
| λB | 658 nm | - | 390 nm | 408 nm |
| B2 | 4.7000E-03 | 0.0000E+00 | -5.3000E-03 | -5.2595E-03 |
| B4 | -5.5308E-04 | 0.0000E+00 | 5.6232E-04 | -3.8500E-04 |
| B6 | -2.5919E-04 | 0.0000E+00 | -7.7644E-04 | -2.8980E-04 |
| B8 | -2.0155E-05 | 0.0000E+00 | 5.1093E-05 | 5.6214E-05 |
| B10 | 2.0712E-07 | 0.0000E+00 | 1.4877E-05 | -1.4307E-05 |

(Aspheric surface coefficient of the 12th surface and the 13th surface)

| | The 12th surface | The 13th surface |
|---|---|---|
| κ | -6.6105E-01 | -1.5745E+02 |
| A4 | 1.1439E-02 | 1.0519E-01 |
| A6 | 2.5153E-03 | -1.1661E-01 |
| A8 | 8.3248E-06 | 1.0617E-01 |
| A10 | 2.9389E-04 | -7.0962E-02 |
| A12 | 6.6343E-05 | 2.7343E-02 |
| A14 | -4.2105E-05 | -4.3966E-03 |
| A16 | -3.6643E-06 | 0.0000E+00 |
| A18 | 7.9754E-06 | 0.0000E+00 |
| A20 | -1.2239E-06 | 0.0000E+00 |

In the present example, the coupling optical system CUL is composed of 2 lenses of a glass lens whose paraxial refractive power is negative, and a plastic lens whose paraxial refractive power is positive, and a beam combiner for leading an optical path of the light flux having the wavelength λ2 into the optical path of the light flux having the wavelength λ1, and a beam combiner for leading the light flux of wavelength λ1 reflected by an information recording surface of an optical disk and the light flux of wavelength λ2 reflected by an information recording surface of an optical disk, into the light detector, are arranged in the optical path of the plastic lens and glass lens. Further, between the coupling optical system CUL and the objective optical system OBJ, a beam combiner for leading an optical path of the light flux having the wavelength λ3 into a common optical path of the light flux having the wavelength λ1 and the light flux having the wavelength λ2, is arranged.

The spherical aberration of the objective optical system OBJ in the present example, has the temperature dependency in which, when the temperature rises by 30 °C, the spherical aberration changes in the over correction direction, and a change amount of the wave-front aberration due to this, is 0.057 λRMS. When the objective optical system OBJ having such a temperature characteristic is combined with the coupling lens optical system CUL, the change amount of the wave front aberration when the temperature rises by 30 °C, can be suppressed to 0.011 λRMS.

Hereupon, in the case where the change amount of the wave-front aberration when the temperature changes is calculated, only the refractive index change following the temperature change of the plastic lens included in the optical system is considered, and the refractive index change rate of the plastic lens of the coupling optical system CUL, and the first plastic lens L1 of the objective optical system OBJ is made $-1.1 \times 10^{-4}$/°C, and the refractive index change rate of the second plastic lens L2 of the objective optical system OBJ is made $-0.9 \times 10^{-4}$/°C.

(Example 7)

Example 7 is the optimum optical system as the optical pick-up system mounted on the 8th optical pick-up device PU8, and its specific numeric value data is shown in Table 8.

Table 8-1

(Optical specification of the objective optical system)
HD: NA1 = 0.85, f1 = 2.200 mm, $\lambda 1$ = 408 nm, m1 = 0, t1 = 0.0875 mm
DVD: NA2 = 0.67, f2 = 2.309 mm, $\lambda 2$ = 658 nm, m2 = 0, t2 = 0.6 mm
CD:NA3 = 0.51, f3 = 2.281 mm, $\lambda 3$ = 785 nm, m3 = -1/8.000, t3 = 1.2 mm
(Paraxial data)

| Surface No. | r (mm) | d1 (mm) | d2 (mm) | d3 (mm) | Nλ1 | Nλ2 | Nλ3 | νd | note |
|---|---|---|---|---|---|---|---|---|---|
| OBJ | - | 8.773 | 10.150 | 14.078 | | | | | light source |
| 1 | ∞ | 4.000 | - | - | 1.5298 | - | - | 64.2 | beam combiner |
| 2 | ∞ | 1.000 | - | - | | - | - | | |
| 3 | -1.265 | 1.000 | - | - | 1.52982 | - | - | 64.2 | coupling optical system |
| 4 | 5.497 | 0.500 | - | - | 1.52424 | - | - | 56.5 | |
| 5 | -2.366 | 1.000 | - | - | | | | | |
| 6 | ∞ | 4.000 | 4.000 | - | 1.52982 | 1.51427 | - | 64.2 | beam combiner |
| 7 | ∞ | 2.000 | 1.000 | - | | | - | | |
| 8 | ∞ | 1.000 | 1.000 | - | 1.52982 | 1.51427 | - | 64.2 | coupling optical system |
| 9 | -7.947 | 2.000 | 2.000 | - | | | | | |
| 10 | ∞ | 5.000 | 5.000 | 5.000 | 1.52982 | 1.51427 | 1.51108 | 64.2 | beam combiner |
| 11 | ∞ | 2.000 | 2.000 | 2.000 | | | | | |
| STO | ∞ | 0.050 | 0.050 | 0.050 | | | | | stop |
| 13 | (lower table) | 0.900 | 0.900 | 0.900 | 1.52424 | 1.50643 | 1.50497 | 56.5 | objective optical system |
| 14 | (lower table) | 0.050 | 0.050 | 0.050 | | | | | |
| 15 | 1.445 | 2.510 | 2.510 | 2.510 | 1.55965 | 1.54062 | 1.53724 | 56.3 | |
| 16 | -4.540 | 0.679 | 0.477 | 0.330 | | | | | |
| 17 | ∞ | 0.088 | 0.600 | 1.200 | 1.62110 | 1.57975 | 1.57326 | 30.0 | protective layer |
| 18 | ∞ | | | | | | | | |

(Aspheric surface coefficient of the 3rd, 5th surface and 9th surface)

| | 3rd surface | 5th surface | 9th surface |
|---|---|---|---|
| κ | -3.6453E-01 | -1.7076E+00 | -1.6355E+00 |
| A4 | 4.8345E-02 | -3.8940E-03 | -2.6725E-04 |
| A6 | 4.2961E-03 | 0.0000E+00 | 0.0000E+00 |

Table 8-2

(Paraxial radius of curvature, aspheric surface coefficient, diffraction order, production wavelength, optical path difference function coefficient of the 13th surface and the 14th surface)

| | The 13th surface | | The 14th surface | |
|---|---|---|---|---|
| | AREA1 (0≤h≤1.535) | AREA2 (1.535≤h) | AREA3 (0≤h≤1.53) | AREA4 (1.53≤h) |
| R | ∞ | 231.761 | -117.433 | -167.005 |
| κ | 0.0000E+00 | 0.0000E+00 | 0.0000E+00 | 9.6672E+01 |
| A4 | 0.0000E+00 | -1.2634E-04 | -2.3039E-03 | 1.0847E-03 |
| A6 | 0.0000E+00 | -1.4443E-03 | 3.1515E-03 | -2.2698E-04 |
| A8 | 0.0000E+00 | 6.3328E-04 | -2.1791E-04 | 4.0064E-04 |
| A10 | 0.0000E+00 | -68934E-05 | -5.9061E-05 | -1.3815E-05 |
| n1/n2/n3 | 0/+1/0 | - | +2/+1/+1 | +2/+1/+1 |
| λB | 658 nm | - | 390 nm | 408 nm |
| B2 | 4.7000E-03 | 0.0000E+00 | -5.3000E-03 | -5.2595E-03 |
| B4 | -5.5308E-04 | 0.0000E+00 | 5.6232E-04 | -3.8500E-04 |
| B6 | -2.5919E-04 | 0.0000E+00 | -7.7644E-04 | -2.8980E-04 |
| B8 | -2.0155E-05 | 0.0000E+00 | 5.1093E-05 | 5.6214E-05 |
| B10 | 2.0712E-07 | 0.0000E+00 | 1.4877E-05 | -1.4307E-05 |

(Aspheric surface coefficient of the 15th surface and the 16th surface)

| | The 14th surface | The 15th surface |
|---|---|---|
| κ | -6.6105E-01 | -1.5745E+02 |
| A4 | 1.1439E-02 | 1.0519E-01 |
| A6 | 2.5153E-03 | -1.1661E-01 |
| A8 | 8.3248E-06 | 1.0617E-01 |
| A10 | 2.9389E-04 | -7.0962E-02 |
| A12 | 6.6343E-05 | 2.7343E-02 |
| A14 | -4.2105E-05 | -4.3966E-03 |
| A16 | -3.6643E-06 | 0.0000E+00 |
| A18 | 7.9754E-06 | 0.0000E+00 |
| A20 | -1.2239E-06 | 0.0000E+00 |

In the present example, a coupling optical system CUL is structured by a cemented lens which a glass lens whose paraxial refractive power is negative, and a plastic lens whose paraxial refractive power is positive, are adhered to each other, and a glass lens whose paraxial refractive power is positive, and a beam combiner for leading an optical path of the light flux having the wavelength λ2 into the optical path of the light flux having the wavelength λ1, is arranged in the optical path between the cemented lens and the glass lens. Further, a beam combiner for leading the light flux of wavelength λ1 reflected on the optical disk into the light detector, is arranged in the optical path of the light flux having the wavelength λ1 between the light source which projects the light flux having the wavelength λ1 and the coupling optical system CUL, and a beam combiner for leading an optical path of the light flux having the wavelength λ3 into a common optical path of the light flux having the wavelength λ1 and the light flux having the wavelength λ2, is arranged between the coupling optical system CUL and the objective optical system OBJ.

The spherical aberration of the objective optical system OBJ in the present example, has the temperature dependency in which, when the temperature rises by 30 °C, the spherical aberration changes in the over correction direction, and a change amount of the wave-front aberration due to this, is 0.057 λRMS. When the objective optical system OBJ having such a temperature characteristic is combined with the coupling lens optical system CUL, the change amount of the wave-front aberration when the temperature rises by 30 °C, can be suppressed to 0.011 λRMS.

Hereupon, in the case where the change amount of the wave-front aberration when the temperature changes is calculated, only the refractive index change following the temperature change of the plastic lens included in the optical system is considered, and the refractive index change rate of the plastic lens of the coupling optical system CUL, and the first plastic lens L1 of the objective optical system OBJ is made $-1.1 \times 10^{-4}$/°C, and the refractive index change rate of the second plastic lens L2 of the objective optical system OBJ is made $-0.9 \times 10^{-4}$/°C.

(Example 8)

Example 8 is the optimum optical system as the optical pick-up system mounted on the 9th optical pick-up device PU9, and its specific numeric value data is shown in Table 9.

Table 9-1

(Optical specification of the objective optical system)
HD: NA1 = 0.85, f1 = 2.200 mm, λ1 = 408 nm, m1 = 0, t1 = 0.0875 mm
DVD: NA2 = 0.67, f2 = 2.295 mm, λ2 = 658 nm, m2 = 0, t2 = 0.6 mm
CD:NA3 = 0.51, f3 = 2.281 mm, λ3 = 785 nm, m3 = -1/8.000, t3 = 1.2 mm
(Paraxial data)

| Surface No. | r (mm) | d1 (mm) | d2 (mm) | d3 (mm) | Nλ1 | Nλ2 | Nλ3 | νd | note |
|---|---|---|---|---|---|---|---|---|---|
| OBJ | - | 2.913 | ∞ | 14.078 | | | | | light source |
| 1 | -1.139 | 1.000 | - | - | 1.52982 | - | - | 64.2 | coupling optical system |
| 2 | ∞ | 3.822 | - | - | | - | - | | |
| 3 | ∞ | 1.000 | - | - | 1.52424 | - | - | 56.5 | |
| 4 | -3.339 | 3.000 | - | - | | - | | | |
| 5 | ∞ | 4.000 | 4.000 | - | 1.52982 | 1.51427 | - | 64.2 | beam combiner |
| 6 | ∞ | 2.000 | 2.000 | - | | | - | | |
| 9 | ∞ | 5.000 | 5.000 | 5.000 | 1.52982 | 1.51427 | 1.51108 | 64.2 | beam combiner |
| 10 | ∞ | 2.000 | 2.000 | 2.000 | | | | | |
| STO | | 0.050 | 0.050 | 0.050 | | | | | stop |
| 12 | (lower table) | 0.900 | 0.900 | 0.900 | 1.52424 | 1.50643 | 1.50497 | 56.5 | objective optical system |
| 13 | (lower table) | 0.050 | 0.050 | 0.050 | | | | | |
| 14 | 1.445 | 2.510 | 2.510 | 2.510 | 1.55965 | 1.54062 | 1.53724 | 56.3 | |
| 15 | -4.540 | 0.679 | 0.477 | 0.330 | | | | | |
| 16 | ∞ | 0.088 | 0.600 | 1.200 | 1.62110 | 1.57975 | 1.57326 | 30.0 | protective layer |
| 17 | ∞ | | | | | | | | |

(Aspheric surface coefficient of the 1st and 4th surface)

| | 1st surface | 4th surface |
|---|---|---|
| κ | -1.6834E-01 | -6.1462E-01 |
| A4 | 9.8260E-02 | -1.4287E-04 |

Table 9-2

(Paraxial radius of curvature, aspheric surface coefficient, diffraction order, production wavelength, optical path difference function coefficient of the 12th surface and the 13th surface)

| | The 12th surface | | The 13th surface | |
|---|---|---|---|---|
| | AREA1 (0≤h≤1.535) | AREA2 (1.535≤h) | AREA3 (0≤h≤1.53) | AREA4 (1.53≤h) |
| R | ∞ | -3431.888 | -19.673 | -167.005 |
| κ | 0.0000E+00 | 0.0000E+00 | 0.0000E+00 | 4.2160E+01 |
| A4 | 0.0000E+00 | -1.4023E-03 | 2.4400E-05 | -1.5823E-03 |
| A6 | 0.0000E+00 | -1.5832E-03 | 1.3535E-05 | 3.4952E-04 |
| A8 | 0.0000E+00 | 6.0208E-04 | -5.8340E-07 | 1.5269E-04 |
| A10 | 0.0000E+00 | -7.2771E-01 | -1.0092E-06 | -3.3372E-05 |
| n1/n2/n3 | 0/+1/0 | - | | |
| λB | 658 nm | - | | |
| B2 | 4.7000E-03 | 0.0000E+00 | 0.0000E+00 | 0.0000E+00 |
| B4 | -8.2490E-04 | 0.0000E+00 | 0.0000E+00 | 0.0000E+00 |
| B6 | -2.8735E-05 | 0.0000E+00 | 0.0000E+00 | 0.0000E+00 |
| B8 | -4.1288E-05 | 0.0000E+00 | 0.0000E+00 | 0.0000E+00 |
| B10 | -3.3076E-06 | 0.0000E+00 | 0.0000E+00 | 0.0000E+00 |

(Aspheric surface coefficient of the 14th surface and the 15th surface)

| | The 14th surface | The 15th surface |
|---|---|---|
| κ | -6.6211E-01 | -1.5745E+02 |
| A4 | 1.1439E-02 | 1.0519E-01 |
| A6 | 2.5153E-03 | -1.1661E-01 |
| A8 | 8.3248E-06 | 1.0617E-01 |
| A10 | 2.9389E-04 | -7.0962E-02 |
| A12 | 6.6343E-05 | 2.7343E-02 |
| A14 | -4.2105E-05 | -4.3966E-03 |
| A16 | -3.6643E-06 | 0.0000E+00 |
| A18 | 7.9754E-06 | 0.0000E+00 |
| A20 | -1.2239E-06 | 0.0000E+00 |

In the present example, a coupling optical system CUL structured by a glass lens whose paraxial refractive power is negative, and a plastic lens whose paraxial refractive power is positive, is arranged in the exclusive use optical path of the wavelength λ1, and the beam combiner for leading the optical path of the light flux having the wavelength λ2 into the optical path of the light flux having the wavelength λ1, and the beam combiner for composing the optical path of the light flux having the wavelength λ3 into the optical path of the light flux having the wavelength λ1, are arranged between the coupling lens optical system CUL and the objective optical system OBJ.

The spherical aberration of the objective optical system OBJ in the present example, has the temperature dependency in which, when the temperature rises by 30 °C, the spherical aberration changes in the over correction direction, and a change amount of the wave-front aberration due to this, is 0.085 λRMS. When the objective optical system OBJ having such a temperature characteristic is combined with the coupling lens optical system CUL, the change amount of the wave-front aberration when the temperature rises by 30 °C, can be suppressed to 0.007 λRMS.

Hereupon, in the case where the change amount of the wave-front aberration when the temperature changes is calculated, only the refractive index change following the temperature change of the plastic lens included in the optical system is considered, and the refractive index change rate of the plastic lens of the coupling optical system CUL, and the first plastic lens L1 of the objective optical system OBJ is made $-1.1 \times 10^{-4}/°C$, and the refractive index change rate of the second plastic lens L2 of the objective optical system OBJ is made $-0.9 \times 10^{-4}/°C$.

Hereupon, in the above-described examples 1 - 7, when one lens in the aberration correction optical system is moved in the optical axis direction, the spherical aberration due to the thickness error (production error) of the protective layer PL1 of the high density optical disk HD, and the spherical aberration due to the wavelength change of the wavelength $\lambda 1$ can be corrected.

(Example 9)

Example 9 is the optimum optical system as the optical pick-up system mounted on the 5th optical pick-up device PU5, and its specific numeric value data is shown in Table 10.

Table 10-1

(Optical specification of the objective optical system)
HD: NA1 = 0.67, f1 = 3.100 mm, $\lambda 1$ = 407 nm, m1 = 0, t1 = 0.6 mm
DVD: NA2 = 0.66, f2 = 3.186 mm, $\lambda 2$ = 655 nm, m2 = 0, t2 = 0.6 mm
CD: NA3 = 0.50, f3 = 3.164 mm, $\lambda 3$ = 785 nm, m3 = -1/33.898, t3 = 1.2 mm
(Paraxial data)

| Surface No. | r (mm) | d1 (mm) | d2 (mm) | d3 (mm) | Nλ1 | Nλ2 | Nλ3 | νd | note |
|---|---|---|---|---|---|---|---|---|---|
| OBJ | - | ∞ | ∞ | ∞ | | | | | light source |
| 1 | -2.464 | 1.000 | 1.000 | 1.000 | 1.63126 | 1.59882 | 1.59299 | 38.0 | beam expander optical system |
| 2 | -15.882 | 1.531 | 1.531 | 1.164 | | - | - | | |
| 3 | ∞ | 1.000 | 1.000 | 1.000 | 1.52439 | 1.50650 | 1.50497 | 56.5 | |
| 4 | -4.034 | 5.000 | 5.000 | 5.000 | | - | | | |
| STO | | 0.100 | 0.100 | 0.100 | | | - | | stop |
| 6 | 2.036 | 1.730 | 1.730 | 1.730 | 1.55981 | 1.54073 | 1.53724 | 56.3 | objective optical system |
| 7 | -13.537 | 1.716 | 1.780 | 1.425 | | | | | |
| 8 | ∞ | 0.600 | 0.600 | 1.200 | 1.61869 | 1.57752 | 1.57063 | 30.0 | protective layer |
| 9 | ∞ | | | | | | | | |

(Aspheric surface coefficient of the 1st, 2nd and 4th surface)

| | 1st surface | 2nd surface | 4th surface |
|---|---|---|---|
| κ | -9.9422E-02 | 0.0000E+00 | -3.7470E-01 |
| A2 | -4.0360E-03 | -5.8271E-03 | 9.8171E-04 |
| A4 | 5.7483E-04 | 0.0000E+00 | 1.5030E-04 |

Table 10-2

(Diffraction order, production wavelength, optical path difference function coefficient of the 6th surface)

| 6th surface | |
|---|---|
| n1/n2/n3 | 3/2/2 |
| λB | 422 nm |
| B2 | -3.4312E-03 |
| B4 | -1.9486E-04 |
| B6 | -1.2076E-04 |
| B8 | 2.7998E-05 |
| B10 | -3.3455E-06 |

(Aspheric surface coefficient of the 6th surface and the 7th surface)

| | The 6th surface | The 7th surface |
|---|---|---|
| κ | -4.4715E-01 | -4.1355E+02 |
| A4 | -7.2396E-04 | -9.4311E-03 |
| A6 | -1.3187E-03 | 1.1572E-02 |
| A8 | 5.4370E-04 | -5.3553E-03 |
| A10 | -1.0983E-04 | 1.2651E-03 |
| A12 | 8.5286E-06 | -1.5851E-04 |

A beam expander optical system EXP composed of a glass lens whose paraxial refractive power is negative, and a plastic lens whose paraxial refractive power is positive, is arranged in the common optical path of the wavelength λ1, wavelength λ2 and wavelength λ3, further, when Abbe's number of the glass lens and plastic lens in the beam expander optical system is set to satisfy the expression (2), because the achromatic operation is conducted on the wavelength λ1 and wavelength λ2, both of the light fluxes of wavelength λ1 and wavelength λ2 are projected as the parallel light flux from the beam expander optical system. The spherical aberration of the objective optical system OBJ' in the present example, has the temperature dependency in which, when the temperature rises by 30 °C, the spherical aberration changes in the over correction direction, and a change amount of the wave-front aberration due to this, is 0.027 λRMS. When the objective optical system OBJ' having such a temperature characteristic is combined with the beam expander optical system EXP, the change amount of the wave-front aberration when the temperature rises by 30 °C, can be suppressed to 0.005 λRMS.

Hereupon, in the case where the change amount of the wave-front aberration when the temperature changes is calculated, only the refractive index change following the temperature change of the plastic lens included in the optical system is considered, and the refractive index change rate of the plastic lens of the beam expander optical system EXP is made $-1.1 \times 10^{-4}$/°C, and the refractive index change rate of the objective optical system OBJ' is made $-0.9 \times 10^{-4}$/°C.

(Example 10)

Example 10 is the optimum optical system as the optical pick-up system mounted on the 10th optical pick-up device PU10, and its specific numeric value data is shown in Table 11.

Table 11-1

(Optical specification of the objective optical system)
HD: NA1 = 0.67, f1 = 3.100 mm, $\lambda 1$ = 407 nm, m1 = 0, t1 = 0.6 mm
DVD: NA2 = 0.66, f2 = 3.186 mm, $\lambda 2$ = 655 nm, m2 = 0, t2 = 0.6 mm
CD: NA3 = 0.50, f3 = 3.164 mm, $\lambda 3$ = 785 nm, m3 = -1/33.898, t3 = 1.2 mm
(Paraxial data)

| Surface No. | r (mm) | d1 (mm) | d2 (mm) | d3 (mm) | Nλ1 | Nλ2 | Nλ3 | νd | note |
|---|---|---|---|---|---|---|---|---|---|
| OBJ | - | 7.484 | 7.484 | 7.484 | | | | | light source |
| 1 | ∞ | 5.000 | 5.000 | 5.000 | 2.00686 | 1.91057 | 1.89585 | 20.9 | beam combiner |
| 2 | ∞ | 1.613 | 1.613 | 2.018 | | | | | |
| 3 | -2.854 | 1.000 | 1.000 | 1.000 | 1.91247 | 1.83665 | 1.82450 | 23.8 | coupling optical system |
| 4 | -6.089 | 1.631 | 1.631 | 1.226 | | | | | |
| 5 | ∞ | 1.000 | 1.000 | 1.000 | 1.52439 | 1.50650 | 1.50497 | 56.5 | |
| 6 | -4.034 | 10.000 | 10.000 | 10.000 | | | | | |
| STO | | 0.100 | 0.100 | 0.100 | | | | | stop |
| 8 | 2.036 | 1.730 | 1.730 | 1.730 | 1.55981 | 1.54073 | 1.53724 | 56.3 | objective optical system |
| 9 | -13.537 | 1.716 | 1.780 | 1.425 | | | | | |
| 10 | ∞ | 0.600 | 0.600 | 1.200 | 1.61869 | 1.57752 | 1.57063 | 30.0 | protective layer |
| 11 | ∞ | | | | | | | | |

(Aspheric surface coefficient of the 1st, 2nd and 4th surface)

| | 1st surface | 2nd surface | 4th surface |
|---|---|---|---|
| κ | 0.0000E+00 | 2.1107E+00 | -3.7470E-01 |
| A2 | -2.5193E-03 | -1.5804E-03 | 9.8171E-04 |
| A4 | 1.9254E-03 | 2.2241E-04 | 1.5030E-04 |
| A6 | 1.0639E-04 | 0.0000E+00 | 0.0000E+00 |
| A8 | -4.4734E-05 | 0.0000E+00 | 0.0000E+00 |

Table 11-2

(Diffraction order, production wavelength, optical path difference function coefficient of the 8th surface)

| 8th surface | |
|---|---|
| n1/n2/n3 | 3/2/2 |
| λB | 422 nm |
| B2 | -3.4312E-03 |
| B4 | -1.9486E-04 |
| B6 | -1.2076E-04 |
| B8 | 2.7998E-05 |
| B10 | -3.3455E-06 |

(Aspheric surface coefficient of the 8th surface and the 9th surface)

| | The 8th surface | The 9th surface |
|---|---|---|
| κ | -4.4715E-01 | -4.1355E+02 |
| A4 | -7.2396E-04 | -9.4311E-03 |
| A6 | -1.3187E-03 | 1.1572E-02 |
| A8 | 5.4370E-04 | -5.3553E-03 |
| A10 | -1.0983E-04 | 1.2651E-03 |
| A12 | 8.5286E-06 | -1.5851E-04 |

A coupling optical system CUL composed of two lenses of a glass lens whose paraxial refractive power is negative, and a plastic lens whose paraxial refractive power is positive, is arranged in the common optical path of the wavelength λ1, wavelength λ2 and wavelength λ3, further, in the optical path between a package unit in which a light emitting point projecting the light flux of the wavelength λ1, a light emitting point projecting the light flux of wavelength λ2 and a light emitting point projecting the flux of wavelength λ3, are housed in a casing, and the coupling optical system CUL, the beam combiner for guiding the light fluxes of the wavelength λ1, wavelength λ2 and wavelength λ3, reflected on the information recording surface, to the light detector, is arranged.

Further, when Abbe's number of the glass lens and plastic lens in the coupling optical system is set to satisfy the expression (2), because the achromatic operation is conducted on the wavelength λ1 and wavelength λ2, both of the light fluxes of wavelength λ1 and wavelength λ2 are projected as the parallel light flux from the coupling optical system CUL.

The spherical aberration of the objective optical system OBJ' in the present example, has the temperature dependency in which, when the temperature rises by 30 °C, the spherical aberration changes in the over correction direction, and a change amount of the wave-front aberration due to this, is 0.027 λRMS. When the objective optical system OBJ' having such a temperature characteristic is combined with the coupling optical system CUL, the change amount of the wave-front aberration when the temperature rises by 30 °C, can be suppressed to 0.006 λRMS.

Hereupon, in the case where the change amount of the wave-front aberration when the temperature changes is calculated, only the refractive index change following the temperature change of the plastic lens included in the optical system is considered, and the refractive index change rate of the plastic lens of the coupling optical system CUL is made $-1.1 \times 10^{-4}/°C$, and the refractive index change rate of the objective optical system OBJ' is made $-0.9 \times 10^{-4}/°C$.

(Example 11)

Example 11 is the optimum optical system as the optical pick-up system mounted on the 11th optical pick-up device PU11, and its specific numeric value data is shown in Table 12.

Table 12-1

(Optical specification of the objective optical system)
HD: NA1 = 0.85, f1 = 1.757 mm, $\lambda 1$ = 405 nm, m1 = 0, t1 = 0.1 mm
DVD: NA2 = 0.65, f2 = 1.840 mm, $\lambda 2$ = 658 nm, m2 = 0, t2 = 0.6 mm
CD: NA3 = 0.45, f3 = 2.155 mm, $\lambda 3$ = 785 nm, m3 = 0, t3 = 1.2 mm
(Paraxial data)

| Surface No. | r (mm) | d1 (mm) | d2 (mm) | d3 (mm) | Nλ1 | Nλ2 | Nλ3 | νd | note |
|---|---|---|---|---|---|---|---|---|---|
| OBJ | - | ∞ | ∞ | ∞ | | | | | light source |
| 1 | -3.4049 | 0.7000 | 0.7000 | 0.7000 | 1.751661 | 1.752168 | 1.719911 | 54.7 | beam expander optical system |
| 2 | 9.5732 | 3.0000 | 3.1200 | 3.1400 | | | | | |
| 3 | 27.7648 | 1.2000 | 1.2000 | 1.2000 | 1.560131 | 1.540725 | 1.537237 | 56.3 | |
| 4 | -4.6613 | 5.0000 | 5.0000 | 5.0000 | | | | | |
| STO | | 0.0500 | 0.0500 | 0.0500 | | | | | stop |
| 8 | ∞ | 0.8000 | 0.8000 | 0.8000 | 1.560131 | 1.540725 | 1.537237 | 56.3 | objective optical system |
| 9 | -14.0929 | 0.0500 | 0.0500 | 0.0500 | | | | | |
| 10 | 1.1616 | 1.9800 | 1.9800 | 1.9800 | 1.560131 | 1.540725 | 1.537237 | 56.3 | |
| 11 | -3.9164 | 0.5300 | 0.3117 | 0.3003 | | | | | |
| 12 | ∞ | 0.1000 | 0.6000 | 1.2000 | 1.622304 | 1.579954 | 1.573263 | 30.0 | protective layer |
| 13 | ∞ | | | | | | | | |

Table 12-2

(Aspheric surface coefficient, diffraction order, production wavelength, optical path difference function coefficient of the 8th surface and the 9th surface)

| | The 8th surface | | The 9th surface | |
|---|---|---|---|---|
| | AREA1 (0≤h≤1.190) | AREA2 (1.190≤h) | AREA3 (0≤h≤0.940) | AREA4 (0.940≤h) |
| κ | 0.0000E+00 | 0.0000E+00 | 0.528924E-01 | -0.130502E+01 |
| A4 | 0.0000E+00 | 0.0000E+00 | -0.410090E-02 | 0.617147E-04 |
| A6 | 0.0000E+00 | 0.0000E+00 | 0.100353E-01 | 0.175499E-04 |
| A8 | 0.0000E+00 | 0.0000E+00 | -0.669400E-02 | -0.652673E-05 |
| A10 | 0.0000E+00 | 0.0000E+00 | 0.310085E-02 | 0.181652E-05 |
| n1/n2/n3 | 0/+1/0 | - | 0/0/+1 | 0/0/+1 |
| λB | 655 nm | - | 785 nm | 785 nm |
| B2 | 0.800000E-02 | 0.0000E+00 | 0.528924E-01 | 0.0000E+00 |
| B4 | 0.186116E-02 | 0.0000E+00 | -0.410090E-02 | 0.0000E+00 |
| B6 | -0.230843E-04 | 0.0000E+00 | 0.100353E-01 | 0.0000E+00 |
| B8 | -0.267698E-03 | 0.0000E+00 | -0.669400E-02 | 0.0000E+00 |
| B10 | -0.224201E-04 | 0.0000E+00 | 0.310085E-02 | 0.0000E+00 |

(Aspheric surface coefficient of the 1st surface, 4th surface, 10th surface and the 11th surface)

| | 1st surface | 4th surface | 10th surface | 11th surface |
|---|---|---|---|---|
| κ | -3.677247 | -0.383635 | -0.663257 | -185.58931 |
| A4 | -0.875823E-02 | 0.242809E-03 | 0.232973E-01 | 0.191559E+00 |
| A6 | 0.000000E+00 | 0.000000E+00 | 0.785151E-02 | -0.315129E+00 |
| A8 | 0.000000E+00 | 0.000000E+00 | 0.179949E-03 | 0.451528E+00 |
| A10 | 0.000000E+00 | 0.000000E+00 | 0.222687E-02 | -0.491609E+00 |
| A12 | 0.000000E+00 | 0.000000E+00 | 0.858993E-03 | 0.307272E+00 |
| A14 | 0.000000E+00 | 0.000000E+00 | -0.844095E-03 | -0.793252E-01 |
| A16 | 0.000000E+00 | 0.000000E+00 | -0.761684E-04 | 0.000000E+00 |
| A18 | 0.000000E+00 | 0.000000E+00 | 0.364860E-03 | 0.000000E+00 |
| A20 | 0.000000E+00 | 0.000000E+00 | -0.879315E-04 | 0.000000E+00 |

A beam expander optical system EXP composed of two lenses of a glass lens whose paraxial refractive power is negative, and a plastic lens whose paraxial refractive power is positive, is arranged in the common optical path of the wavelength λ1, wavelength λ2 and wavelength λ3. Further, corresponding to the wavelength of the incident light flux, when the position in the optical axis direction of the glass lens (the first lens EXP1) in the beam expander optical system EXP is adjusted by the one axis actuator UAC, the first light flux to the third light flux are projected from the beam expander optical system EXP under the condition of the parallel light flux.

The spherical aberration of the objective optical system OBJ" in the present example, has the temperature dependency in which, when the temperature rises by 30 °C at the time of the recording/reproducing of the information on the high density optical disk HD, the spherical aberration changes in the over correction direction, and a change amount of the wave-front aberration due to this, is 0.068 λRMS. When the objective optical system OBJ" having such a temperature characteristic is combined with the beam expander optical system EXP, the change amount of the wave-front aberration when the temperature rises by 30 °C, can be suppressed to 0.029 λRMS.

Hereupon, in the case where the change amount of the wave-front aberration when the temperature changes is calculated, only the refractive index change following the temperature change of the plastic lens included in the optical system is considered, and the refractive index change rate of the plastic lens (the second lens EXP2) in the beam expander optical system EXP, and the refractive index change rate of the objective optical system OBJ" are made $-0.9 \times 10^{-4}/°C$.

In the optical system of Example 1, when the interval between the glass lens and plastic lens of the beam EXP is changed, a result in which the spherical aberration is corrected to the thickness change (thickness error) of the protective layer PL1 of the high density optical disk HD, is shown in Fig. 13.

Further, in the optical system of Example 1, when the interval between the glass lens and plastic lens of the coupling optical system CUL is changed, a result in which the spherical aberration is corrected to the change of wavelength $\lambda 1$, is shown in Fig. 14.

From these results, it is found that the optical system of Examples 1 - 8, is superior also for the recording/reproducing of 2-layer disk, further, it has a sufficient allowance for the oscillation wavelength of the blue violet semiconductor laser light source LD1.

In embodiments and Examples described above, the optical pick-up system and optical pick-up device in which the recording/reproducing can be conducted on three kinds of optical disks of the high density optical disk HD, DVD and CD, are described as examples, however, it can be easily understood that the present invention can be applied to the optical pick-up system and optical pick-up device by which the recording/reproducing can be conducted on two kinds of optical disks of the high density optical disk HD and DVD, or two kinds of optical disks of the high density optical disk HD and CD.

For example, they can be structured, while the optical system factor necessary for the recording/reproducing of those two kinds of optical disks is remained, by deleting the other optical factors, thereby, the optical pick-up system and optical pick-up device in which the size reduction, weight reduction, cost reduction, and structure simplification, are further made, can be realized.

It is to be noted that various changes and modifications will be apparent to those skilled in the art. Therefore, unless such changes and modifications depart from the scope of the present invention, they should be construed as being included therein.

## Claims

**1.** An optical pick-up system comprising:

a first light source for projecting a first light flux having a wavelength of not more than 450 nm;
a second light source for projecting a second light flux having a wavelength within a range of 630 nm to 680 nm;
an objective optical system for converging the first light flux projected from the first light source on an information recording surface of a first optical disk which having a first recording density, and for converging a second light flux projected from the second light source on an information recording surface of a second optical disk having a second recording density which is different from the first recording density, wherein the objective optical system has at least a plastic lens having a positive paraxial refractive power, and wherein a ratio $\Delta SA/\Delta T$ of a change of a spherical aberration to a temperature change of the objective optical system when the first light flux passes through the objective optical system for recording or reproducing information onto or from the first optical disk, satisfies the following expression (1); and
an aberration correction optical system having at least two lens groups, and being arranged in an optical path between the first light source and the objective optical system, wherein the aberration correction optical system has a plastic lens having a positive paraxial refractive power and a glass lens.

$$\Delta SA/\Delta T > 0 \quad (1)$$

**2.** The optical pick-up system of claim 1, further comprising a coupling optical system, which is arranged in an optical path between the first light source and the aberration correction optical system,

wherein when the first light flux having a divergent angle enters onto the coupling optical system, the coupling optical system emits a light flux having a divergent angle which is smaller than an incident light flux of the first light flux,

wherein the glass lens of the aberration correction optical system has a negative paraxial refractive power, and

wherein the aberration correction optical system is a beam expander optical system which changes a diameter of the first light flux.

3. The optical pick-up system of claim 2, wherein the beam expander optical system is arranged in a common optical path of the first light flux and the second light flux.

4. The optical pick-up system of claim 2, further comprising a beam combiner for leading an optical path of the first light flux and an optical path of the second light flux into a common optical path,
wherein the coupling optical system, the glass lens in the beam expander optical system, the beam combiner, the plastic lens in the beam expander optical system, and the objective optical system are arranged in that order from the first light source side.

5. The optical pick-up system of claim 2, further comprising a beam combiner for leading an optical path of the first light flux and an optical path of the second light flux into a common optical path,
wherein the coupling optical system, the plastic lens of the beam expander optical system, the beam combiner, the glass lens in the beam expander optical system, and the objective optical system are arranged in that order from the first light source side.

6. The optical pick-up system of claim 2, wherein the beam expander optical system is arranged in an exclusive optical path for the first light flux.

7. The optical pick-up system of claim 2, wherein the coupling optical system has at least one plastic lens having a positive paraxial refractive power.

8. The optical pick-up system of claim 3, wherein a magnification $m_1$ of the objective optical system for the first light flux when the first light flux passes through the objective optical system for recording or reproducing information onto or from the first optical disk, and a magnification $m_2$ of the objective optical system for the second light flux when the second light flux passes through the objective optical system for recording or reproducing information onto or from the second optical disk, are approximately same, and Abbe's number $\nu_{dN}$ of the glass lens in the beam expander optical system, and Abbe's number $\nu_{dP}$ of the plastic lens in the beam expander optical system, satisfy the following expression (2).

$$\nu_{dp} > V_{dN} \quad (2)$$

9. The optical pick-up system of claim 1, wherein the aberration correction optical system is a coupling optical system, and
wherein when the first light flux having a divergent angle enters onto the coupling optical system, the coupling optical system emits a light flux having a divergent angle which is smaller than the incident light flux of the first light flux.

10. The optical pick-up system of claim 9, wherein the coupling optical system is arranged in a common optical path of the first light flux and the second light flux.

11. The optical pick-up system of claim 9, further comprising a beam combiner for leading an optical path of the first light flux and an optical path of the second light flux into a common optical path,
wherein the glass lens in the coupling optical system, the beam combiner, the plastic lens in the coupling optical system, and the objective optical system are arranged in that order from the first light source side.

12. The optical pick-up system of claim 9, further comprising a beam combiner for leading an optical path of the first light flux and an the second light flux into a common path,
wherein the glass lens in the coupling optical system has a positive paraxial refractive power, and
wherein the plastic lens in the coupling optical system, the beam combiner, the glass lens in the coupling optical system, and the objective optical system are arranged in that order from the first light source side.

13. The optical pick-up system of claim 9, wherein the coupling optical system is arranged in an exclusive optical path for the first light flux.

14. The optical pick-up system of claim 10, wherein a magnification $m_1$ of the objective optical system for the first light flux when the first light flux passes through the objective optical system for recording or reproducing information onto or from the first optical disk, and a magnification $m_2$ of the objective optical system for the second light flux when the second light flux passes through the objective optical system for recording or reproducing information onto or from the second optical disk, are approximately same,

wherein the glass lens in the coupling optical system has a negative paraxial refractive power, and

wherein Abbe's number $\nu_{dN}$ of the glass lens in the coupling optical system, and Abbe's number $\nu_{dP}$ of the plastic lens in the coupling optical system, satisfy the following expression (2).

$$\nu_{dp} > \nu_{dN} \qquad (2)$$

**15.** The optical pick-up system of claim 9, wherein the coupling optical system is a collimator optical system, and

wherein when the first light flux having a divergent angle enters onto the collimator optical system, the collimator optical system emits a light flux parallel to an optical axis.

**16.** The optical pick-up system of claim 1, wherein the objective optical system has a first plastic lens and a second plastic lens which are arranged in that order from the first light source side,

wherein a diffractive structure is formed on at least one of optical surfaces of the first plastic lens,

wherein the diffractive structure diffracts at least one of the first light flux and the second light flux, and

wherein a ratio of a paraxial refractive power $P_1$ ($mm^{-1}$) of the first plastic lens for the wavelength of the first light flux and a paraxial refractive power $P_2$ ($mm^{-1}$) of the second plastic lens for the wavelength of the first light flux satisfy the following expression (3).

$$|P_1/P_2| \leq 0.2 \qquad (3)$$

**17.** The optical pick-up system of claim 16, wherein when the optical pick-up system records or reproduces information onto or from the first optical disk, an image side numerical aperture $NA_1$ of the objective optical system, a thickness $d_{L2}$ of the second plastic lens in an optical axis, and a paraxial refractive power $P_{L2}$ ($mm^{-1}$) of the second plastic lens for the wavelength of the first light flux satisfy the following expressions (4) and (5).

$$NA_1 > 0.8 \qquad (4)$$

$$0.9 < d_{L2} \cdot P_{L2} < 1.3 \qquad (5)$$

**18.** The optical pick-up system of claim 17, wherein when the optical pick-up system records or reproduces information onto or from the first optical disk, the total sum $\sum(Pi \cdot h_i^2)$ of the product of an image side numerical aperture $NA_i$ of the objective optical system, a paraxial refractive power $P_{L2}$ ($mm^{-1}$) of the second plastic lens for the wavelength of the first light flux, a magnification $m_{L2}$ of the second plastic lens for the wavelength of the first light flux, the wavelength $\lambda_1$ (mm) of the first light flux, a ratio $\Delta SA/\Delta T$ of a change of a spherical aberration to a temperature change of the objective optical system, and a total sum $\sum(Pi \cdot h_i^2)$ of a product of a paraxial refractive power $P_i$ of the plastic lens of the aberration correction optical system for the wavelength of the first light flux and a square of a height $h_i$ where a marginal ray passes, satisfy the following expression (6).

$$0.5 \times 10^{-6} < k/\sum(P_i \cdot h_i^2) < 5.5 \times 10^{-6} \qquad (6)$$

where

$$k = (\Delta SA/\Delta T) \cdot \lambda_1 \cdot P_{L2}/(NA_1 \cdot (1 - m_{L2}))^4$$

**19.** The optical pick-up system of claim 18, wherein the following expression (6') is satisfied.

$$1.1 \times 10^{-6} < k/\sum(P_i \cdot h_i^2) < 3.3 \times 10^{-6} \qquad (6')$$

**20.** The optical pick-up system of claim 17, further comprising a third light source for projecting a third light flux having a wavelength within a range of 750 nm to 800 nm.

**21.** The optical pick-up system of claim 20, wherein the aberration correction optical system is arranged in a common optical path of the first light flux, second light flux and third light flux.

**22.** The optical pick-up system of claim 20, wherein the first light source, the second light source and the third light source are a packaged light source unit.

**23.** The optical pick-up system of claim 20, further comprising a beam combiner arranged in an optical path between the aberration correction optical system and the objective optical system,

wherein the beam combiner leads an optical path of the first light flux, an optical path of the second light flux and an optical path of the third light flux into a common optical path.

**24.** The optical pick-up system of claim 3, wherein the first light source and the second light source are a packaged light source unit.

**25.** The optical pick-up system of claim 10, wherein the first light source and the second light source are a packaged light source unit.

**26.** An optical pick-up device comprising:

the optical pick-up system of claim 1; and
a light detector for detecting a reflected light flux of the first light flux from an information recording surface of the first optical disk.

**27.** The optical pick-up device of claim 26, wherein the reflected light flux reflected on the information recording surface of the first optical disk is incident on the light detector after the reflected light flux passes through the objective optical system and all of plastic lenses in the aberration correction optical system.

**28.** The optical pick-up device of claim 26, further comprising an actuator for driving at least one lens in the aberration correction optical system in an optical axis direction,

wherein a position of the object point of the objective optical system for the first light flux is changeably adjusted in the optical axis direction by driving the at least one lens in the aberration correction optical system in the optical axis direction with the actuator.

**29.** An optical information recording and/or reproducing apparatus comprising the optical pick-up device of claim 26, and a disk holder.

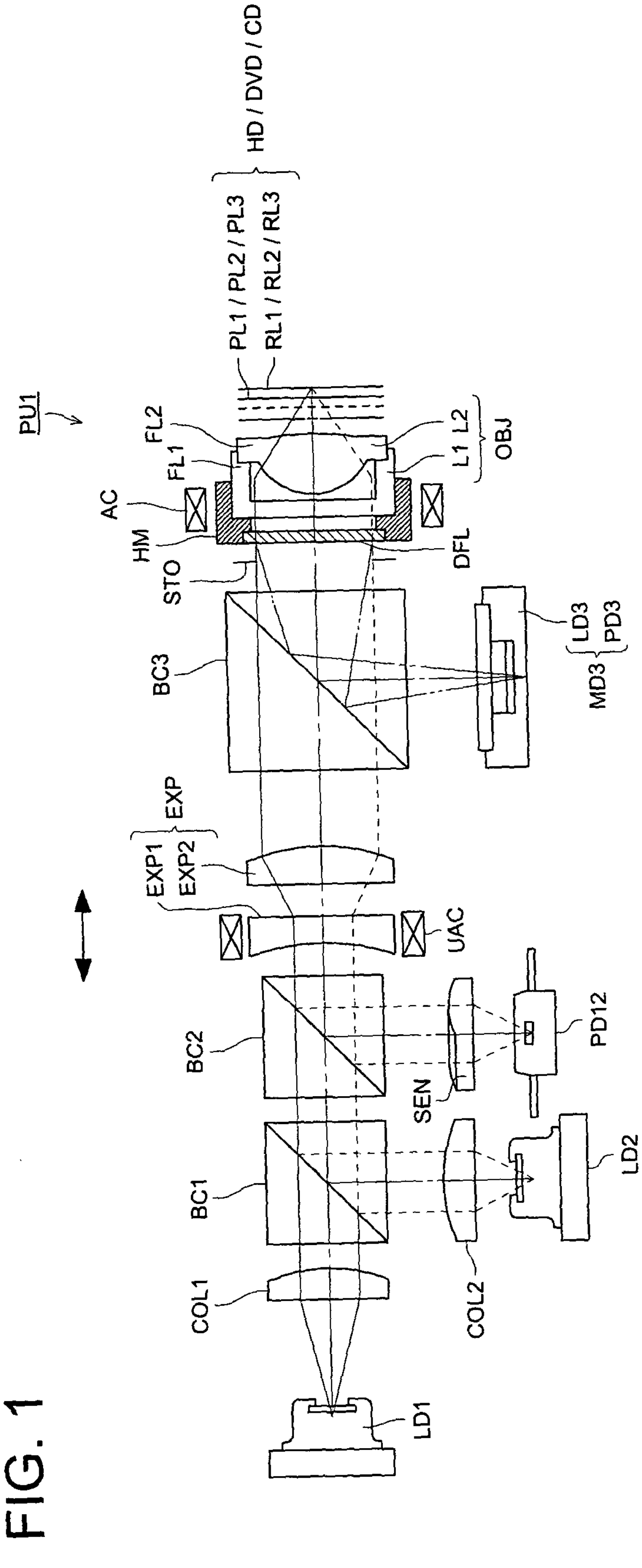
PU1
HD / DVD / CD
PL1 / PL2 / PL3
RL1 / RL2 / RL3
FL2
FL1
AC
HM
STO
L1 L2
OBJ
DFL
BC3
LD3
PD3
MD3
EXP1
EXP2
EXP
UAC
BC2
SEN
PD12
BC1
LD2
COL1
COL2
LD1

FIG. 1

FIG. 2 (a) FIG. 2 (b) FIG. 2 (c)

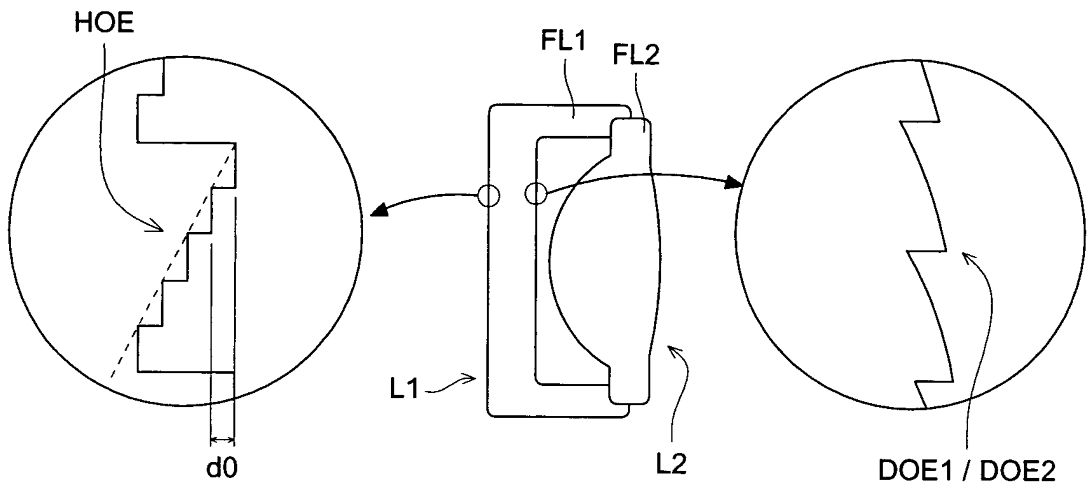

FIG. 3 (a) FIG. 3 (b) FIG. 3 (c)

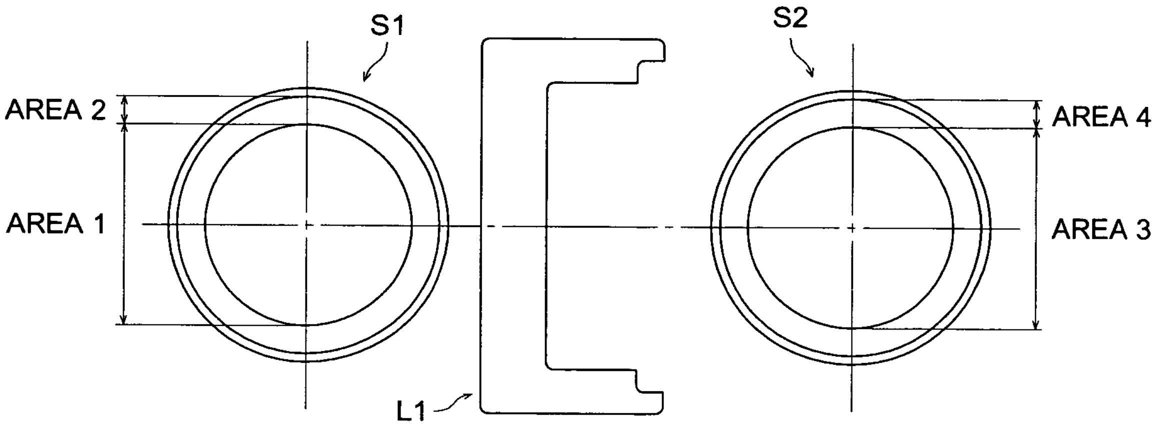

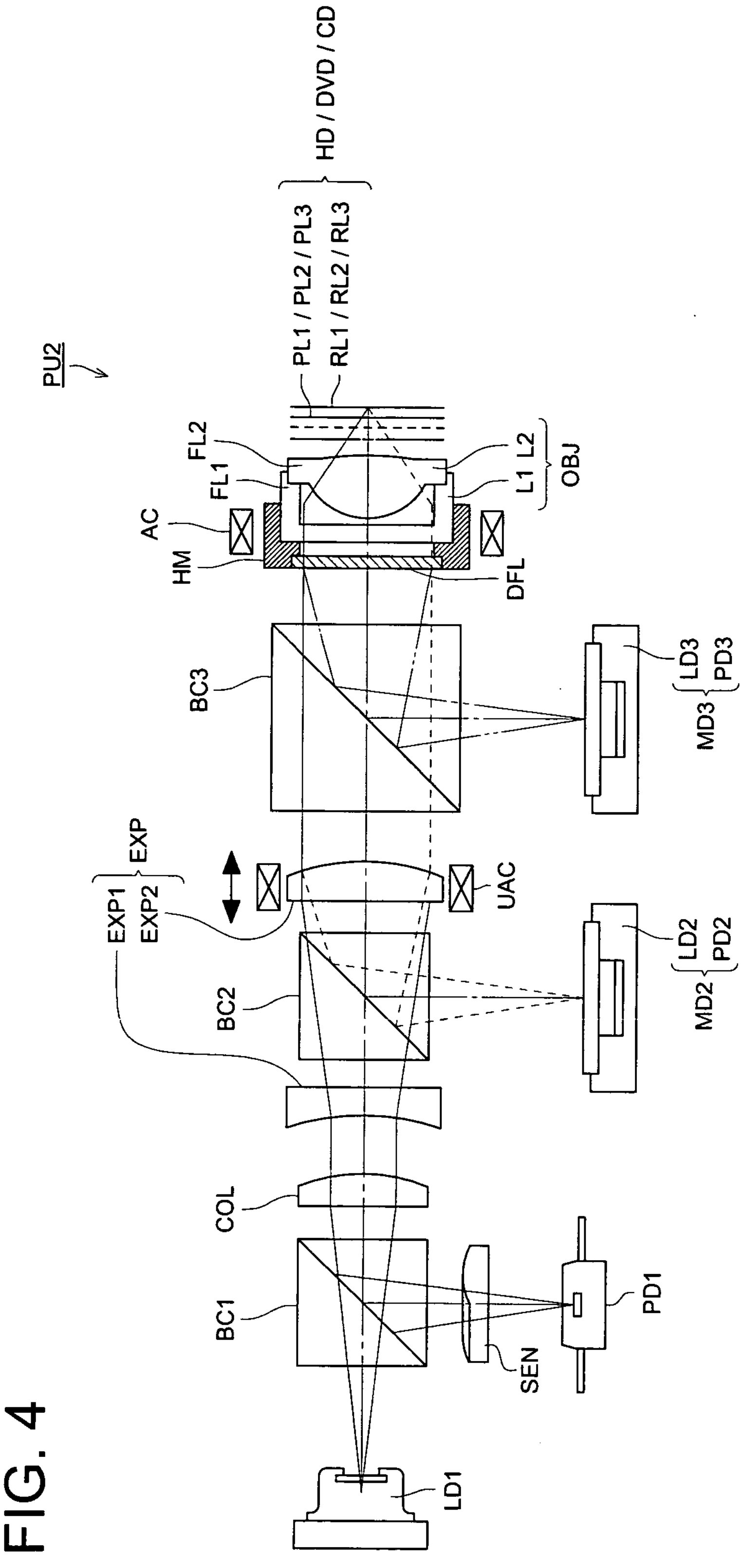
PU2
HD / DVD / CD
PL1 / PL2 / PL3
RL1 / RL2 / RL3
FL2
FL1
AC
HM
L1 L2
OBJ
DFL
BC3
LD3
PD3
MD3
EXP1
EXP2
EXP
UAC
BC2
LD2
PD2
MD2
COL
BC1
SEN
PD1
LD1

FIG. 4

FIG. 5

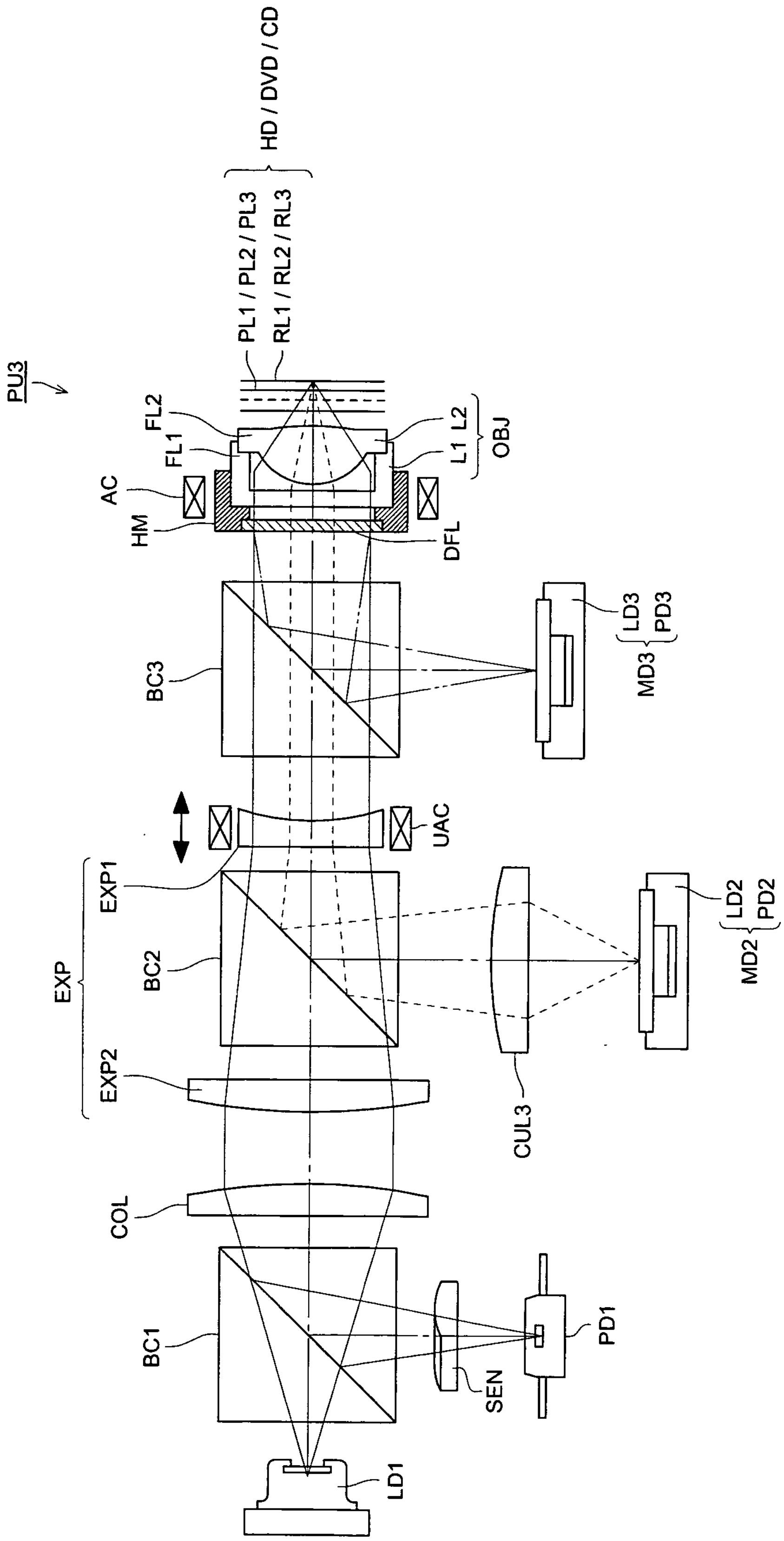
PU3
HD / DVD / CD
PL1 / PL2 / PL3
RL1 / RL2 / RL3
FL2
FL1
L1
L2
OBJ
AC
HM
DFL
BC3
LD3
PD3
MD3
UAC
EXP1
EXP
BC2
EXP2
LD2
PD2
MD2
CUL3
COL
BC1
SEN
PD1
LD1

FIG. 6

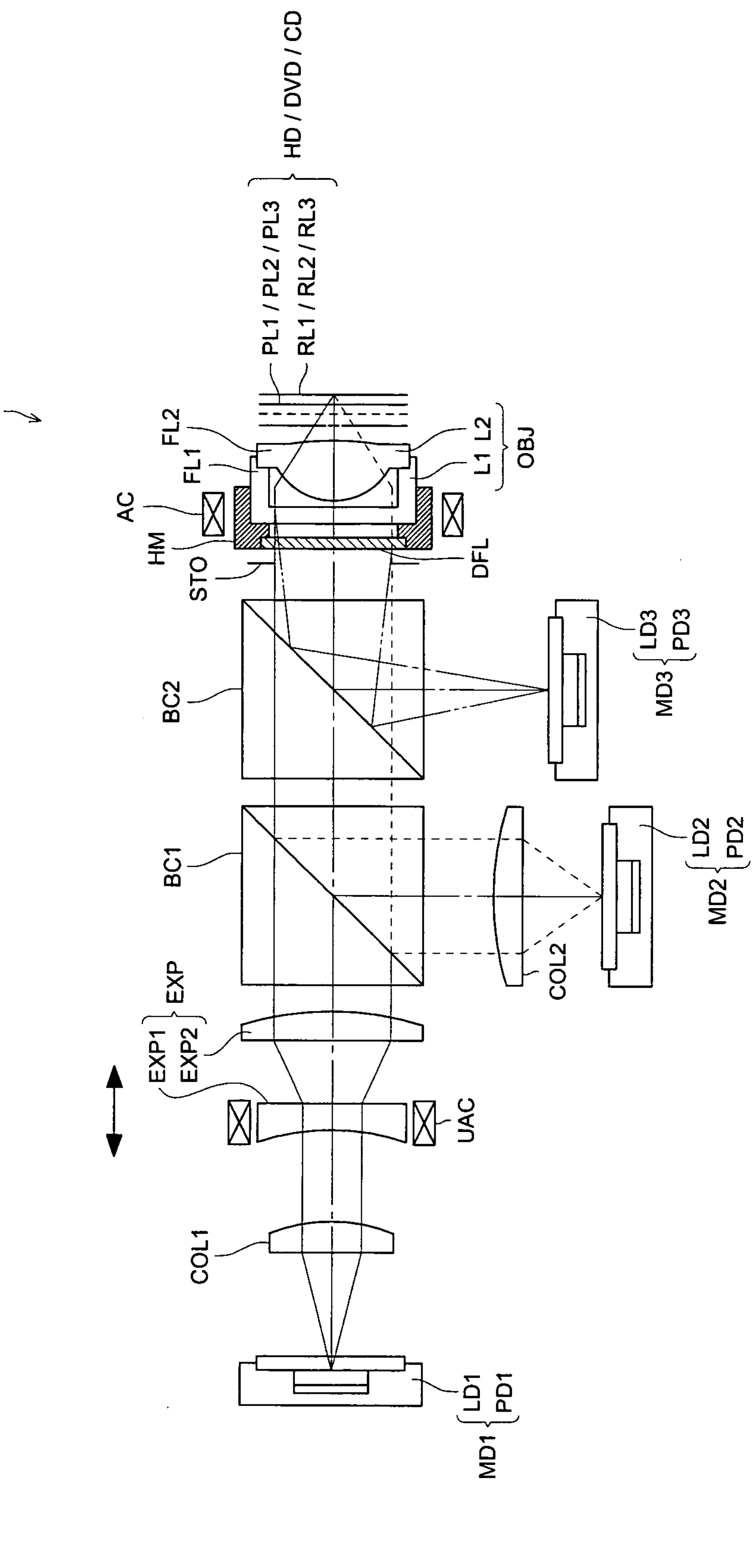
PU4
HD / DVD / CD
PL1 / PL2 / PL3
RL1 / RL2 / RL3
FL2
FL1
L1 L2
OBJ
AC
HM
STO
DFL
BC2
LD3
PD3
MD3
BC1
LD2
PD2
MD2
COL2
EXP
EXP1
EXP2
UAC
COL1
LD1
PD1
MD1

FIG. 7

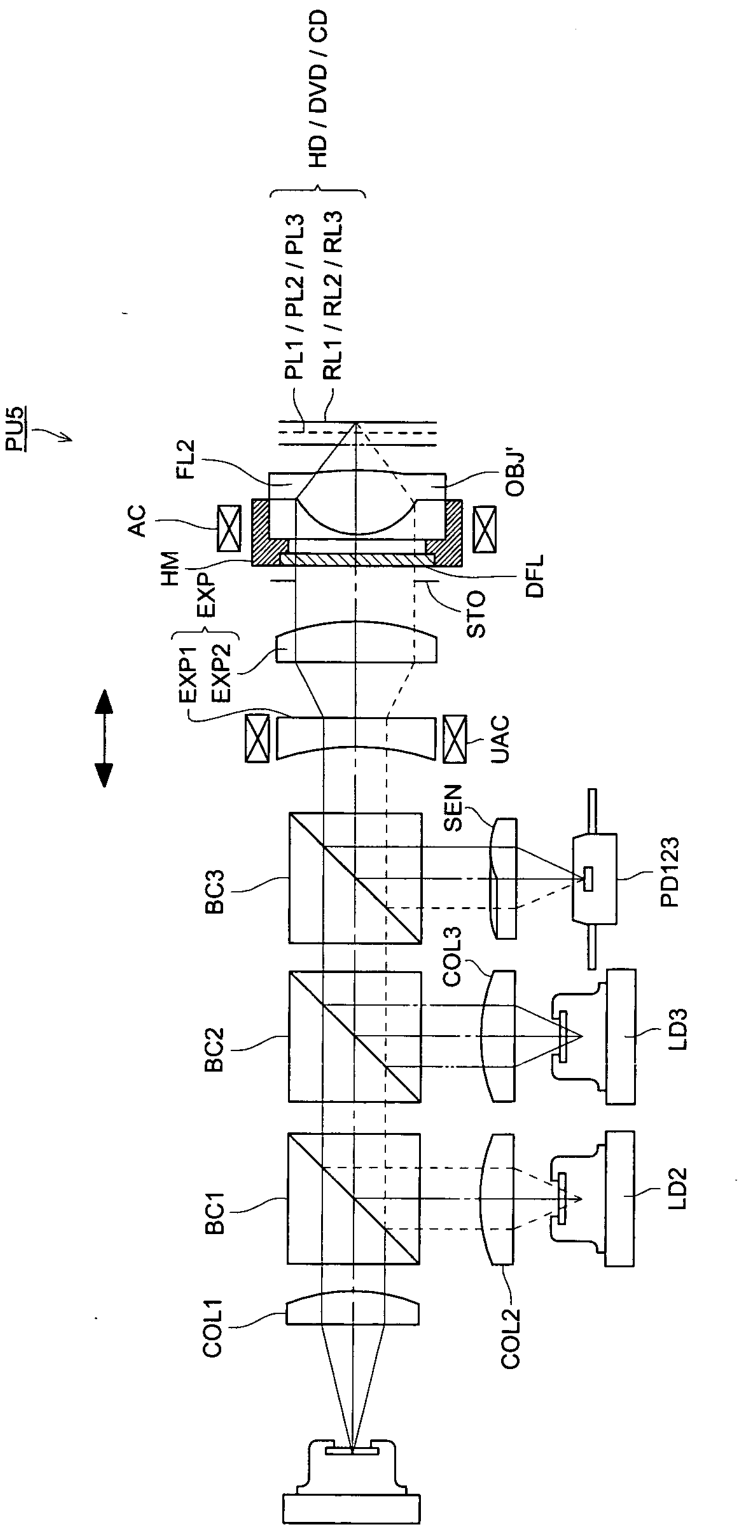
PU5
HD / DVD / CD
PL1 / PL2 / PL3
RL1 / RL2 / RL3
FL2
OBJ'
AC
HM
DFL
EXP
STO
EXP1
EXP2
UAC
SEN
PD123
BC3
COL3
BC2
LD3
BC1
LD2
COL1
COL2

FIG. 8

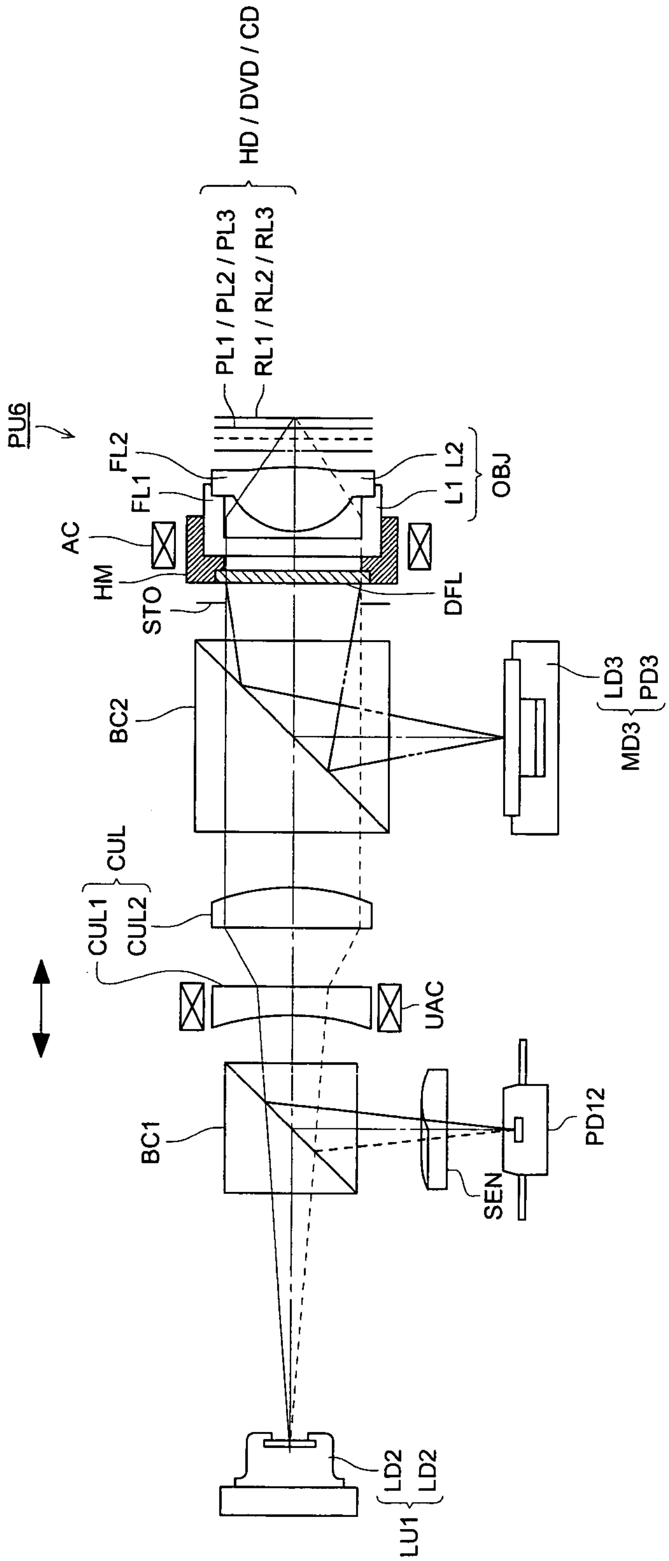
HD / DVD / CD
PL1 / PL2 / PL3
RL1 / RL2 / RL3
PU6
FL2
FL1
AC
HM
STO
L1 L2
OBJ
DFL
BC2
LD3
PD3
MD3
CUL
CUL1
CUL2
UAC
BC1
SEN
PD12
LD2
LD2
LU1

FIG. 9

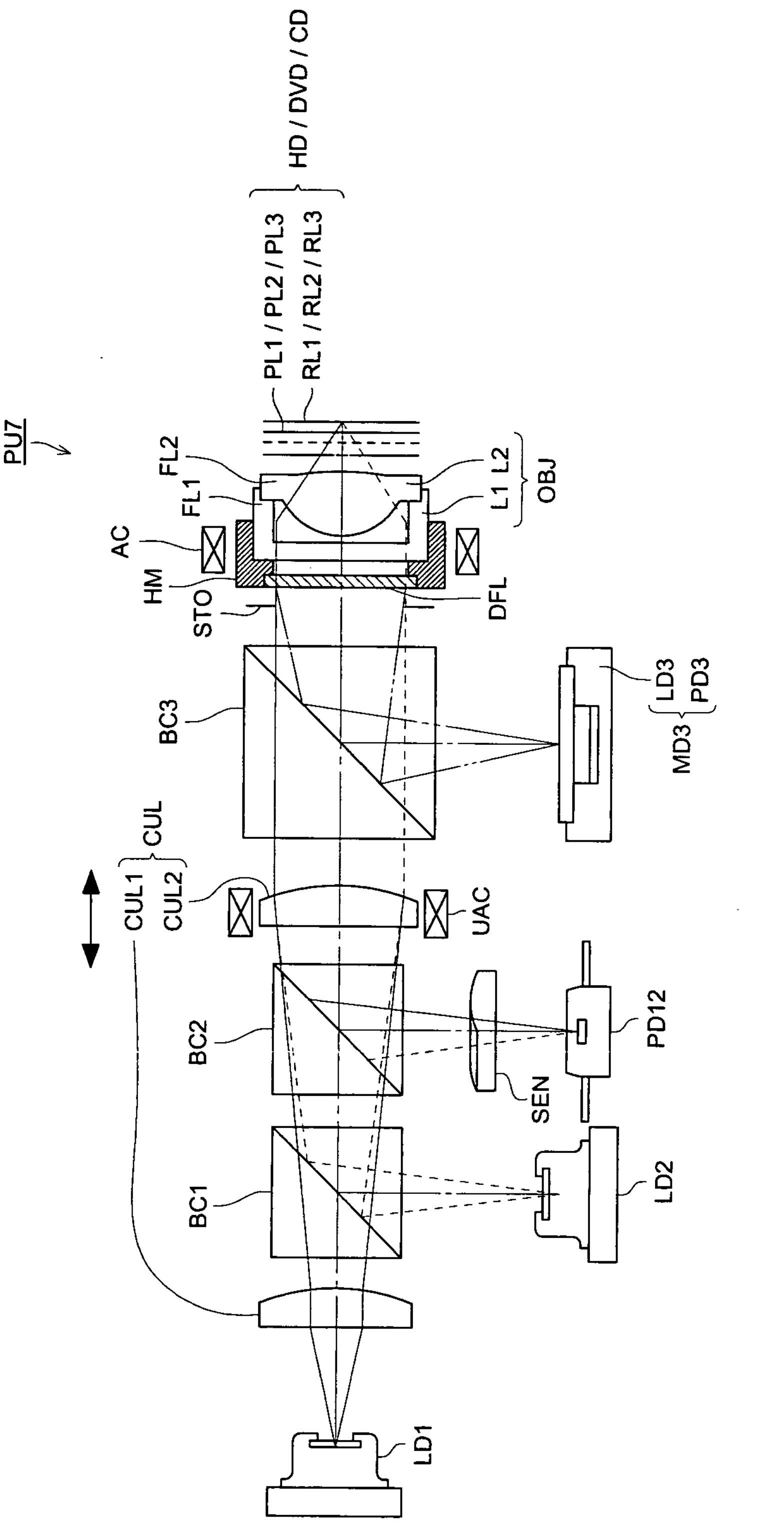

PU7
AC
HM
STO
FL1
FL2
PL1 / PL2 / PL3
RL1 / RL2 / RL3
HD / DVD / CD
L1 L2
OBJ
DFL
BC3
LD3
PD3
MD3
CUL1
CUL2
CUL
UAC
BC2
PD12
SEN
BC1
LD2
LD1

FIG. 10

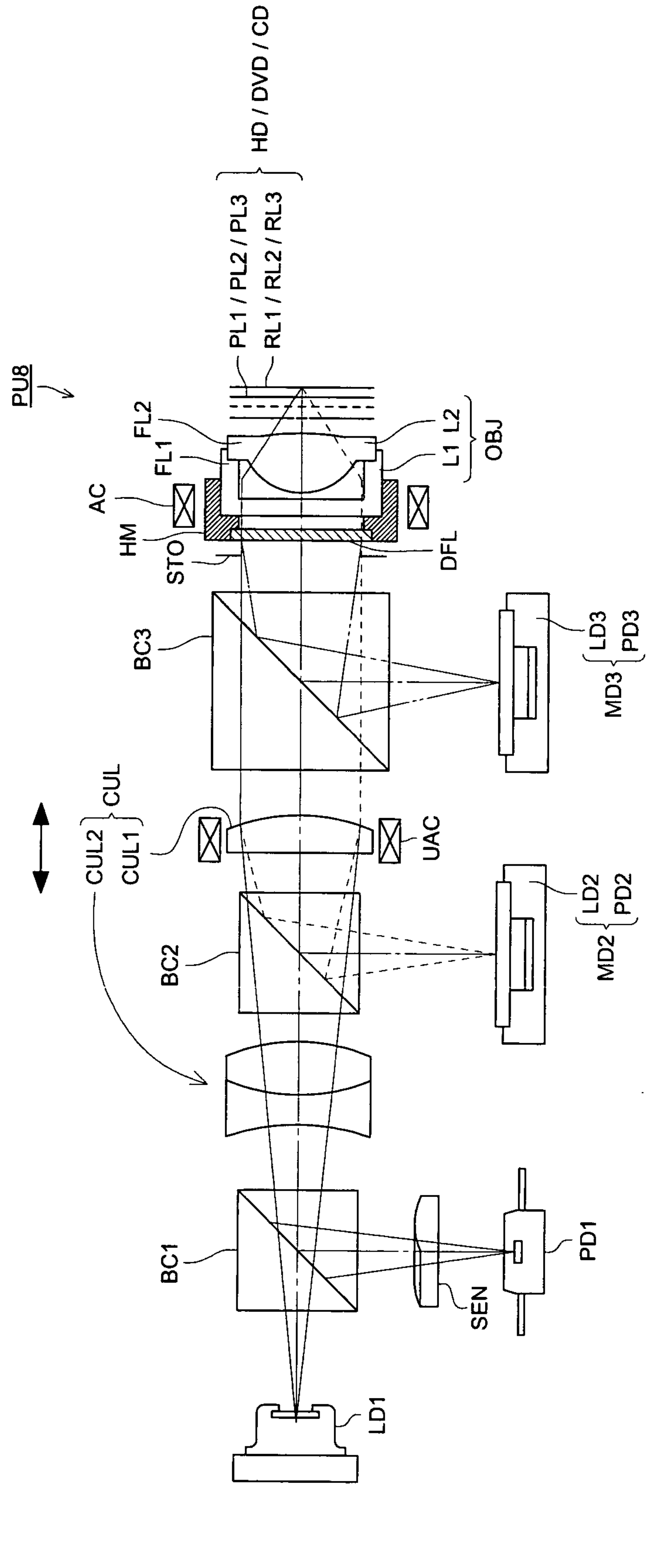

PU8
HD / DVD / CD
PL1 / PL2 / PL3
RL1 / RL2 / RL3
FL2
FL1
AC
HM
STO
L1 L2
OBJ
DFL
BC3
LD3
PD3
MD3
CUL2
CUL1
CUL
UAC
BC2
LD2
PD2
MD2
BC1
SEN
PD1
LD1

FIG. 11

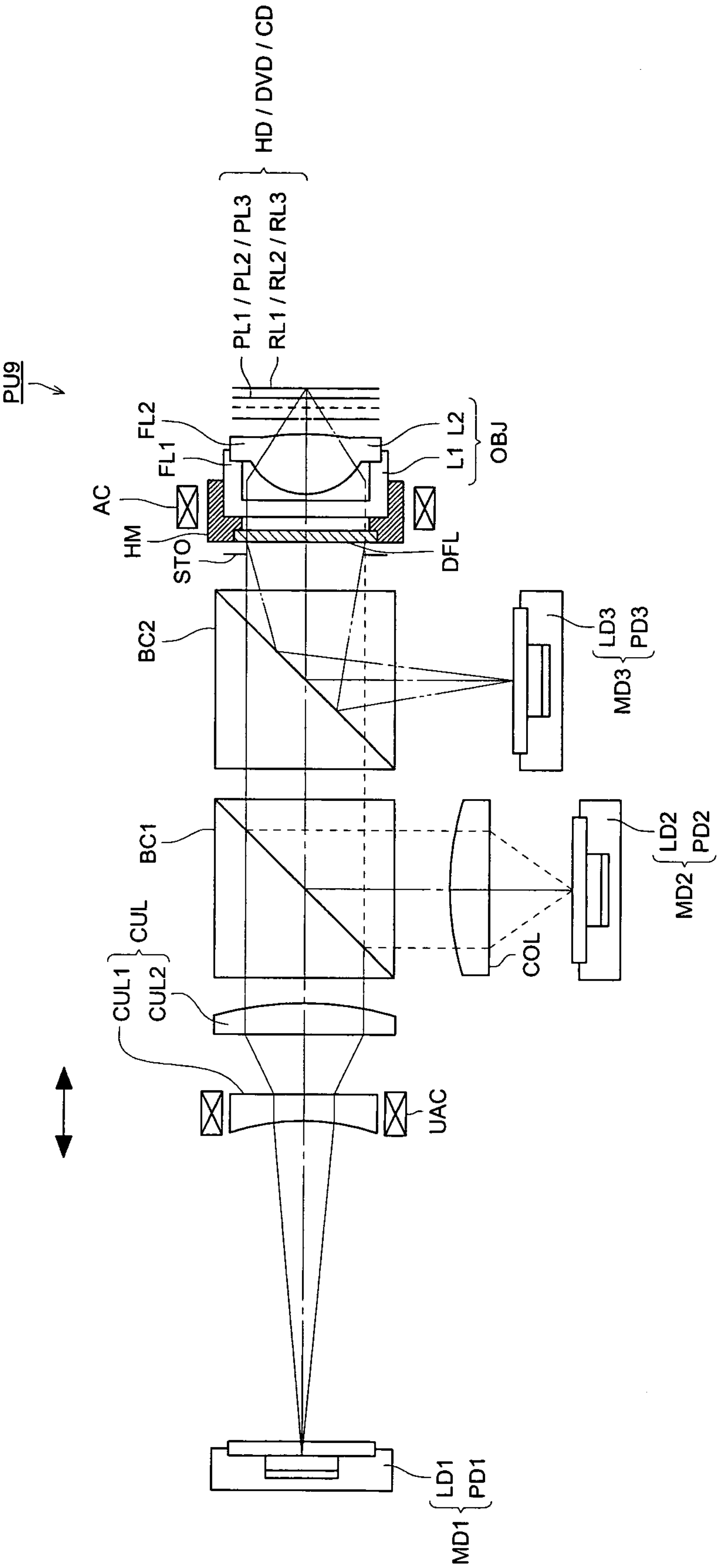
PU9
HD / DVD / CD
PL1 / PL2 / PL3
RL1 / RL2 / RL3
FL2
FL1
AC
HM
STO
DFL
L1 L2
OBJ
BC2
LD3
PD3
MD3
BC1
LD2
PD2
MD2
CUL1
CUL2
CUL
COL
UAC
LD1
PD1
MD1

FIG. 12

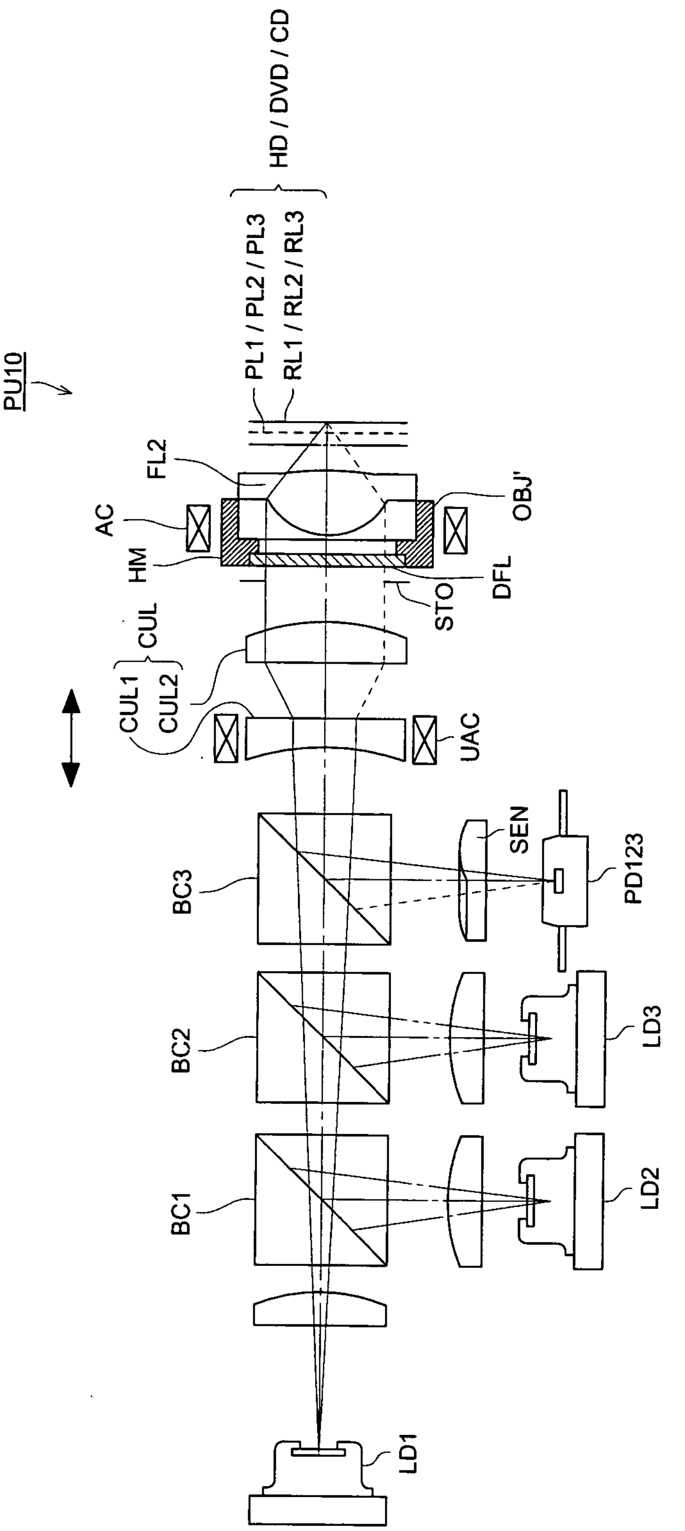
PU10
HD / DVD / CD
PL1 / PL2 / PL3
RL1 / RL2 / RL3
FL2
AC
HM
OBJ'
DFL
STO
CUL
CUL1
CUL2
UAC
BC3
BC2
BC1
SEN
PD123
LD3
LD2
LD1

FIG. 13

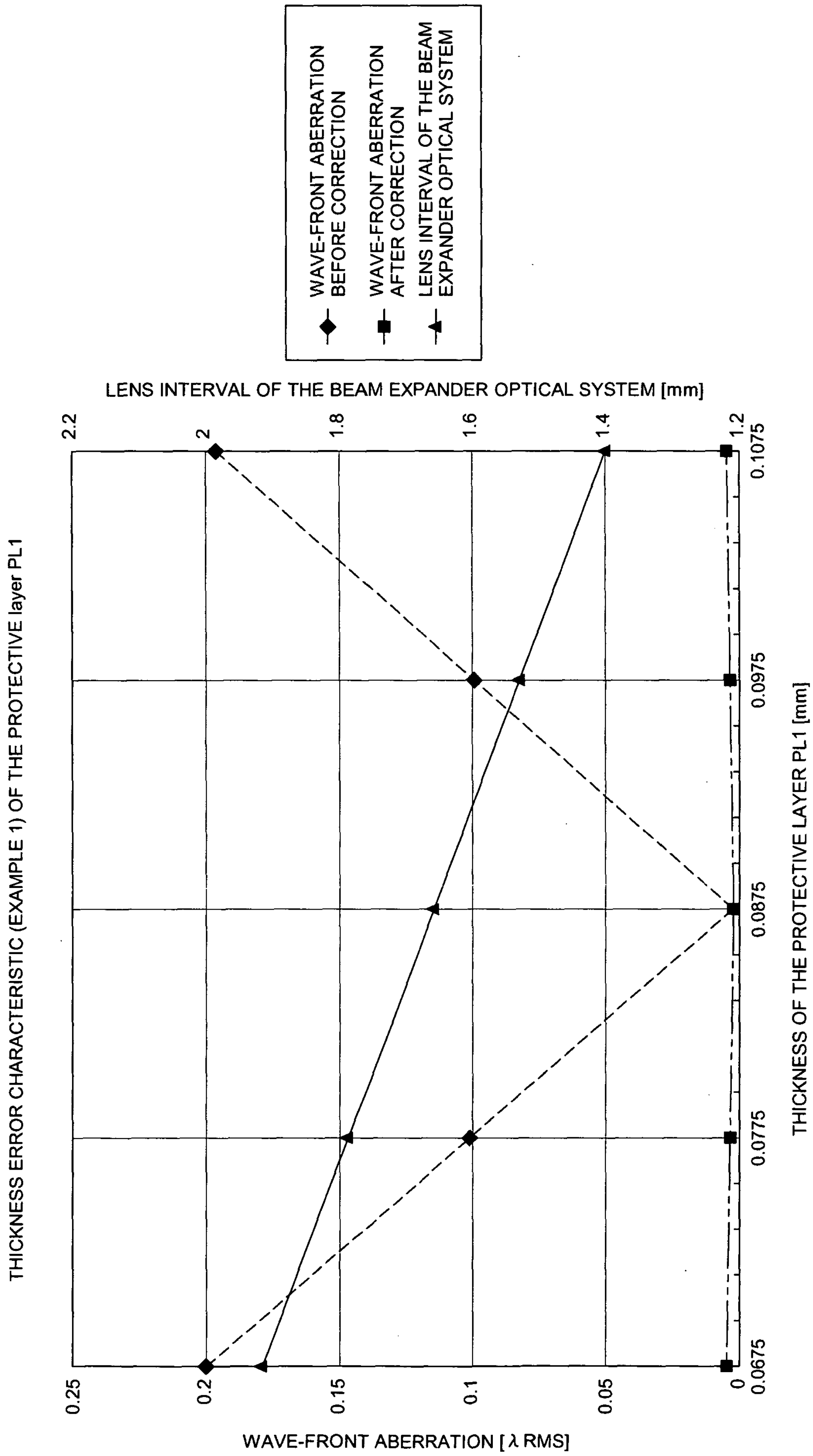
THICKNESS ERROR CHARACTERISTIC (EXAMPLE 1) OF THE PROTECTIVE layer PL1
WAVE-FRONT ABERRATION BEFORE CORRECTION
WAVE-FRONT ABERRATION AFTER CORRECTION
LENS INTERVAL OF THE BEAM EXPANDER OPTICAL SYSTEM
LENS INTERVAL OF THE BEAM EXPANDER OPTICAL SYSTEM [mm]
2.2
2
1.8
1.6
1.4
1.2
0.25
0.2
0.15
0.1
0.05
0
0.0675
0.0775
0.0875
0.0975
0.1075
WAVE-FRONT ABERRATION [λ RMS]
THICKNESS OF THE PROTECTIVE LAYER PL1 [mm]

FIG. 14

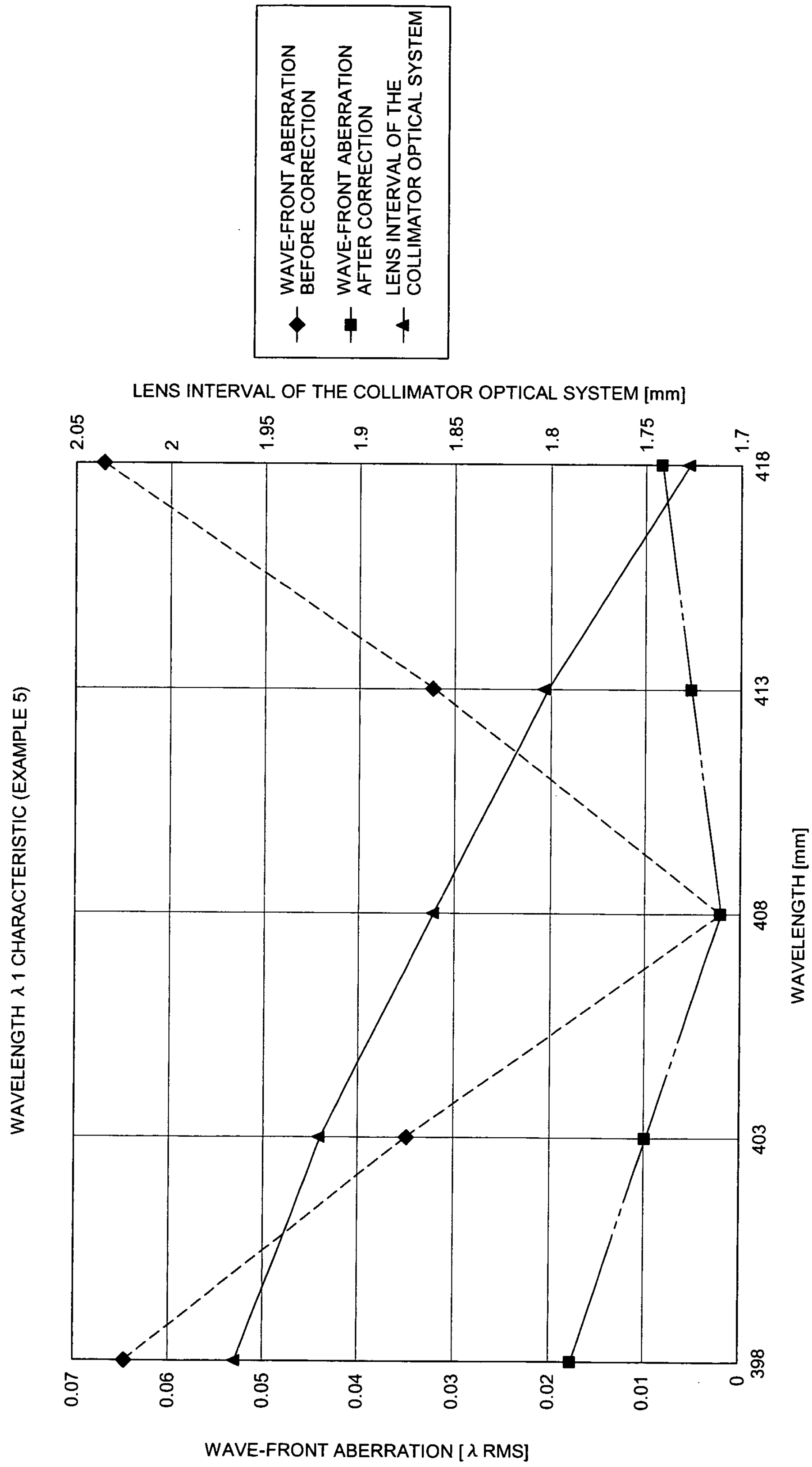
WAVELENGTH λ 1 CHARACTERISTIC (EXAMPLE 5)
WAVE-FRONT ABERRATION BEFORE CORRECTION
WAVE-FRONT ABERRATION AFTER CORRECTION
LENS INTERVAL OF THE COLLIMATOR OPTICAL SYSTEM
LENS INTERVAL OF THE COLLIMATOR OPTICAL SYSTEM [mm]
2.05
2
1.95
1.9
1.85
1.8
1.75
1.7
0.07
0.06
0.05
0.04
0.03
0.02
0.01
0
398
403
408
413
418
WAVELENGTH [mm]
WAVE-FRONT ABERRATION [λ RMS]

FIG. 15

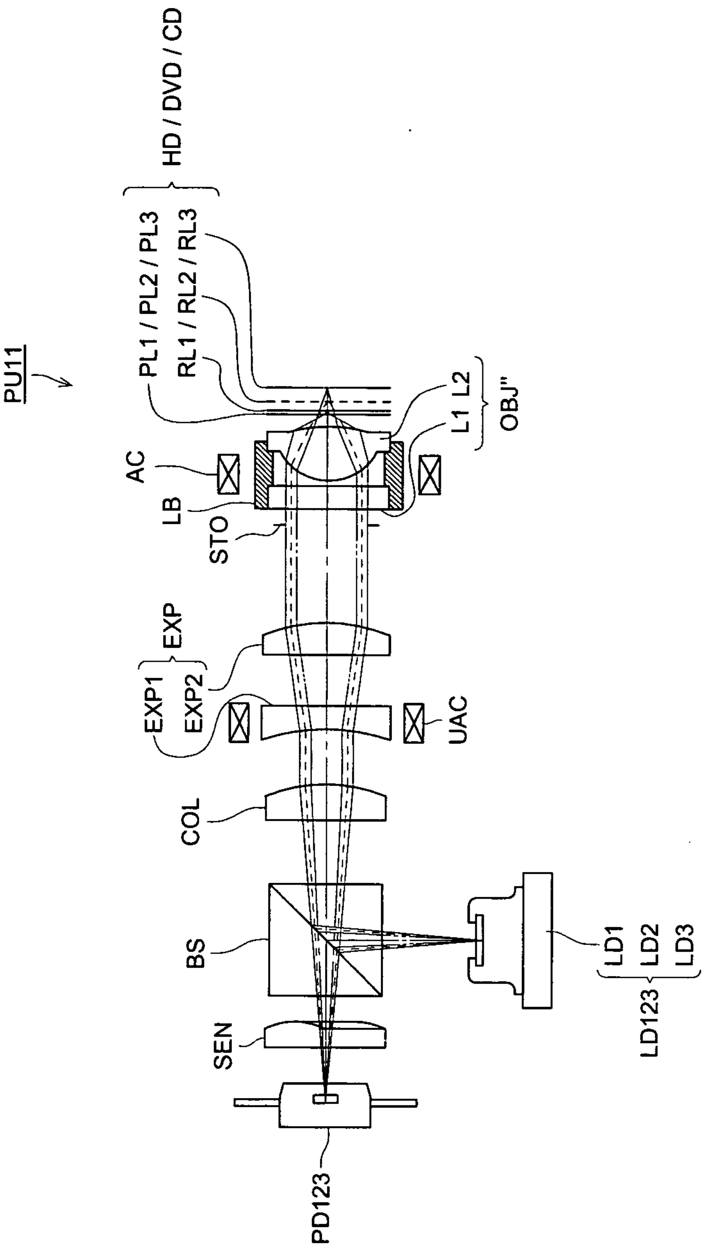

PU11
HD / DVD / CD
PL1 / PL2 / PL3
RL1 / RL2 / RL3
AC
LB
STO
L1 L2
OBJ"
EXP1
EXP2
EXP
UAC
COL
BS
SEN
PD123
LD1
LD2
LD3
LD123

FIG. 16